# EUROPEAN PATENT APPLICATION

(11) **EP 4 561 232 A1**
(43) Date of publication of application: **28.05.2025**
(21) Application number: 23851987.0
(22) Date of filing: 11.08.2023
(51) Int. Cl.: H04W 72/04

(54) **UPLINK TRANSMISSION METHOD AND RELATED APPARATUS**

(30) Priority: 12.08.2022 CN 202210970164
(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN); LI, Fang, Shenzhen, Guangdong 518129 (CN)
(74) Representative: Körber, Martin Hans
(86) International application number: PCT/CN2023/112543
(87) International publication number: WO 2024/032767

(57) **Abstract**

Embodiments of this application disclose an uplink transmission method and a related apparatus, so that a terminal device correctly performs uplink transmission on a first resource by using a corresponding transmission configuration indicator (TCI) state. This implements correct transmission between the terminal device and a network device, and improves communication transmission performance. The method in embodiments of this application includes: A terminal device receives first information from a network device, where the first information indicates one or more transmission parameters of a first resource; and the terminal device performs, based on the first information, uplink transmission on the first resource by using a corresponding TCI state.

## Description

This application claims priority to Chinese Patent Application No. 202210970164.1, filed with the China National Intellectual Property Administration on August 12, 2022 and entitled "UPLINK TRANSMISSION METHOD AND RELATED APPARATUS", which is incorporated herein by reference in its entirety.

### TECHNICAL FIELD

This application relates to the field of communication technologies, and in particular, to an uplink transmission method and a related apparatus.

### BACKGROUND

In a 5th generation (5th generation, 5G) mobile communication system, high-frequency communication may be used, that is, data is transmitted by using a super high frequency band (>6 GHz) signal. A main problem of the high-frequency communication is that energy of a signal sharply decreases as a transmission distance increases, resulting in a short transmission distance of the signal. To resolve this problem, an analog beam technology is used in the high-frequency communication. Weighted processing is performed on an antenna array, the signal energy is concentrated in a small angle range, to form a signal similar to a light beam (referred to as an analog beam, a beam for short), so that the transmission distance is extended.

A network device may indicate one or more beams to a terminal device, and communication transmission may be performed between the network device and the terminal device by using the one or more beams. The network device may configure or activate a resource for the terminal device, such as a configured grant (configured grant, CG) resource or a dynamic grant (dynamic grant, DG) resource. The terminal device may perform communication transmission on the resource by using a beam. However, how the terminal device correctly performs communication transmission on the resource by using a corresponding beam to implement correct transmission between the terminal device and the network device is a problem worthy of consideration.

### SUMMARY

This application provides an uplink transmission method and a related apparatus, so that a terminal device correctly performs uplink transmission on a first resource by using a corresponding TCI state. This implements correct transmission between the terminal device and a network device, and improves communication transmission performance.

A first aspect of this application provides an uplink transmission method, including:
A terminal device receives first information from a network device, where the first information indicates one or more transmission parameters of a first resource. Then, the terminal device performs, based on the first information, uplink transmission on the first resource by using a corresponding transmission configuration indicator (transmission configuration indicator, TCI) state.

In the foregoing technical solution, the terminal device receives the first information from the network device. The first information indicates the one or more transmission parameters of the first resource. The terminal device may perform, based on the first information, uplink transmission on the first resource by using the corresponding TCI state. The TCI state corresponds to a beam. Therefore, the terminal device correctly performs uplink transmission on the first resource by using the corresponding beam, thereby facilitating correct transmission between the terminal device and the network device. Communication transmission performance is improved.

Based on the first aspect, in a possible implementation, the first information indicates two transmission parameters. That the terminal device performs, based on the first information, uplink transmission on the first resource by using a corresponding TCI state includes:
The terminal device performs uplink transmission in a first transmission cycle of the first resource by using a first TCI state, and performs uplink transmission in a second transmission cycle of the first resource by using a second TCI state.

The first transmission cycle is a transmission cycle corresponding to the 1^{st} transmission parameter in the two transmission parameters on the first resource, and the second transmission cycle is a transmission cycle corresponding to the 2^{nd} transmission parameter in the two transmission parameters on the first resource.

In this implementation, the terminal device may determine the first transmission cycle and the second transmission cycle based on the two transmission parameters indicated by the first information, and separately perform uplink transmission in the first transmission cycle and the second transmission cycle by using corresponding TCI states. The first TCI state and the second TCI state may be indicated by the network device to the terminal device. The first TCI state corresponds to a first beam, and the second TCI state corresponds to a second beam. The first beam corresponds to a first transmission reception point (transmission reception point, TRP), and the second beam corresponds to a second TRP. In this way, the terminal device performs uplink transmission with the first TRP and the second TRP in a time division multiplexing manner. This avoids impact on communication transmission performance caused by channel quality fluctuation between the terminal device and one of the TRPs. In addition, data transmitted between the terminal device and the first TRP is the same as data that may be transmitted between the terminal device and the second TRP. An encoding redundancy version for the data transmitted between the terminal device and the first TRP may be different from an encoding redundancy version for the data transmitted between the terminal device and the second TRP. Therefore, on a network side, joint decoding may be performed on data received by the first TRP and data received by the second TRP, to obtain a gain brought by combined decoding.

Based on the first aspect, in a possible implementation, the method further includes:
The terminal device receives second information from the network device, where the second information is used for one TCI state; and the terminal device performs uplink transmission at the start of a next transmission cycle of a current transmission cycle of the first resource by using the TCI state indicated by first indication information.

In this implementation, if the network device updates a TCI state, the terminal device needs to perform uplink transmission at the start of the next transmission cycle of the current transmission cycle of the first resource by using a TCI state indicated by the second information. Therefore, the terminal device performs uplink transmission in a timely manner by using a beam corresponding to the TCI state that is newly indicated by the network device. This facilitates correct transmission between the terminal device and the network device. The beam corresponding to the TCI state newly indicated by the network device is usually more adaptive to a channel state between the terminal device and the network device. Therefore, the foregoing solution helps improve communication transmission performance.

Based on the first aspect, in a possible implementation, that the terminal device performs, based on the first information, uplink transmission on the first resource by using a corresponding TCI state includes:
If the first information indicates one transmission parameter, and the first information does not include first identification information, the terminal device performs uplink transmission on the first resource by using a first TCI state; or
if the first information indicates one transmission parameter, and the first information includes first identification information, the terminal device performs uplink transmission on the first resource by using a second TCI state.

In this implementation, if the first information indicates one transmission parameter, it indicates that the network device indicates the terminal device to perform uplink transmission via a single TRP. The foregoing specifies the TCI state used by the terminal device to perform uplink transmission on the first resource when the first information indicates one transmission parameter. Therefore, correct transmission between the terminal device and the network device is facilitated, and communication transmission performance is improved.

Based on the first aspect, in a possible implementation, that the terminal device performs, based on the first information, uplink transmission on the first resource by using a corresponding TCI state includes:
If the first information indicates one transmission parameter, the terminal device performs uplink transmission by using a TCI state that corresponds to a sounding reference signal resource set (SRS resource set) associated with the transmission parameter and that is in at least one TCI state indicated by the network device to the terminal device.

In this implementation, if the first information indicates one transmission parameter, it indicates that the network device indicates the terminal device to perform uplink transmission via a single TRP. The foregoing specifies the TCI state used by the terminal device to perform uplink transmission on the first resource when the first information indicates one transmission parameter. Therefore, correct transmission between the terminal device and the network device is facilitated, and communication transmission performance is improved.

Based on the first aspect, in a possible implementation, the first information indicates one transmission parameter. That the terminal device performs, based on the first information, uplink transmission on the first resource by using a corresponding TCI state includes:
If the transmission parameter includes a control resource set pool index, the terminal device performs uplink transmission by using a TCI state corresponding to the control resource set pool index; or
if the transmission parameter does not include a control resource set pool index, the terminal device performs uplink transmission on the first resource by using the 1^{st} TCI state indicated by the network device to the terminal device.

In this implementation, if the first information indicates one transmission parameter, it indicates that the network device indicates the terminal device to perform uplink transmission via a single TRP. The foregoing specifies the TCI state used by the terminal device to perform uplink transmission on the first resource when the first information indicates one transmission parameter. In other words, the terminal device is indicated, depending on whether the transmission parameter carries the control resource set pool index, to select a corresponding TCI state to perform uplink transmission on the first resource. Therefore, correct transmission between the terminal device and the network device is facilitated, and communication transmission performance is improved.

Based on the first aspect, in a possible implementation, any one of the following power control parameters is used when the terminal device performs uplink transmission on the first resource: a power control parameter associated with a beam used when the terminal device performs uplink transmission on the first resource, a power control parameter associated with the first resource, or a preconfigured power control parameter.

In this implementation, the power control parameter used by the terminal device to perform uplink transmission on the first resource is specified. In this way, the terminal device performs uplink transmission on the first resource by using an appropriate transmit power. This ensures that strength of a signal received by the network device is greater than a specific threshold. In this way, the network device receives and parses a data signal sent by the terminal device.

Based on the first aspect, in a possible implementation, if the terminal device uses two beams to perform uplink transmission on the first resource, the terminal device performs uplink transmission on the first resource by using preconfigured power control parameters separately associated with the two beams.

In this implementation, when the terminal device performs uplink transmission on the first resource by using two beams, power control parameters used by the terminal device on the two beams are specified. In this way, the terminal device performs uplink transmission on the first resource by using an appropriate transmit power. This ensures that strength of a signal received by the network device is greater than a specific threshold. In this way, the network device receives and parses a data signal sent by the terminal device.

A second aspect of this application provides an uplink transmission method, including:
A network device determines first information, where the first information indicates one or more transmission parameters of a first resource. The one or more transmission parameters are used by the terminal device to perform uplink transmission on the first resource by using a corresponding TCI state. The network device sends the first information to the terminal device.

In the foregoing technical solution, the network device sends the first information to the terminal device. The first information indicates the one or more transmission parameters of the first resource. The one or more transmission parameters are used by the terminal device to perform uplink transmission on the first resource by using the corresponding TCI state, and the TCI state corresponds to a beam. Therefore, the terminal device correctly performs uplink transmission on the first resource by using the corresponding beam, thereby facilitating correct transmission between the terminal device and the network device. Communication transmission performance is improved.

Based on the second aspect, in a possible implementation, if the first information indicates two transmission parameters, it indicates that the network device indicates the terminal device to perform uplink transmission in a first transmission cycle of the first resource by using a first TCI state and perform uplink transmission in a second transmission cycle of the first resource by using a second TCI state. The first transmission cycle is a transmission cycle corresponding to the 1^{st} transmission parameter in the two transmission parameters on the first resource, and the second transmission cycle is a transmission cycle corresponding to the 2^{nd} transmission parameter in the two transmission parameters on the first resource.

In this implementation, a case in which the first information indicates two transmission parameters is shown, and the network device specifies transmission manners of the terminal device in the first transmission cycle and the second transmission cycle. This facilitates normal transmission between the network device and the terminal device.

Based on the second aspect, in a possible implementation, the method further includes:
The network device sends second information to the terminal device, where the second information is used for one TCI state.

In this implementation, the network device may update a TCI state for the terminal device based on the second information. A beam corresponding to a TCI state that is newly indicated by the network device is usually more adaptive to a channel state between the terminal device and the network device, so that the terminal device performs uplink transmission on the first resource by using the TCI state. This helps improve communication transmission performance.

Based on the second aspect, in a possible implementation, if the first information indicates one transmission parameter, and the first information does not include first identification information, it indicates that the network device indicates the terminal device to perform uplink transmission on the first resource by using a first TCI state; or
if the first information indicates one transmission parameter, and the first information does not include first identification information, it indicates that the network device indicates the terminal device to perform uplink transmission on the first resource by using a second TCI state.

In this implementation, if the first information indicates one transmission parameter, it indicates that the network device indicates the terminal device to perform uplink transmission via a single TRP. The foregoing specifies the TCI state used by the terminal device to perform uplink transmission on the first resource when the first information indicates one transmission parameter. Therefore, correct transmission between the terminal device and the network device is facilitated, and communication transmission performance is improved.

Based on the second aspect, in a possible implementation, if the first information indicates one transmission parameter, it indicates that the network device indicates the terminal device to perform uplink transmission on the first resource by using a TCI state that corresponds to a sounding reference signal resource set associated with the transmission parameter and that is in at least one TCI state indicated by the network device to the terminal device.

In this implementation, if the first information indicates one transmission parameter, it indicates that the network device indicates the terminal device to perform uplink transmission via a single TRP. The foregoing specifies the TCI state used by the terminal device to perform uplink transmission on the first resource when the first information indicates one transmission parameter. Therefore, correct transmission between the terminal device and the network device is facilitated, and communication transmission performance is improved.

Based on the second aspect, in a possible implementation, the first information indicates one transmission parameter. If the transmission parameter includes a control resource set pool index, it indicates that the network device indicates the terminal device to perform uplink transmission by using a TCI state corresponding to the control resource set pool index; or
if the transmission parameter does not include a control resource set pool index, it indicates that the network device indicates the terminal device to perform uplink transmission on the first resource by using the 1^{st} TCI state indicated by the network device to the terminal device.

In this implementation, if the first information indicates one transmission parameter, it indicates that the network device indicates the terminal device to perform uplink transmission via a single TRP. The foregoing specifies the TCI state used by the terminal device to perform uplink transmission on the first resource when the first information indicates one transmission parameter. Therefore, correct transmission between the terminal device and the network device is facilitated, and communication transmission performance is improved.

Based on the first aspect or the second aspect, in a possible implementation, the one or more transmission parameters are one or more sounding reference signal resource indicator (srs-resource indicator) parameters.

In this implementation, a specific form of the one or more transmission parameters is shown, and the one or more SRI parameters indicate whether the terminal device performs transmission on the first resource via a single TRP or a plurality of TRPs. For example, if there is only one SRI parameter, the terminal device performs uplink transmission on the first resource via a single TRP. If there are two SRI parameters, the terminal device performs uplink transmission on the first resource via a plurality of TRPs.

A third aspect of this application provides an uplink transmission method, including:
A terminal device receives downlink control information (downlink control indication, DCI) from a network device, where the DCI is for activating a first resource of the terminal device. If the network device indicates two TCI states to the terminal device, and the DCI is DCI in a first format, the terminal device performs uplink transmission on the first resource by using a TCI state indicated by a sounding reference signal resource index (sounding reference signal resource index, SRI) field in the DCI, where the TCI state indicated by the SRI field belongs to the two TCI states.

In the foregoing technical solution, the terminal device receives the DCI sent by the network device. If the network device indicates two TCI states to the terminal device, and the DCI is DCI in the first format, the terminal device may perform uplink transmission on the first resource by using the TCI state indicated by the SRI field in the DCI. The TCI corresponds to a beam. Therefore, the terminal device correctly performs uplink transmission on the first resource by using the corresponding beam, thereby facilitating correct transmission between the terminal device and the network device. Communication transmission performance is improved.

Based on the third aspect, in a possible implementation, that the terminal device performs uplink transmission on the first resource by using a TCI state indicated by an SRI field in the DCI includes:
If a value of the SRI field is 00, the terminal device performs uplink transmission on the first resource by using the 1^{st} TCI state indicated by the network device to the terminal device;
if a value of the SRI field is 01, the terminal device performs uplink transmission on the first resource by using the 2^{nd} TCI state indicated by the network device to the terminal device, or
if a value of the SRI field is 10 or 11, the terminal device performs uplink transmission on the first resource by using beams separately corresponding to the two TCI states.

In this implementation, indicated TCI states separately corresponding to some possible values of the SRI field are shown. In this way, the terminal device correctly performs uplink transmission on the first resource by using a corresponding TCI state. Therefore, normal transmission between the terminal device and the network device is facilitated, and communication transmission performance is improved.

Based on the third aspect, in a possible implementation, the method further includes:
If the network device indicates two TCI states to the terminal device, and the DCI is DCI in a second format, the terminal device performs uplink transmission on the first resource by using the 1^{st} TCI state indicated by the network device to the terminal device, or the terminal device performs uplink transmission on the first resource by using the two TCI states.

In this implementation, a TCI state used by the terminal device on the first resource is specified when the network device indicates two TCI states to the terminal device and the DCI is DCI in the second format. Therefore, correct transmission between the terminal device and the network device is facilitated, and communication transmission performance is improved.

Based on the third aspect, in a possible implementation, the method further includes:
If the network device indicates one TCI state to the terminal device, and the DCI is DCI in a first format, the terminal device ignores an SRI field in the DCI, and the terminal device performs uplink transmission on the first resource by using the TCI state.

In this implementation, a TCI state used by the terminal device on the first resource is specified when the network device indicates one TCI state to the terminal device. Therefore, correct transmission between the terminal device and the network device is facilitated, and communication transmission performance is improved.

Based on the third aspect, in a possible implementation, any one of the following power control parameters is used when the terminal device performs uplink transmission on the first resource: a power control parameter associated with a beam used when the terminal device performs uplink transmission on the first resource, a power control parameter associated with the first resource, or a preconfigured power control parameter.

In this implementation, the power control parameter used by the terminal device to perform uplink transmission on the first resource is specified. In this way, the terminal device performs uplink transmission on the first resource by using an appropriate transmit power. This ensures that strength of a signal received by the network device is greater than a specific threshold. In this way, the network device receives and parses a data signal sent by the terminal device.

Based on the third aspect, in a possible implementation, if the terminal device uses two beams to perform uplink transmission on the first resource, the terminal device performs uplink transmission on the first resource by using preconfigured power control parameters separately associated with the two beams.

In this implementation, when the terminal device performs uplink transmission on the first resource by using two beams, power control parameters used by the terminal device on the two beams are specified. In this way, the terminal device performs uplink transmission on the first resource by using an appropriate transmit power. This ensures that strength of a signal received by the network device is greater than a specific threshold. In this way, the network device receives and parses a data signal sent by the terminal device.

A fourth aspect of this application provides an uplink transmission method, including:
A terminal device receives first indication information from a network device, where the first indication information indicates whether the terminal device performs uplink transmission on a first resource by using a common beam indicated by the network device to the terminal device; and the terminal device performs, based on the first indication information, uplink transmission on the first resource by using a corresponding beam.

In the foregoing technical solution, the terminal device receives the first indication information from the network device, and performs, based on the first indication information, uplink transmission on the first resource by using the corresponding beam. It can be learned from the foregoing descriptions that the network device may explicitly configure whether the terminal device follows the common beam indicated by the network device for the terminal device. Therefore, the terminal device correctly performs uplink transmission on the first resource by using the corresponding beam, thereby facilitating correct transmission between the terminal device and the network device. Communication transmission performance is improved.

A fifth aspect of this application provides an uplink transmission method, including:
A network device determines first indication information, where the first indication information indicates whether a terminal device performs uplink transmission on a first resource by using a common beam indicated by the network device to the terminal device; and the network device sends the first indication information to the terminal device.

In the foregoing technical solution, the network device may explicitly configure whether the terminal device follows the common beam indicated by the network device for the terminal device. In this way, the terminal device can perform, based on the first indication information, uplink transmission on the first resource by using a corresponding beam. Therefore, the terminal device correctly performs uplink transmission on the first resource by using the corresponding beam, thereby facilitating correct transmission between the terminal device and the network device. Communication transmission performance is improved.

Based on the fourth aspect, in a possible implementation, that the terminal device performs, based on the first indication information, uplink transmission on the first resource by using a corresponding beam includes:
If the first indication information indicates the terminal device to perform uplink transmission on the first resource by using the common beam, the terminal device performs uplink transmission on the first resource by using the common beam; or
if the first indication information indicates the terminal device not to perform uplink transmission on the first resource by using the common beam, the terminal device receives DCI from the network device, and the terminal device performs uplink transmission on the first resource by using at least one beam indicated by an SRI field in the DCI, where the at least one beam belongs to the common beam indicated by the network device to the terminal device, or the at least one beam and the common beam are different beams.

In this implementation, a specific process in which the terminal device performs, based on the first indication information, uplink transmission on the first resource by using the corresponding beam is shown. TCI states separately used by the terminal device on the first resource in cases in which the first indication information indicates the terminal device to follow the common beam and the first indication information indicates the terminal device not to follow the common beam are specified. Therefore, the terminal device correctly performs uplink transmission on the first resource by using the corresponding beam, thereby facilitating correct transmission between the terminal device and the network device. Communication transmission performance is improved.

Based on the fifth aspect, in a possible implementation, the method further includes:
The network device sends the DCI to the terminal device.

The DCI includes an SRI field, the SRI field indicates at least one beam, and the at least one beam belongs to the common beam indicated by the network device to the terminal device, or the at least one beam and the common beam are different beams.

In this implementation, the network device may indicate the at least one beam to the terminal device by using the SRI field in the DCI. Therefore, the terminal device performs uplink transmission by using the at least one beam without following the common beam.

Based on the fourth aspect or the fifth aspect, in a possible implementation, any one of the following power control parameters is used when the terminal device performs uplink transmission on the first resource:
a power control parameter associated with a beam used when the terminal device performs uplink transmission on the first resource, a power control parameter associated with the first resource, or a preconfigured power control parameter.

In this implementation, the power control parameter used by the terminal device to perform uplink transmission on the first resource is specified. In this way, the terminal device performs uplink transmission on the first resource by using an appropriate transmit power. This ensures that strength of a signal received by the network device is greater than a specific threshold. In this way, the network device receives and parses a data signal sent by the terminal device.

Based on the fourth aspect or the fifth aspect, in a possible implementation, if the terminal device uses two beams to perform uplink transmission on the first resource, the terminal device performs uplink transmission on the first resource by using preconfigured power control parameters separately associated with the two beams.

In this implementation, when the terminal device performs uplink transmission on the first resource by using two beams, power control parameters used by the terminal device on the two beams are specified. In this way, the terminal device performs uplink transmission on the first resource by using an appropriate transmit power. This ensures that strength of a signal received by the network device is greater than a specific threshold. In this way, the network device receives and parses a data signal sent by the terminal device.

A sixth aspect of this application provides an uplink transmission method, including:
A terminal device determines a first beam and a second beam, where the first beam is a beam associated with a first resource, the second beam is a beam associated with a second resource, and the first resource and the second resource overlap in time domain, and if a first condition is met, the terminal device performs uplink transmission on the first resource by using the first beam, and performs uplink transmission on the second resource by using the second beam.

In the foregoing technical solution, the first beam is a beam associated with the first resource, and the second beam is a beam associated with the second resource. The terminal device determines transmission behavior of the terminal device on the first resource and the second resource according to a corresponding rule. If the first condition is met, the terminal device performs uplink transmission on the first resource by using the first beam, and performs uplink transmission on the second resource by using the second beam. The first resource and the second resource overlap in time domain. Therefore, this helps improve a system capacity or communication transmission reliability, and improve communication performance.

Based on the sixth aspect, in a possible implementation, the method further includes:
If the first condition is not met, the terminal device performs any one of the following:
discarding the second resource, and performing uplink transmission on the first resource by using the first beam; or
discarding an overlapping resource of the first resource and the second resource in time domain, performing uplink transmission on a resource other than the overlapping resource on the first resource by using the first beam, and performing uplink transmission on a resource other than the overlapping resource on the second resource by using the second beam.

In this implementation, the first beam is a beam associated with the first resource, and the second beam is a beam associated with the second resource. The terminal device determines transmission behavior of the terminal device on the first resource and the second resource according to a corresponding rule. In this way, a problem that a conflict exists when the terminal device performs simultaneous transmission on the first resource and the second resource is resolved, thereby facilitating correct transmission between the terminal device and the network device, and improving communication transmission performance.

Based on the sixth aspect, in a possible implementation, the first beam and the second beam are used for simultaneous transmission. In this implementation, the terminal device performs uplink transmission on the first resource by using the first beam and performs uplink transmission on the second resource by using the second beam, thereby improving a system capacity or communication transmission reliability, and improving communication performance.

Based on the sixth aspect, in a possible implementation, the first condition includes at least one of the following:
a transmit power used by the terminal device to perform uplink transmission on the first resource by using the first beam is greater than a first threshold;
a transmit power used by the terminal device to perform uplink transmission on the second resource by using the second beam is greater than a second threshold;
a sum of a transmit power used by the terminal device to perform uplink transmission on the first resource by using the first beam and a transmit power used by the terminal device to perform uplink transmission on the second resource by using the second beam does not exceed a third threshold;
the first beam corresponds to a first panel, the second beam corresponds to a second panel, and the first panel and the second panel are two different panels; or
the first beam and the second beam are beams that are reported by the terminal device and that can be used for simultaneous transmission.

The foregoing shows some possible cases of the first condition, and at least one of the foregoing cases shown may represent that the first beam and the second beam may be used for simultaneous transmission.

Based on the sixth aspect, in a possible implementation, the first beam corresponds to a first TRP, the second beam corresponds to a second TRP, and the first TRP and the second TRP are configured to provide services for the terminal device.

In this implementation, when the first condition is met, the terminal device may send first uplink data to the first TRP and send second uplink data to the second TRP on the first resource. The first uplink data is different from the second uplink data, thereby improving a capacity of a communication system. Alternatively, the terminal device may send same uplink data separately to the first TRP and the second TRP, thereby improving data transmission reliability.

Based on the sixth aspect, in a possible implementation, the first beam corresponds to a first panel, the second beam corresponds to a second panel, and the first panel and the second panel are two different panels. In this implementation, the first beam and the second beam are beams transmitted by the terminal device by using different panels, so that the terminal device performs uplink transmission on the first beam and the second beam.

A seventh aspect of this application provides an uplink transmission method, including:
A terminal device receives first information from a network device, where the first information is for configuring or indicates a first beam and a second beam, and the first beam and the second beam are beams associated with a first resource; and the terminal device performs uplink transmission on the first resource by using the first beam, and performs uplink transmission on the first resource by using the second beam.

In the foregoing technical solution, the terminal device may receive the first information sent by the network device. The first information is for configuring or indicates the first beam and the second beam that are associated with the first resource. The terminal device may perform uplink transmission on the first resource by using the first beam, and perform uplink transmission on the first resource by using the second beam. In this way, the terminal device performs uplink transmission on a same resource by using the first beam and the second beam, thereby improving a system capacity or transmission reliability.

An eighth aspect of this application provides an uplink transmission method, including:
A network device determines first information, where the first information is for configuring or indicates a first beam and a second beam, the first beam and the second beam are beams associated with a first resource, and the first beam and the second beam are used for simultaneous transmission; and the network device sends the first information to the terminal device.

In the foregoing technical solution, the network device explicitly configures or indicates the first beam and the second beam for the first resource by using the first information. The first beam and the second beam may be used for simultaneous transmission. In this way, the terminal device performs uplink transmission on a same resource by using the first beam and the second beam, thereby improving a system capacity or transmission reliability.

Based on the seventh aspect, in a possible implementation, the first beam and the second beam are used for simultaneous transmission. In this implementation, the terminal device performs uplink transmission on a same resource by using the first beam and the second beam, thereby improving a system capacity or transmission reliability.

Based on the seventh aspect or the eighth aspect, in a possible implementation, the first information is carried in a radio resource control (radio resource control, RRC) message or a media access control control element (media access element, MAC CE).

Based on the seventh aspect or the eighth aspect, in a possible implementation, the first information includes an index of the first beam and an index of the second beam; the first information includes an identifier of a TCI state corresponding to the first beam and an identifier of a TCI state corresponding to the second beam; or the first beam and the second beam form a simultaneous transmission beam pair, and the first information includes an index of the simultaneous transmission beam pair.

In the foregoing implementations, some possible implementations in which the first information indicates the first beam and the second beam are shown, so that the terminal device determines the first beam and the second beam.

A ninth aspect of this application provides an uplink transmission method, including:
A terminal device determines a first beam and a second beam that are associated with a first resource; and
if a first condition is met, the terminal device performs uplink transmission on the first resource by using the first beam, and performs uplink transmission on the first resource by using the second beam.

In the foregoing technical solution, the first resource is associated with the first beam and the second beam. The terminal device determines transmission behavior of the terminal device on the first resource according to a corresponding rule. If the first condition is met, the terminal device performs uplink transmission on the first resource by using the first beam, and performs uplink transmission on the first resource by using the second beam. This helps improve a system capacity or communication transmission reliability, and improve communication performance.

Based on the ninth aspect, in a possible implementation, the method further includes:
If the first condition is not met, the terminal device performs uplink transmission on the first resource by using only the first beam, or the terminal device performs no uplink transmission on the first resource.

In this implementation, the first resource is associated with the first beam and the second beam. The terminal device determines transmission behavior of the terminal device on the first resource according to a corresponding rule. In this way, a problem that a conflict exists when the terminal device performs simultaneous transmission on the first resource by using the first beam and the second beam is resolved, thereby facilitating correct transmission between the terminal device and the network device, and improving communication transmission performance.

Based on the ninth aspect, in a possible implementation, before that a terminal device determines a first beam and a second beam that are associated with a first resource, the method further includes: The terminal device receives configuration information from a network device, where the configuration information is for configuring the first resource to be associated with the first beam and the second beam.

Based on the ninth aspect, in a possible implementation, the first condition includes at least one of the following:
the first beam corresponds to a first panel, the second beam corresponds to a second panel, and the first panel and the second panel are two different panels;
a transmit power used by the terminal device to perform uplink transmission on the first resource by using the first beam is greater than a first threshold;
a transmit power used by the terminal device to perform uplink transmission on the first resource by using the second beam is greater than a second threshold;
a sum of a transmit power used by the terminal device to perform uplink transmission on the first resource by using the first beam and a transmit power used by the terminal device to perform uplink transmission on the first resource by using the second beam does not exceed a third threshold; or
the first beam and the second beam are beams that are reported by the terminal device and that can be used for simultaneous transmission.

A tenth aspect of this application provides an uplink transmission method, including:
A network device determines configuration information, where the configuration information is for configuring a first resource of the terminal device to be associated with a first beam and a second beam; and the network device sends the configuration information to the terminal device.

In the foregoing technical solution, the network device may configure the first beam and the second beam for the first resource. In this way, when the first beam and the second beam can be used for simultaneous transmission, the terminal device may perform uplink transmission on the first resource by using the first beam, and perform uplink transmission on the first resource by using the second beam. This helps improve a system capacity or communication transmission reliability, and improve communication performance.

Based on the ninth aspect or the tenth aspect, in a possible implementation, the configuration information includes information about a first control resource set and a second control resource set that are associated with the first resource, where the first control resource set corresponds to the first beam, and the second control resource set corresponds to the second beam.

In this implementation, the network device may indirectly indicate, by using the control resource set associated with the first resource, the first beam and the second beam that are associated with the first resource.

An eleventh aspect of this application provides an uplink transmission method, including:
A terminal device receives DCI from a network device, where the DCI is for dynamically scheduling the terminal device to perform uplink transmission by using a dynamic grant (dynamic grant, DG) resource. If a first condition is met, and the DG resource and a configured grant (configured grant, CG) resource of the terminal device overlap in time domain, the terminal device performs uplink transmission on the CG resource by using a first beam, and performs uplink transmission on the DG resource by using a second beam, where the CG resource is associated with the first beam.

In the foregoing technical solution, the CG resource is associated with the first beam. The terminal device determines transmission behavior of the terminal device on the CG resource and the DG resource according to a corresponding rule. If the first condition is met, the terminal device performs uplink transmission on the CG resource by using the first beam, and performs uplink transmission on the DG resource by using the second beam. This helps improve a system capacity or communication transmission reliability, and improve communication performance.

Based on the eleventh aspect, in a possible implementation, the method further includes:
If the first condition is not met, and the DG resource and the CG resource overlap in time domain, the terminal device discards the DG resource, and performs uplink transmission on the CG resource by using the first beam; or the terminal device discards an overlapping resource of the DG resource and the CG resource, performs uplink transmission on a resource other than the overlapping resource on the DG resource by using the first beam, and performs uplink transmission on a resource other than the overlapping resource on the CG resource by using the second beam.

In this implementation, the terminal device determines transmission behavior of the terminal device on the DG resource and the CG resource according to a corresponding rule. Therefore, a problem that a conflict exists when the terminal device performs uplink transmission on the CG resource by using the first beam and the terminal device performs uplink transmission on the DG resource by using the second beam is resolved, thereby facilitating correct transmission between the terminal device and the network device, and improving communication transmission performance.

Based on the eleventh aspect, in a possible implementation, the first condition includes at least one of the following:
the first beam corresponds to a first panel, the second beam corresponds to a second panel, and the first panel and the second panel are two different panels;
a transmit power used by the terminal device to perform uplink transmission on the CG resource by using the first beam is greater than a first threshold;
a transmit power used by the terminal device to perform uplink transmission on the DG resource by using the second beam is greater than a second threshold;
a sum of a transmit power used by the terminal device to perform uplink transmission on the CG resource by using the first beam and a transmit power used by the terminal device to perform uplink transmission on the DG resource by using the second beam does not exceed a third threshold; or
the first beam and the second beam are beams that are reported by the terminal device and that can be used for simultaneous transmission.

The foregoing shows some possible cases of the first condition, and at least one of the foregoing cases shown may represent that the first beam and the second beam may be used for simultaneous transmission.

A twelfth aspect of this application provides an uplink transmission method, including:
A terminal device receives indication information from a network device, where the indication information indicates a first beam and a second beam; and if the terminal device has no DG resource for transmission, the terminal device performs uplink transmission on a CG resource by using the 1^{st} beam indicated by the indication information.

In the foregoing technical solution, transmission behavior of the terminal device on the CG resource when the terminal device has no DG resource for transmission is shown. Therefore, the terminal device correctly performs uplink transmission on the CG resource by using a corresponding beam. This facilitates correct transmission between the terminal device and a network device, and improves communication transmission performance.

Based on the twelfth aspect, in a possible implementation, the method further includes:
If the first condition is met, the terminal device has a DG resource for transmission, and the DG resource and the CG resource overlap in time domain, the terminal device performs uplink transmission on the CG resource by using the first beam, and performs uplink transmission on the DG resource by using the second beam, or the terminal device performs uplink transmission on the CG resource by using the second beam, and performs uplink transmission on the DG resource by using the first beam.

In this implementation, transmission behavior of the terminal device on the CG resource and the DG resource when the first condition is met, the terminal device has the DG resource for transmission, and the DG resource and the CG resource overlap in time domain is shown. The DG resource and the CG resource overlap in time domain. It can be learned that the terminal device can perform simultaneous transmission. This helps improve a system capacity or communication transmission reliability, and improve communication performance.

Based on the twelfth aspect, in a possible implementation, the method further includes:
If the first condition is not met, the terminal device has the DG resource for transmission, and the DG resource and the CG resource overlap in time domain, the terminal device performs at least one of the following:
discarding the CG resource, and performing uplink transmission on the DG resource by using the first beam or the second beam;
discarding the DG resource, and performing uplink transmission on the CG resource by using the first beam or the second beam;
discarding an overlapping resource of the DG resource and the CG resource, performing uplink transmission on a resource other than the overlapping resource on the DG resource by using the first beam, and performing uplink transmission on a resource other than the overlapping resource on the CG resource by using the second beam; or
discarding an overlapping resource of the DG resource and the CG resource, performing uplink transmission on a resource other than the overlapping resource on the DG resource by using the second beam, and performing uplink transmission on a resource other than the overlapping resource on the CG resource by using the first beam.

In this implementation, the terminal device determines transmission behavior of the terminal device on the DG resource and the CG resource according to a corresponding rule. In this way, a problem that a conflict exists when the terminal device performs uplink transmission on the CG resource and the DG resource is resolved, thereby facilitating correct transmission between the terminal device and the network device, and improving communication transmission performance.

Based on the twelfth aspect, in a possible implementation, the first condition includes:
a transmit power used by the terminal device to perform uplink transmission on the CG resource by using the first beam or the second beam is greater than a first threshold;
a transmit power used by the terminal device to perform uplink transmission on the DG resource by using the first beam or the second beam is greater than a second threshold;
a sum of a transmit power used by the terminal device to perform uplink transmission on the CG resource by using the first beam and a transmit power used by the terminal device to perform uplink transmission on the DG resource by using the first beam does not exceed a third threshold; or a sum of a transmit power used by the terminal device to perform uplink transmission on the CG resource by using the second beam and a transmit power used by the terminal device to perform uplink transmission on the DG resource by using the first beam does not exceed a third threshold;
the first beam corresponds to a first panel, the second beam corresponds to a second panel, and the first panel and the second panel are two different panels; or
the first beam and the second beam are beams that are reported by the terminal device and that can be used for simultaneous transmission.

The foregoing shows some possible cases of the first condition, and at least one of the foregoing cases shown may represent that the first beam and the second beam may be used for simultaneous transmission.

Based on any one of the seventh aspect to the twelfth aspect, in a possible implementation, the first beam corresponds to a first TRP, the second beam corresponds to a second TRP, and the first TRP and the second TRP are configured to provide services for the terminal device.

In this implementation, when the first condition is met, the terminal device may send first uplink data to the first TRP and send second uplink data to the second TRP on the first resource. The first uplink data is different from the second uplink data, thereby improving a capacity of a communication system. Alternatively, the terminal device may send same uplink data separately to the first TRP and the second TRP, thereby improving data transmission reliability.

Based on any one of the seventh aspect to the twelfth aspect, in a possible implementation, the first beam corresponds to a first panel, the second beam corresponds to a second panel, and the first panel and the second panel are two different panels. In this implementation, the first beam and the second beam are beams transmitted by the terminal device by using different panels, so that the terminal device performs uplink transmission on the first beam and the second beam.

A thirteenth aspect of this application provides an uplink transmission method, including:
A terminal device receives first DCI from a network device, where the first DCI is for activating a first resource of the terminal device and activating a first beam and a second beam; and if a first condition is met, the terminal device performs uplink transmission on the first resource by using the first beam, and performs uplink transmission on the first resource by using the second beam.

In the foregoing technical solution, the terminal device determines transmission behavior of the terminal device on the first resource according to a corresponding rule. If the first condition is met, the terminal device performs uplink transmission on the first resource by using the first beam, and performs uplink transmission on the first resource by using the second beam. In this way, the terminal device performs simultaneous transmission on a same resource by using two beams. This helps improve a system capacity or communication transmission reliability, and improve communication performance.

Based on the thirteenth aspect, in a possible implementation, the method further includes:
If the first condition is not met, the terminal device performs uplink transmission on the first resource by using a beam used by the terminal device to receive the first DCI.

In this implementation, if the first condition is not met, to be specific, the first beam and the second beam cannot be used for simultaneous transmission, the terminal device may perform uplink transmission on the first resource by using a common beam. In this way, a problem that a conflict exists when the terminal device performs uplink transmission on a same resource by using two beams is resolved, thereby facilitating correct transmission between the terminal device and the network device, and improving communication transmission performance.

Based on the thirteenth aspect, in a possible implementation, the first DCI further includes first indication information, and the first indication information indicates the terminal device to perform uplink transmission on the first resource by using the first beam and the second beam separately.

In this implementation, the network device may explicitly indicate, based on the first indication information, the terminal device to perform uplink transmission on the first resource by using the first beam and the second beam separately. The terminal device may determine whether the first beam and the second beam can be used for simultaneous transmission, so that the terminal device correctly uses an appropriate beam to perform uplink transmission on the first resource.

Based on the thirteenth aspect, in a possible implementation, the method further includes:
The terminal device receives second DCI from the network device, where the second DCI is for updating the first beam and the second beam to a third beam and a fourth beam; and if a second condition is met, the terminal device performs uplink transmission at the start of a next transmission cycle of a current transmission cycle of the first resource by using the third beam, and performs uplink transmission in the next transmission cycle of the current transmission cycle by using the fourth beam.

In this implementation, a possible implementation in which the terminal device changes a used beam on the first resource is shown. If the network device re-indicates a beam, the terminal device may determine whether the second condition is met. If the second condition is met, the terminal device performs uplink transmission at the start of the next transmission cycle of the current transmission cycle of the first resource by using the third beam, and performs uplink transmission in the next transmission cycle of the current transmission cycle by using the fourth beam. Therefore, the terminal device performs uplink transmission by using a beam that is newly indicated by the network device. Usually, the beam newly indicated by the network device is adaptive to a channel, which helps improve communication transmission performance.

Based on the thirteenth aspect, in a possible implementation, the method further includes:
If the second condition is not met, the terminal device performs uplink transmission at the start of the next transmission cycle of the current transmission cycle by using the 1^{st} beam indicated by the second DCI.

In this implementation, if the second condition is not met, that is, the third beam and the fourth beam cannot be used for simultaneous transmission, the terminal device performs uplink transmission at the start of the next transmission cycle of the current transmission cycle by using the 1^{st} beam indicated by the second DCI. In this way, a problem that a conflict exists when the terminal device performs uplink transmission on a same resource by using two beams is resolved, thereby facilitating correct transmission between the terminal device and the network device, and improving communication transmission performance.

Based on the thirteenth aspect, in a possible implementation, the method further includes:
The terminal device receives second DCI from the network device, where the second DCI is for updating the first beam and the second beam to a third beam and a fourth beam; and
if a second condition is met, and the terminal device receives third DCI from the network device, where the third DCI is for activating the first resource again, the terminal device performs uplink transmission on the first resource at the start of a next transmission cycle of a current transmission cycle of the first resource by using the third beam, and performs uplink transmission in the next transmission cycle of the current transmission cycle by using the fourth beam.

In this implementation, another possible implementation in which the terminal device changes a used beam on the first resource is shown. If the network device re-indicates a beam, and the network device re-activates the first resource, the terminal device may determine whether the second condition is met. If the second condition is met, the terminal device performs uplink transmission at the start of the next transmission cycle of the current transmission cycle of the first resource by using the third beam, and performs uplink transmission in the next transmission cycle of the current transmission cycle by using the fourth beam. Therefore, the terminal device performs uplink transmission by using a beam that is newly indicated by the network device. Usually, the beam newly indicated by the network device is adaptive to a channel, which helps improve communication transmission performance.

Based on the thirteenth aspect, in a possible implementation, the method further includes:
If the second condition is not met, and the terminal device receives third DCI from the network device, where the third DCI is for activating the first resource again, the terminal device performs uplink transmission on the first resource at the start of the next transmission cycle of the current transmission cycle of the first resource by using the 1^{st} beam indicated by the second DCI.

In this implementation, if the second condition is not met, that is, the third beam and the fourth beam cannot be used for simultaneous transmission, the terminal device performs uplink transmission at the start of the next transmission cycle of the current transmission cycle by using the 1^{st} beam indicated by the second DCI. In this way, a problem that a conflict exists when the terminal device performs uplink transmission on a same resource by using two beams is resolved, thereby facilitating correct transmission between the terminal device and the network device, and improving communication transmission performance.

Based on the thirteenth aspect, in a possible implementation, the first condition includes:
a transmit power used by the terminal device to perform uplink transmission on the first resource by using the first beam is greater than a first threshold;
a transmit power used by the terminal device to perform uplink transmission on the first resource by using the second beam is greater than a second threshold;
a sum of a transmit power used by the terminal device to perform uplink transmission on the first resource by using the first beam and a transmit power used by the terminal device to perform uplink transmission on the first resource by using the second beam does not exceed a third threshold;
the first beam corresponds to a first panel, the second beam corresponds to a second panel, and the first panel and the second panel are two different panels; or
the first beam and the second beam are beams that are reported by the terminal device and that can be used for simultaneous transmission.

The foregoing shows some possible cases of the first condition, and at least one of the foregoing cases shown may represent that the first beam and the second beam may be used for simultaneous transmission.

Based on the thirteenth aspect, in a possible implementation, the second condition includes:
a transmit power used by the terminal device to perform uplink transmission on the first resource by using the third beam is greater than the first threshold;
a transmit power used by the terminal device to perform uplink transmission on the first resource by using the fourth beam is greater than the second threshold;
a sum of a transmit power used by the terminal device to perform uplink transmission on the first resource by using the third beam and a transmit power used by the terminal device to perform uplink transmission on the first resource by using the fourth beam does not exceed the third threshold;
the third beam corresponds to a third panel, the fourth beam corresponds to a fourth panel, and the third panel and the fourth panel are two different panels; or
the third beam and the fourth beam are beams that are reported by the terminal device and that can be used for simultaneous transmission.

The foregoing shows some possible cases of the second condition, and at least one of the foregoing cases shown may represent that the third beam and the fourth beam may be used for simultaneous transmission.

Based on the thirteenth aspect, in a possible implementation, the first beam corresponds to a first TRP, the second beam corresponds to a second TRP, and the first TRP and the second TRP are configured to provide services for the terminal device.

In this implementation, when the first condition is met, the terminal device may send first uplink data to the first TRP and send second uplink data to the second TRP on the first resource. The first uplink data is different from the second uplink data, thereby improving a capacity of a communication system. Alternatively, the terminal device may send same uplink data separately to the first TRP and the second TRP, thereby improving data transmission reliability.

Based on the thirteenth aspect, in a possible implementation, the first beam corresponds to a first panel, the second beam corresponds to a second panel, and the first panel and the second panel are two different panels. In this implementation, the first beam and the second beam are beams transmitted by the terminal device by using different panels, so that the terminal device performs uplink transmission on the first beam and the second beam.

A fourteenth aspect of this application provides an uplink transmission method, including:
A terminal device receives DCI from a network device, where the DCI is for activating a first resource of the terminal device, the DCI includes a first SRI field and a second SRI field, and the first SRI field and the second SRI field jointly indicate a first beam and a second beam that are associated with the first resource, or the first SRI field indicates a first beam and the second SRI field indicates a second beam. The terminal device performs uplink transmission on the first resource by using the first beam, and performs uplink transmission on the first resource by using the second beam.

In the foregoing technical solution, the terminal device receives the DCI from the network device, where the first SRI field and the second SRI field in the DCI indicate the first beam and the second beam that are associated with the first resource. The terminal device performs uplink transmission on the first resource by using the first beam, and performs uplink transmission on the first resource by using the second beam. In this way, the terminal device performs uplink transmission on a same resource by using a plurality of beams, thereby improving a system capacity or transmission reliability.

A fifteenth aspect of this application provides an uplink transmission method, including:
A network device determines DCI, where the DCI is for activating a first resource of a terminal device, the DCI includes a first SRI field and a second SRI field, and the first SRI field and the second SRI field jointly indicate a first beam and a second beam that are associated with the first resource, or the first SRI field indicates a first beam and the second SRI field indicates a second beam. The network device sends the DCI to the terminal device.

In the foregoing technical solution, the network device sends the DCI to the terminal device, where the first SRI field and the second SRI field in the DCI indicate the first beam and the second beam that are associated with the first resource. Therefore, the terminal device performs uplink transmission on the first resource by using the first beam, and performs uplink transmission on the first resource by using the second beam. In this way, the terminal device performs uplink transmission on a same resource by using a plurality of beams, thereby improving a system capacity or transmission reliability.

Based on the fourteenth aspect or the fifteenth aspect, in a possible implementation, the first beam and the second beam are used for simultaneous transmission. In this implementation, the terminal device performs uplink transmission on a same resource by using the first beam and the second beam, thereby improving a system capacity or transmission reliability.

Based on the fourteenth aspect or the fifteenth aspect, in a possible implementation, the first beam and the second beam form a simultaneous transmission beam pair, and the first SRI field and the second SRI field jointly indicate an index of the simultaneous transmission beam pair.

Based on the fourteenth aspect or the fifteenth aspect, in a possible implementation, beams separately indicated by the first SRI field and the second SRI field do not change a beam indicated by a unified TCI state; or a beam jointly indicated by the first SRI field and the second SRI field does not change a beam indicated by a unified TCI state. As specified in this implementation, a beam indicated by an SRI field does not change the beam indicated by the unified TCI state. In other words, for transmission other than the first resource, the terminal device performs transmission still by using the beam indicated by the unified TCI state.

Based on the fourteenth aspect or the fifteenth aspect, in a possible implementation, the first beam corresponds to a first TRP, the second beam corresponds to a second TRP, and the first TRP and the second TRP are configured to provide services for the terminal device.

In this implementation, when the first condition is met, the terminal device may send first uplink data to the first TRP and send second uplink data to the second TRP on the first resource. The first uplink data is different from the second uplink data, thereby improving a capacity of a communication system. Alternatively, the terminal device may send same uplink data separately to the first TRP and the second TRP, thereby improving data transmission reliability.

Based on the fourteenth aspect or the fifteenth aspect, in a possible implementation, the first beam corresponds to a first panel, the second beam corresponds to a second panel, and the first panel and the second panel are two different panels. In this implementation, the first beam and the second beam are beams transmitted by the terminal device by using different panels, so that the terminal device performs uplink transmission on the first beam and the second beam.

A sixteenth aspect of this application provides an uplink transmission method, including:
A terminal device determines a first waveform associated with a DG resource and a second waveform associated with a CG resource. When the first waveform is different from the second waveform, the terminal device determines, based on capability information of the terminal device, whether to discard the DG resource, where the DG resource is associated with a first beam, the CG resource is associated with a second beam, the first beam and the second beam are used for simultaneous transmission, and the CG resource and the DG resource overlap in time domain.

In the foregoing technical solution, in a case in which the first beam associated with the DG resource and the second beam associated with the CG resource can be used for simultaneous transmission, when the first waveform is different from the second waveform, the terminal device determines, based on the capability information of the terminal device, whether to discard the DG resource. For example, if the terminal device supports performing simultaneous transmission by using different waveforms, the terminal device does not discard the DG resource. The terminal device may perform uplink transmission with a first TRP on the DG resource by using the first beam, and perform uplink transmission with a second TRP on the CG resource by using the second beam. This improves a system capacity or communication transmission reliability. If the terminal device does not support performing simultaneous transmission by using different waveforms, the terminal device discards the DG resource, and performs uplink transmission with the first TRP on the CG resource by using the first beam. Therefore, correct transmission between the terminal device and a network device is facilitated.

Based on the sixteenth aspect, in a possible implementation, the method further includes:
The terminal device sends the capability information to the network device, where the capability information indicates whether the terminal device supports performing simultaneous uplink transmission by using different waveforms.

The terminal device may send the capability information to the network device, so that the network device configures an appropriate waveform for the terminal device based on the capability information.

A seventeenth aspect of this application provides an uplink transmission method, including:
A network device receives capability information from a terminal device, where the capability information indicates whether the terminal device supports performing simultaneous uplink transmission by using different waveforms.

An eighteenth aspect of this application provides an uplink transmission method, including:
A terminal device determines a first resource, where the first resource is associated with a first beam; and
if the first resource is associated with a power control parameter, the terminal device performs uplink transmission on the first resource by using the power control parameter associated with the first resource;
if the first beam is associated with a power control parameter, the terminal device performs uplink transmission on the first resource by using the power control parameter associated with the first beam;
if the first beam is associated with no power control parameter, and the first resource is associated with a power control parameter, the terminal device performs uplink transmission on the first resource by using the power control parameter associated with the first resource; or
if neither the first beam nor the first resource is associated with a power control parameter, the terminal device performs uplink transmission on the first resource by using a preconfigured power control parameter.

A nineteenth aspect of this application provides a communication apparatus, including:
a transceiver module, configured to: receive first information from a network device, where the first information indicates one or more transmission parameters of a first resource; and perform, based on the first information, uplink transmission on the first resource by using a corresponding TCI state.

Based on the nineteenth aspect, in a possible implementation, the first information indicates two transmission parameters. The transceiver module is specifically configured to:
perform uplink transmission in a first transmission cycle of the first resource by using a first TCI state, and perform uplink transmission in a second transmission cycle of the first resource by using a second TCI state.

The first transmission cycle is a transmission cycle corresponding to the 1^{st} transmission parameter in the two transmission parameters on the first resource, and the second transmission cycle is a transmission cycle corresponding to the 2^{nd} transmission parameter in the two transmission parameters on the first resource.

Based on the nineteenth aspect, in a possible implementation, the transceiver module is further configured to:
receive second information from the network device, where the second information indicates one TCI state; and
perform uplink transmission at the start of the next transmission cycle of the current transmission cycle of the first resource by using a TCI state indicated by the second information.

Based on the nineteenth aspect, in a possible implementation, the transceiver module is specifically configured to:
If the first information indicates one transmission parameter, and the first information does not include first identification information, perform uplink transmission on the first resource by using a first TCI state; or
if the first information indicates one transmission parameter, and the first information includes first identification information, perform uplink transmission on the first resource by using a second TCI state.

Based on the nineteenth aspect, in a possible implementation, the transceiver module is specifically configured to:
if the first information indicates one transmission parameter, perform uplink transmission by using a TCI state that corresponds to a sounding reference signal resource set associated with the transmission parameter and that is in at least one TCI state indicated by the network device to the communication apparatus.

Based on the nineteenth aspect, in a possible implementation, the first information indicates one transmission parameter. The transceiver module is specifically configured to:
if the transmission parameter includes a control resource set pool index, perform uplink transmission by using a TCI state corresponding to the control resource set pool index; or
if the transmission parameter does not include a control resource set pool index, perform uplink transmission on the first resource by using the 1^{st} TCI state indicated by the network device to the communication apparatus.

Based on the nineteenth aspect, in a possible implementation, any one of the following power control parameters is used when the communication apparatus performs uplink transmission on the first resource: a power control parameter associated with a beam used when the communication apparatus performs uplink transmission on the first resource, a power control parameter associated with the first resource, or a preconfigured power control parameter.

Based on the nineteenth aspect, in a possible implementation, if the communication apparatus uses two beams to perform uplink transmission on the first resource, the communication apparatus performs uplink transmission on the first resource by using preconfigured power control parameters separately associated with the two beams.

A twentieth aspect of this application provides a communication apparatus, including:
a processing module, configured to determine first information, where the first information indicates one or more transmission parameters of a first resource, and the one or more transmission parameters are used by a terminal device to perform uplink transmission on the first resource by using a corresponding TCI state; and
a transceiver module, configured to send the first information to the terminal device.

Based on the twentieth aspect, in a possible implementation, if the first information indicates two transmission parameters, it indicates that the communication apparatus indicates the terminal device to perform uplink transmission in a first transmission cycle of the first resource by using a first TCI state and perform uplink transmission in a second transmission cycle of the first resource by using a second TCI state. The first transmission cycle is a transmission cycle corresponding to the 1^{st} transmission parameter in the two transmission parameters on the first resource, and the second transmission cycle is a transmission cycle corresponding to the 2^{nd} transmission parameter in the two transmission parameters on the first resource.

Based on the twentieth aspect, in a possible implementation, the transceiver module is further configured to:
send second information to the terminal device, where the second information indicates one TCI state.

Based on the twentieth aspect, in a possible implementation, if the first information indicates one transmission parameter, and the first information does not include first identification information, it indicates that the communication apparatus indicates the terminal device to perform uplink transmission on the first resource by using a first TCI state; or
if the first information indicates one transmission parameter, and the first information does not include first identification information, it indicates that the communication apparatus indicates the terminal device to perform uplink transmission on the first resource by using a second TCI state.

Based on the twentieth aspect, in a possible implementation, if the first information indicates one transmission parameter, it indicates that the communication apparatus indicates the terminal device to perform uplink transmission on the first resource by using a TCI state that corresponds to a sounding reference signal resource set associated with the transmission parameter and that is in at least one TCI state indicated by the communication apparatus to the terminal device.

Based on the twentieth aspect, in a possible implementation, the first information indicates one transmission parameter. If the transmission parameter includes a control resource set pool index, it indicates that the communication apparatus indicates the terminal device to perform uplink transmission by using a TCI state corresponding to the control resource set pool index; or
if the transmission parameter does not include a control resource set pool index, it indicates that the communication apparatus indicates the terminal device to perform uplink transmission on the first resource by using the 1^{st} TCI state indicated by the communication apparatus to the terminal device.

Based on the nineteenth aspect or the twentieth aspect, in a possible implementation, the one or more transmission parameters are one or more sounding reference signal resource indicator parameters.

A twenty-first aspect of this application provides a communication apparatus, including:
a transceiver module, configured to: receive DCI from a network device, where the DCI is for activating a first resource of the communication apparatus; and if the network device indicates two TCI states to the communication apparatus, and the DCI is DCI in a first format, perform uplink transmission on the first resource by using a TCI state indicated by an SRI field in the DCI, where the TCI state indicated by the SRI field belongs to the two TCI states.

Based on the twenty-first aspect, in a possible implementation, the transceiver module is specifically configured to:
if a value of the SRI field is 00, perform uplink transmission on the first resource by using the 1^{st} TCI state indicated by the network device to the communication apparatus;
if a value of the SRI field is 01, perform uplink transmission on the first resource by using the 2^{nd} TCI state indicated by the network device to the communication apparatus; or
if a value of the SRI field is 10 or 11, perform uplink transmission on the first resource by using beams separately corresponding to the two TCI states.

Based on the twenty-first aspect, in a possible implementation, the transceiver module is further configured to:
if the network device indicates two TCI states to the communication apparatus, and the DCI is DCI in a second format, perform uplink transmission on the first resource by using the 1^{st} TCI state indicated by the network device to the communication apparatus, or perform uplink transmission on the first resource by using the two TCI states.

Based on the twenty-first aspect, in a possible implementation, the transceiver module is further configured to:
if the network device indicates one TCI state to the communication apparatus, and the DCI is DCI in a first format, ignore an SRI field in the DCI, and perform uplink transmission on the first resource by using the TCI state.

Based on the twenty-first aspect, in a possible implementation, any one of the following power control parameters is used when the communication apparatus performs uplink transmission on the first resource: a power control parameter associated with a beam used when the communication apparatus performs uplink transmission on the first resource, a power control parameter associated with the first resource, or a preconfigured power control parameter.

Based on the twenty-first aspect, in a possible implementation, if the communication apparatus uses two beams to perform uplink transmission on the first resource, the communication apparatus performs uplink transmission on the first resource by using preconfigured power control parameters separately associated with the two beams.

A twenty-second aspect of this application provides a communication apparatus, including:
a transceiver module, configured to: receive first indication information from a network device, where the first indication information indicates whether the communication apparatus performs uplink transmission on a first resource by using a common beam indicated by the network device to the communication apparatus; and perform, based on the first indication information, uplink transmission on the first resource by using a corresponding beam.

Based on the twenty-second aspect, in a possible implementation, the transceiver module is specifically configured to:
if the first indication information indicates the communication apparatus to perform uplink transmission on the first resource by using the common beam, perform uplink transmission on the first resource by using the common beam; or
if the first indication information indicates the communication apparatus not to perform uplink transmission on the first resource by using the common beam, receive DCI from the network device, and perform uplink transmission on the first resource by using at least one beam indicated by an SRI field in the DCI, where the at least one beam belongs to the common beam indicated by the network device to the communication apparatus, or the at least one beam and the common beam are different beams.

Based on the twenty-second aspect, in a possible implementation, any one of the following power control parameters is used when the communication apparatus performs uplink transmission on the first resource:
a power control parameter associated with a beam used when the communication apparatus performs uplink transmission on the first resource, a power control parameter associated with the first resource, or a preconfigured power control parameter.

Based on the twenty-second aspect, in a possible implementation, if the communication apparatus uses two beams to perform uplink transmission on the first resource, the communication apparatus performs uplink transmission on the first resource by using preconfigured power control parameters separately associated with the two beams.

A twenty-third aspect of this application provides a communication apparatus, including:
a processing module, configured to determine first indication information, where the first indication information indicates whether a terminal device performs uplink transmission on a first resource by using a common beam indicated by the communication apparatus to the terminal device; and
a transceiver module, configured to send the first indication information to the terminal device.

Based on the twenty-third aspect, in a possible implementation, the transceiver module is further configured to:
send DCI to the terminal device.

The DCI includes an SRI field, the SRI field indicates at least one beam, and the at least one beam belongs to the common beam indicated by the communication apparatus to the terminal device, or the at least one beam and the common beam are different beams.

A twenty-fourth aspect of this application provides a communication apparatus, including:
a processing module, configured to: determine a first beam and a second beam, where the first beam is a beam associated with a first resource, the second beam is a beam associated with a second resource, and the first resource and the second resource overlap in time domain; and if a first condition is met, perform uplink transmission on the first resource by using the first beam, and perform uplink transmission on the second resource by using the second beam.

Based on the twenty-fourth aspect, in a possible implementation, the transceiver module further includes: if the first condition is not met, performing any one of the following:
discarding the second resource, and performing uplink transmission on the first resource by using the first beam; or
discarding an overlapping resource of the first resource and the second resource in time domain, performing uplink transmission on a resource other than the overlapping resource on the first resource by using the first beam, and performing uplink transmission on a resource other than the overlapping resource on the second resource by using the second beam.

Based on the twenty-fourth aspect, in a possible implementation, the first beam and the second beam are used for simultaneous transmission.

Based on the twenty-fourth aspect, in a possible implementation, the first condition includes at least one of the following:
a transmit power used by the communication apparatus to perform uplink transmission on the first resource by using the first beam is greater than a first threshold;
a transmit power used by the communication apparatus to perform uplink transmission on the second resource by using the second beam is greater than a second threshold;
a sum of a transmit power used by the communication apparatus to perform uplink transmission on the first resource by using the first beam and a transmit power used by the communication apparatus to perform uplink transmission on the second resource by using the second beam does not exceed a third threshold;
the first beam corresponds to a first panel, the second beam corresponds to a second panel, and the first panel and the second panel are two different panels; or
the first beam and the second beam are beams that are reported by the terminal device and that can be used for simultaneous transmission.

Based on the twenty-fourth aspect, in a possible implementation, the first beam corresponds to a first TRP, the second beam corresponds to a second TRP, and the first TRP and the second TRP are configured to provide services for the communication apparatus.

Based on the twenty-fourth aspect, in a possible implementation, the first beam corresponds to a first panel, the second beam corresponds to a second panel, and the first panel and the second panel are two different panels.

A twenty-fifth aspect of this application provides a communication apparatus, including:
a transceiver module, configured to: receive first information from a network device, where the first information is for configuring or indicates a first beam and a second beam, and the first beam and the second beam are beams associated with a first resource; and perform uplink transmission on the first resource by using the first beam, and perform uplink transmission on the first resource by using the second beam.

Based on the twenty-fifth aspect, in a possible implementation, the first beam corresponds to a first TRP, the second beam corresponds to a second TRP, and the first TRP and the second TRP are configured to provide services for the communication apparatus.

A twenty-sixth aspect of this application provides a communication apparatus, including:
a processing module, configured to determine first information, where the first information is for configuring or indicates a first beam and a second beam, the first beam and the second beam are beams associated with a first resource, and the first beam and the second beam are used for simultaneous transmission; and
a transceiver module, configured to send the first information to the terminal device.

Based on the twenty-sixth aspect, in a possible implementation, the first beam and the second beam are used for simultaneous transmission.

Based on the twenty-fifth aspect or the twenty-sixth aspect, in a possible implementation, the first information is carried in an RRC message or a MAC CE.

Based on the twenty-fifth aspect or the twenty-sixth aspect, in a possible implementation, the first information includes an index of the first beam and an index of the second beam; the first information includes an identifier of a TCI state corresponding to the first beam and an identifier of a TCI state corresponding to the second beam; or the first beam and the second beam form a simultaneous transmission beam pair, and the first information includes an index of the simultaneous transmission beam pair.

Based on the twenty-sixth aspect, in a possible implementation, the first beam corresponds to a first TRP, the second beam corresponds to a second TRP, and the first TRP and the second TRP are configured to provide services for the terminal device.

Based on the twenty-fifth aspect or the twenty-sixth aspect, in a possible implementation, the first beam corresponds to a first panel, the second beam corresponds to a second panel, and the first panel and the second panel are two different panels.

A twenty-seventh aspect of this application provides a communication apparatus, including:
a processing module, configured to determine a first beam and a second beam that are associated with a first resource; and
a transceiver module, configured to: if a first condition is met, perform uplink transmission on the first resource by using the first beam, and perform uplink transmission on the first resource by using the second beam.

Based on the twenty-seventh aspect, in a possible implementation, the transceiver module is further configured to:
if the first condition is not met, perform uplink transmission on the first resource by using only the first beam, or perform no uplink transmission on the first resource.

Based on the twenty-seventh aspect, in a possible implementation, the processing module is specifically configured to:
receive configuration information from a network device, where the configuration information is for configuring the first resource to be associated with the first beam and the second beam.

Based on the twenty-seventh aspect, in a possible implementation, the first beam corresponds to a first TRP, the second beam corresponds to a second TRP, and the first TRP and the second TRP are configured to provide services for the communication apparatus.

Based on the twenty-seventh aspect, in a possible implementation, the first condition includes at least one of the following:
the first beam corresponds to a first panel, the second beam corresponds to a second panel, and the first panel and the second panel are two different panels;
a transmit power used by the communication apparatus to perform uplink transmission on the first resource by using the first beam is greater than a first threshold;
a transmit power used by the communication apparatus to perform uplink transmission on the first resource by using the second beam is greater than a second threshold;
a sum of a transmit power used by the communication apparatus to perform uplink transmission on the first resource by using the first beam and a transmit power used by the communication apparatus to perform uplink transmission on the first resource by using the second beam does not exceed a third threshold; or
the first beam and the second beam are beams that are reported by the communication apparatus and that can be used for simultaneous transmission.

A twenty-eighth aspect of this application provides a communication apparatus, including:
a processing module, configured to determine configuration information, where the configuration information is for configuring a first resource of a terminal device to be associated with a first beam and a second beam; and
a transceiver module, configured to send the configuration information to the terminal device.

Based on the twenty-seventh aspect or the twenty-eighth aspect, in a possible implementation, the configuration information includes information about a first control resource set and a second control resource set that are associated with the first resource, where the first control resource set corresponds to the first beam, and the second control resource set corresponds to the second beam.

Based on the twenty-seventh aspect, in a possible implementation, the first beam corresponds to a first TRP, the second beam corresponds to a second TRP, and the first TRP and the second TRP are configured to provide services for the terminal device.

Based on the twenty-seventh aspect or the twenty-eighth aspect, in a possible implementation, the first beam corresponds to a first panel, the second beam corresponds to a second panel, and the first panel and the second panel are two different panels.

A twenty-ninth aspect of this application provides a communication apparatus, including:
a transceiver module, configured to: receive DCI from a network device, where the DCI is for dynamically scheduling the communication apparatus to perform uplink transmission by using a DG resource; and if a first condition is met, and the DG resource and a CG resource of the communication apparatus overlap in time domain, perform uplink transmission on the CG resource by using a first beam, and perform uplink transmission on the DG resource by using a second beam, where the CG resource is associated with the first beam.

Based on the twenty-ninth aspect, in a possible implementation, the transceiver module is further configured to:
if the first condition is not met, and the DG resource and the CG resource overlap in time domain, discard the DG resource, and perform uplink transmission on the CG resource by using the first beam; or discard an overlapping resource of the DG resource and the CG resource, perform uplink transmission on a resource other than the overlapping resource on the DG resource by using the first beam, and perform uplink transmission on a resource other than the overlapping resource on the CG resource by using the second beam.

Based on the twenty-ninth aspect, in a possible implementation, the first condition includes at least one of the following:
the first beam corresponds to a first panel, the second beam corresponds to a second panel, and the first panel and the second panel are two different panels;
a transmit power used by the communication apparatus to perform uplink transmission on the CG resource by using the first beam is greater than a first threshold;
a transmit power used by the communication apparatus to perform uplink transmission on the DG resource by using the second beam is greater than a second threshold;
a sum of a transmit power used by the communication apparatus to perform uplink transmission on the CG resource by using the first beam and a transmit power used by the communication apparatus to perform uplink transmission on the DG resource by using the second beam does not exceed a third threshold; or
the first beam and the second beam are beams that are reported by the communication apparatus and that can be used for simultaneous transmission.

A thirtieth aspect of this application provides a communication apparatus, including:
a transceiver module, configured to: receive indication information from a network device, where the indication information indicates a first beam and a second beam; and if the communication apparatus has no DG resource for transmission, perform uplink transmission on a CG resource by using the 1^{st} beam indicated by the indication information.

Based on the thirtieth aspect, in a possible implementation, the transceiver module is further configured to:
if the first condition is met, the communication apparatus has a DG resource for transmission, and the DG resource and the CG resource overlap in time domain, perform uplink transmission on the CG resource by using the first beam, and perform uplink transmission on the DG resource by using the second beam; or perform uplink transmission on the CG resource by using the second beam, and perform uplink transmission on the DG resource by using the first beam.

Based on the thirtieth aspect, in a possible implementation, the transceiver module is further configured to:
if the first condition is not met, the communication apparatus has the DG resource for transmission, and the DG resource and the CG resource overlap in time domain, perform at least one of the following:
discarding the CG resource, and performing uplink transmission on the DG resource by using the first beam or the second beam;
discarding the DG resource, and performing uplink transmission on the CG resource by using the first beam or the second beam;
discarding an overlapping resource of the DG resource and the CG resource, performing uplink transmission on a resource other than the overlapping resource on the DG resource by using the first beam, and performing uplink transmission on a resource other than the overlapping resource on the CG resource by using the second beam; or
discarding an overlapping resource of the DG resource and the CG resource, performing uplink transmission on a resource other than the overlapping resource on the DG resource by using the second beam, and performing uplink transmission on a resource other than the overlapping resource on the CG resource by using the first beam.

Based on the thirtieth aspect, in a possible implementation, the first condition includes:
a transmit power used by the communication apparatus to perform uplink transmission on the CG resource by using the first beam or the second beam is greater than a first threshold;
a transmit power used by the communication apparatus to perform uplink transmission on the DG resource by using the first beam or the second beam is greater than a second threshold;
a sum of a transmit power used by the communication apparatus to perform uplink transmission on the CG resource by using the first beam and a transmit power used by the communication apparatus to perform uplink transmission on the DG resource by using the first beam does not exceed a third threshold; or a sum of a transmit power used by the communication apparatus to perform uplink transmission on the CG resource by using the second beam and a transmit power used by the communication apparatus to perform uplink transmission on the DG resource by using the first beam does not exceed a third threshold;
the first beam corresponds to a first panel, the second beam corresponds to a second panel, and the first panel and the second panel are two different panels; or
the first beam and the second beam are beams that are reported by the communication apparatus and that can be used for simultaneous transmission.

Based on the twenty-ninth aspect or the thirtieth aspect, in a possible implementation, the first beam corresponds to a first TRP, the second beam corresponds to a second TRP, and the first TRP and the second TRP are configured to provide services for the communication apparatus.

Based on the twenty-ninth aspect or the thirtieth aspect, in a possible implementation, the first beam corresponds to a first panel, the second beam corresponds to a second panel, and the first panel and the second panel are two different panels.

A thirty-first aspect of this application provides a communication apparatus, including:
a transceiver module, configured to: receive first DCI from a network device, where the first DCI is for activating a first resource of the communication apparatus and activating a first beam and a second beam; and if a first condition is met, perform uplink transmission on the first resource by using the first beam, and perform uplink transmission on the first resource by using the second beam.

Based on the thirty-first aspect, in a possible implementation, the transceiver module is further configured to:
If the first condition is not met, perform uplink transmission on the first resource by using a beam used by the communication apparatus to receive the first DCI.

Based on the thirty-first aspect, in a possible implementation, the first DCI further includes first indication information, and the first indication information indicates the communication apparatus to perform uplink transmission on the first resource by using the first beam and the second beam separately.

Based on the thirty-first aspect, in a possible implementation, the transceiver module is further configured to:
receive second DCI from the network device, where the second DCI is for updating the first beam and the second beam to a third beam and a fourth beam; and if a second condition is met, perform uplink transmission at the start of a next transmission cycle of a current transmission cycle of the first resource by using the third beam, and perform uplink transmission in the next transmission cycle of the current transmission cycle by using the fourth beam.

Based on the thirty-first aspect, in a possible implementation, the transceiver module is further configured to:
if the second condition is not met, perform uplink transmission at the start of the next transmission cycle of the current transmission cycle by using the 1^{st} beam indicated by the second DCI.

Based on the thirty-first aspect, in a possible implementation, the transceiver module is further configured to:
receive second DCI from the network device, where the second DCI is for updating the first beam and the second beam to a third beam and a fourth beam; and
if a second condition is met, and the communication apparatus receives third DCI from the network device, where the third DCI is for activating the first resource again, perform uplink transmission on the first resource at the start of a next transmission cycle of a current transmission cycle of the first resource by using the third beam, and perform uplink transmission in the next transmission cycle of the current transmission cycle by using the fourth beam.

Based on the thirty-first aspect, in a possible implementation, the transceiver module is further configured to:
if the second condition is not met, and the communication apparatus receives third DCI from the network device, where the third DCI is for activating the first resource again, perform uplink transmission on the first resource at the start of the next transmission cycle of the current transmission cycle of the first resource by using the 1^{st} beam indicated by the second DCI.

Based on the thirty-first aspect, in a possible implementation, the first condition includes:
a transmit power used by the communication apparatus to perform uplink transmission on the first resource by using the first beam is greater than a first threshold;
a transmit power used by the communication apparatus to perform uplink transmission on the first resource by using the second beam is greater than a second threshold;
a sum of a transmit power used by the communication apparatus to perform uplink transmission on the first resource by using the first beam and a transmit power used by the communication apparatus to perform uplink transmission on the first resource by using the second beam does not exceed a third threshold;
the first beam corresponds to a first panel, the second beam corresponds to a second panel, and the first panel and the second panel are two different panels; or
the first beam and the second beam are beams that are reported by the communication apparatus and that can be used for simultaneous transmission.

Based on the thirty-first aspect, in a possible implementation, the second condition includes:
a transmit power used by the communication apparatus to perform uplink transmission on the first resource by using the third beam is greater than a first threshold;
a transmit power used by the communication apparatus to perform uplink transmission on the first resource by using the fourth beam is greater than a second threshold;
a sum of a transmit power used by the communication apparatus to perform uplink transmission on the first resource by using the third beam and a transmit power used by the communication apparatus to perform uplink transmission on the first resource by using the fourth beam does not exceed a third threshold;
the third beam corresponds to a third panel, the fourth beam corresponds to a fourth panel, and the third panel and the fourth panel are two different panels; or
the third beam and the fourth beam are beams that are reported by the communication apparatus and that can be used for simultaneous transmission.

Based on the thirty-first aspect, in a possible implementation, the first beam corresponds to a first TRP, the second beam corresponds to a second TRP, and the first TRP and the second TRP are configured to provide services for the communication apparatus.

Based on the thirty-first aspect, in a possible implementation, the first beam corresponds to a first panel, the second beam corresponds to a second panel, and the first panel and the second panel are two different panels.

A thirty-second aspect of this application provides a communication apparatus, including:
a transceiver module, configured to: receive DCI from a network device, where the DCI is for activating a first resource of the communication apparatus, the DCI includes a first SRI field and a second SRI field, and the first SRI field and the second SRI field jointly indicate a first beam and a second beam that are associated with the first resource, or the first SRI field indicates a first beam and the second SRI field indicates a second beam; and perform uplink transmission on the first resource by using the first beam, and perform uplink transmission on the first resource by using the second beam.

A thirty-third aspect of this application provides a communication apparatus, including:
a processing module, configured to: determine DCI, where the DCI is for activating a first resource of a terminal device, the DCI includes a first SRI field and a second SRI field, and the first SRI field and the second SRI field jointly indicate a first beam and a second beam that are associated with the first resource, or the first SRI field indicates a first beam and the second SRI field indicates a second beam; and send the DCI to the terminal device.

Based on the thirty-second aspect or the thirty-third aspect, in a possible implementation, the first beam and the second beam are used for simultaneous transmission.

Based on the thirty-second aspect or the thirty-third aspect, in a possible implementation, the first beam and the second beam form a simultaneous transmission beam pair, and the first SRI field and the second SRI field jointly indicate an index of the simultaneous transmission beam pair.

Based on the thirty-second aspect or the thirty-third aspect, in a possible implementation, beams separately indicated by the first SRI field and the second SRI field do not change a beam indicated by a unified TCI state; or a beam jointly indicated by the first SRI field and the second SRI field does not change a beam indicated by a unified TCI state.

Based on the thirty-second aspect, in a possible implementation, the first beam corresponds to a first TRP, the second beam corresponds to a second TRP, and the first TRP and the second TRP are configured to provide services for the communication apparatus.

Based on the thirty-third aspect, in a possible implementation, the first beam corresponds to a first TRP, the second beam corresponds to a second TRP, and the first TRP and the second TRP are configured to provide services for the terminal device.

Based on the thirty-second aspect or the thirty-third aspect, in a possible implementation, the first beam corresponds to a first panel, the second beam corresponds to a second panel, and the first panel and the second panel are two different panels.

A thirty-fourth aspect of this application provides a communication apparatus, including:
a processing module, configured to: determine a first waveform associated with a DG resource and a second waveform associated with a CG resource; and when the first waveform is different from the second waveform, determine, based on capability information of the communication apparatus, whether to discard the DG resource.

The DG resource is associated with a first beam, the CG resource is associated with a second beam, the first beam and the second beam are used for simultaneous transmission, and the CG resource and the DG resource overlap in time domain.

Based on the thirty-fourth aspect, in a possible implementation, the communication apparatus further includes a transceiver module.

The transceiver module is configured to send the capability information to a network device, where the capability information indicates whether the communication apparatus supports performing simultaneous uplink transmission by using different waveforms.

A thirty-fifth aspect of this application provides a communication apparatus, including:
a transceiver module, configured to receive capability information from a terminal device, where the capability information indicates whether the terminal device supports performing simultaneous uplink transmission by using different waveforms.

A thirty-sixth aspect of this application provides a communication apparatus, including:
a processing module, configured to determine a first resource, where the first resource is associated with a first beam; and
a transceiver module, configured to: if the first resource is associated with a power control parameter, perform uplink transmission on the first resource by using the power control parameter associated with the first resource; if the first beam is associated with a power control parameter, perform uplink transmission on the first resource by using the power control parameter associated with the first beam; if the first beam is associated with no power control parameter, and the first resource is associated with a power control parameter, perform uplink transmission on the first resource by using the power control parameter associated with the first resource; or if neither the first beam nor the first resource is associated with a power control parameter, perform uplink transmission on the first resource by using a preconfigured power control parameter.

A thirty-seventh aspect of this application provides a communication apparatus. The communication apparatus includes a processor. The processor is configured to invoke a computer program or computer instructions in a memory, so that the processor implements any implementation of any one of the first aspect to the eighteenth aspect.

Optionally, the communication apparatus further includes a transceiver, and the processor is configured to control the transceiver to receive or send a signal.

A thirty-eighth aspect of this application provides a communication apparatus. The communication apparatus includes a processor, and the processor is configured to perform any implementation of any one of the first aspect to the eighteenth aspect.

A thirty-ninth aspect of this application provides a computer program product including instructions. When the computer program product runs on a computer, the computer is enabled to perform any implementation of any one of the first aspect to the eighteenth aspect.

A fortieth aspect of this application provides a computer-readable storage medium, including computer instructions. When the instructions are run on a computer, the computer is enabled to perform any implementation of any one of the first aspect to the eighteenth aspect.

A forty-first aspect of this application provides a chip apparatus, including a processor, configured to invoke a computer program or computer instructions in a memory, so that the processor performs any implementation of any one of the first aspect to the eighteenth aspect.

Optionally, the processor is coupled to the memory through an interface.

A forty-second aspect of this application provides a communication system. The communication system includes the communication apparatus in the nineteenth aspect and the communication apparatus in the twentieth aspect; the communication system includes the communication apparatus in the twenty-second aspect and the communication apparatus in the twenty-third aspect; the communication system includes the communication apparatus in the twenty-fifth aspect and the communication apparatus in the twenty-sixth aspect; the communication system includes the communication apparatus in the twenty-seventh aspect and the communication apparatus in the twenty-eighth aspect; the communication system includes the communication apparatus in the thirty-second aspect and the communication apparatus in the thirty-third aspect; or the communication system includes the communication apparatus in the thirty-fourth aspect and the communication apparatus in the thirty-fifth aspect.

According to the foregoing technical solutions, it can be learned that embodiments of this application have the following advantages:
It can be learned from the foregoing technical solutions that the terminal device receives the first information from the network device. The first information indicates the one or more transmission parameters of the first resource. Then, the terminal device performs, based on the first information, uplink transmission on the first resource by using the corresponding TCI state. It can be learned from this that the first information indicates the one or more transmission parameters of the first resource. The terminal device may perform, based on the first information, uplink transmission on the first resource by using the corresponding TCI state. The TCI state corresponds to a beam. In this way, the terminal device correctly performs uplink transmission on the first resource by using a corresponding TCI state. This implements correct transmission between the terminal device and a network device, and improves communication transmission performance.

### BRIEF DESCRIPTION OF DRAWINGS

FIG. 1 is a diagram of a communication system to which an embodiment of this application is applied;
FIG. 2 is another diagram of a communication system to which an embodiment of this application is applied;
FIG. 3 is a diagram of a scenario to which a method is applicable according to an embodiment of this application;
FIG. 4 is a diagram of a scenario to which a method is applicable according to an embodiment of this application;
FIG. 5 is a diagram of indicating a common beam by a network device to a terminal device according to an embodiment of this application;
FIG. 6 is a diagram of a signaling format of a MAC CE according to an embodiment of this application;
FIG. 7A is a first diagram of an uplink transmission method according to an embodiment of this application;
FIG. 7B is a diagram of a first resource according to an embodiment of this application;
FIG. 8 is a second diagram of an uplink transmission method according to an embodiment of this application;
FIG. 9 is a third diagram of an uplink transmission method according to an embodiment of this application;
FIG. 10A is a fourth diagram of an uplink transmission method according to an embodiment of this application;
FIG. 10B is a diagram of a first resource and a second resource according to an embodiment of this application;
FIG. 10C is another diagram of a first resource and a second resource according to an embodiment of this application;
FIG. 11A is a fifth diagram of an uplink transmission method according to an embodiment of this application;
FIG. 11B is a diagram of a CG resource and a DG resource according to an embodiment of this application;
FIG. 11C is another diagram of a CG resource and a DG resource according to an embodiment of this application;
FIG. 12 is a sixth diagram of an uplink transmission method according to an embodiment of this application;
FIG. 13 is a seventh diagram of an uplink transmission method according to an embodiment of this application;
FIG. 14 is an eighth diagram of an uplink transmission method according to an embodiment of this application;
FIG. 15A is a ninth diagram of an uplink transmission method according to an embodiment of this application;
FIG. 15B is another diagram of a first resource according to an embodiment of this application;
FIG. 16 is a tenth diagram of an uplink transmission method according to an embodiment of this application;
FIG. 17 is an eleventh diagram of an uplink transmission method according to an embodiment of this application;
FIG. 18 is a first diagram of a structure of a communication apparatus according to an embodiment of this application;
FIG. 19 is a second diagram of a structure of a communication apparatus according to an embodiment of this application;
FIG. 20 is a third diagram of a structure of a communication apparatus according to an embodiment of this application;
FIG. 21 is a fourth diagram of a structure of a communication apparatus according to an embodiment of this application;
FIG. 22 is a diagram of a structure of a terminal device according to an embodiment of this application; and
FIG. 23 is a diagram of a structure of a network device according to an embodiment of this application.

### DESCRIPTION OF EMBODIMENTS

This application provides an uplink transmission method and a related apparatus, so that a terminal device correctly performs uplink transmission on a first resource by using a corresponding TCI state. This implements correct transmission between the terminal device and a network device, and improves communication transmission performance.

The following describes technical solutions of this application with reference to accompanying drawings.

The technical solutions in this application may be applied to various communication systems, for example, a 5G system, a new radio (new radio, NR) system, a long term evolution (long term evolution, LTE) system, a long term evolution frequency division duplex (long term evolution frequency division duplex, LTE FDD) system, a long term evolution time division duplex (long term evolution time division duplex, LTE TDD) system, a universal mobile telecommunications system (universal mobile telecommunication system, UMTS), a mobile communication system (for example, a 6G mobile communication system) after a 5G network, or a vehicle to everything (vehicle to everything, V2X) communication system.

The communication system to which this application is applicable includes a network device and a terminal device. The network device and the terminal device may perform communication transmission by using a beam.

The following describes the terminal device and the network device in this application.

The terminal device may be a wireless terminal device that can receive scheduling and indication information of a network device. The terminal device may be a device that provides a user with voice and/or data connectivity, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper robot, a speaker, a set-top box, or the like.

The network device may be a device in a wireless network. For example, the network device may be a device that is deployed in a radio access network and that provides a wireless communication function for a terminal device. For example, the network device may be a radio access network (radio access network, RAN) node that connects a terminal device to a wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or an access point (access point, AP), a wireless relay node, a wireless backhaul node, a transmission point (transmission point, TP), or a TRP in a wireless fidelity (wireless fidelity, Wi-Fi) system. Alternatively, the network device may be a network device in a 5G mobile communication system, for example, a next generation NodeB (next generation NodeB, gNB), a TRP or a TP in an NR system, or one antenna panel or one group of antenna panels (including a plurality of antenna panels) of a base station in a 5G mobile communication system. Alternatively, the network device may be a network node that forms a gNB or a transmission point, for example, a BBU or a distributed unit (distributed unit, DU).

In some deployments, a gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of an RRC layer and a packet data convergence protocol (packet data convergence protocol, PDCP) layer. The DU is responsible for processing a physical layer protocol and a real-time service, and performing functions of a radio link control (radio link control, RLC) layer, a MAC layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN, or a network device in a core network (core network, CN). This is not limited in this application.

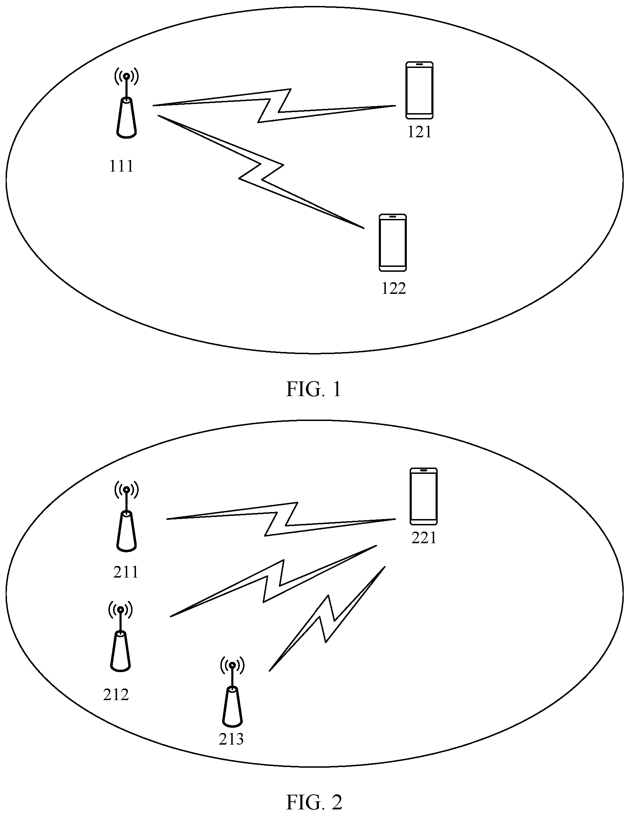

For ease of understanding the technical solutions in embodiments of this application, the following shows, with reference to FIG. 1 and FIG. 2, two possible communication systems to which the method provided in embodiments of this application is applicable.

FIG. 1 is a diagram of a communication system according to an embodiment of this application. As shown in FIG. 1, the communication system includes at least one network device, for example, a network device 111 shown in FIG. 1. The communication system further includes at least one terminal device, for example, a terminal device 121 and a terminal device 122 shown in FIG. 1. The network device 111 may perform transmission with the terminal device 121 and the terminal device 122 by using beams.

FIG. 2 is another diagram of a communication system according to an embodiment of this application. As shown in FIG. 2, the communication system may include at least two network devices, for example, a network device 211, a network device 212, and a network device 213 shown in FIG. 2. The communication system further includes at least one terminal device, for example, a terminal device 221 shown in FIG. 2. The terminal device 221 may be provided with communication services by a plurality of network devices. For example, as shown in FIG. 2, the network device 211 may perform transmission with the terminal device 221 by using a beam 1, the network device 212 may perform transmission with the terminal device 221 by using a beam 2, and the network device 213 may perform transmission with the terminal device 221 by using a beam 3. In other words, a plurality of network devices may provide a communication service for one terminal device.

The following describes two possible scenarios to which this application is applicable. This application is also applicable to other scenarios, and a scenario in the following example does not constitute a limitation on this application.

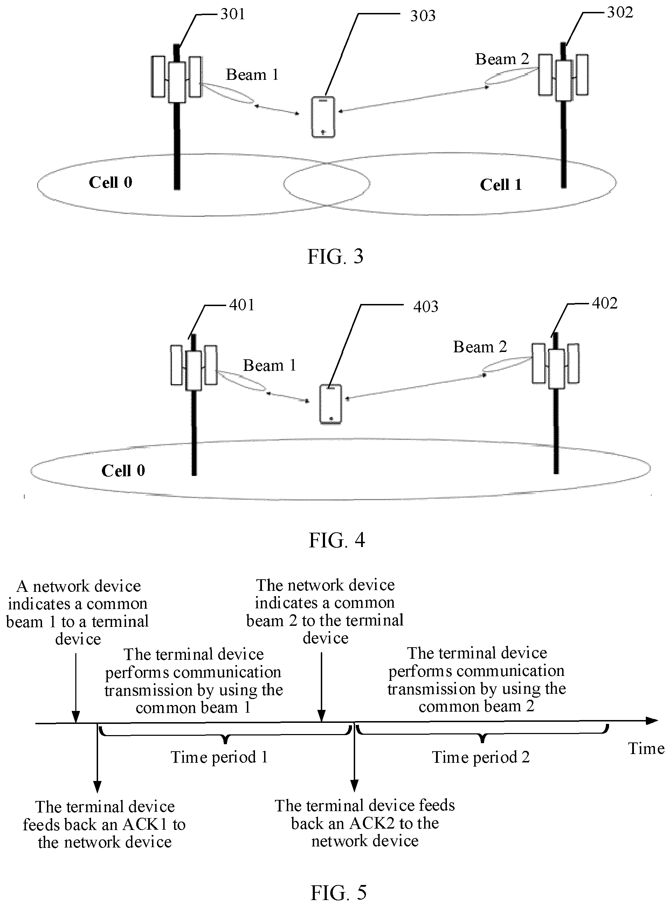

FIG. 3 is a diagram of a scenario to which an uplink transmission method is applicable according to an embodiment of this application. Refer to FIG. 3. The communication system includes a TRP 301, a TRP 302, and a terminal device 303. A cell 0 is a serving cell of the terminal device 303, and a cell 1 is a non-serving cell of the terminal device. The terminal device measures a beam signal of the cell 1 (non-serving cell), and reports a measurement result to the cell 0. The terminal device 303 may switch from a beam 1 to a beam 2 based on a network side configuration, but the terminal device 303 does not switch the serving cell. The terminal device 303 may receive downlink information from the TRP 302 by using the beam 2. It may be understood that the terminal device 303 receives a downlink signal from an antenna of the non-serving cell, but the serving cell of the terminal device 303 remains unchanged. For the terminal device 303, the serving cell is not switched, and only a beam for receiving a signal is from the cell 1. A configuration (for example, a time-frequency resource) for receiving a signal by the terminal device does not change. The scenario shown in FIG. 3 may be referred to as an inter-cell multi-TRP transmission scenario of a terminal device.

FIG. 4 is another diagram of a scenario to which an uplink transmission method is applicable according to an embodiment of this application. Refer to FIG. 4. The communication system includes a TRP 401, a TRP 402, and a terminal device 403. A cell 0 is a serving cell of the terminal device 403. A beam 1 is a serving beam of the terminal device 403, and a beam 2 is a non-serving beam of the terminal device 403. The terminal device 403 may measure a reference signal sent by the TRP 402 by using the beam 2, and report a measurement result to the TRP 1. The terminal device 403 may switch from the beam 1 to the beam 2 based on a network side configuration. The terminal device 403 may receive downlink information from the TRP 402 by using the beam 2. The scenario shown in FIG. 4 may be referred to as an intra-cell multi-TRP transmission scenario of a terminal device.

It should be noted that when a TRP provides a service for a terminal device, the network device in this application may be understood as the TRP, or a logical device including the TRP. When a plurality of TRPs provide services for a terminal device, the network device in this application may be understood as one of the plurality of TRPs, or a logical device including the plurality of TRPs. This is not specifically limited in this application. The method provided in this application may be performed between the network device and the terminal device. A form of the network device is not described below.

To facilitate understanding of the technical solutions in this application, the following describes some technical terms used in this application.
1. Beam (beam): The beam is a communication resource. The beam may be a wide beam, a narrow beam, or a beam of another type, and a technology for forming a beam may be a beamforming technology or another technical means. The beamforming technology may be specifically a digital beamforming technology, an analog beamforming technology, and a hybrid digital/analog beamforming technology. Different beams may be considered as different resources.

In the NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a TCI-state parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state and a downlink TCI-state), a spatial relation, or the like. The foregoing terms are also equivalent to each other. Alternatively, the beam may be replaced with another term for representing a beam. This is not limited in this application.

A transmitting end may send same information or different information by using different beams. Optionally, a plurality of beams having a same or similar communication feature may be considered as one beam. One beam may include one or more antenna ports, configured to transmit a data channel, a control channel, a sounding signal, and the like. An uplink transmission beam may be indicated by using any one of the spatial relation, the TCI-state, and an SRS resource (indicating a transmission beam using the SRS). Therefore, the uplink transmission beam may alternatively be replaced with the SRS resource.

A beam for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting).

A beam for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, a transmission beam may refer to signal strength distribution formed in different directions in space after a signal is transmitted through an antenna, and a reception beam may refer to signal strength distribution in different directions in space of a radio signal received from an antenna. It may be understood that one or more antenna ports forming one beam may also be considered as one antenna port set.

When a low frequency band or an intermediate frequency band is used, a transmitting end may send signals in an omnidirectional manner or at a wide angle. When a high frequency band is used, because of a small carrier wavelength of a high frequency communication system, an antenna array formed by many antenna elements may be disposed at a transmitting end and a receiving end. The transmitting end sends a signal by using a specific beamforming weight, so that the sent signal forms a spatially directional beam, and the receiving end receives the signal by using the antenna array based on a specific beamforming weight. This helps improve receive power of a signal at the receiving end and resist a path loss.

2. Quasi-co-location (quasi-co-location, QCL): A quasi-co-location relationship indicates that a plurality of resources have one or more same or similar communication features. Same or similar communication configurations may be used for a plurality of resources having a quasi-co-location relationship. For example, if two antenna ports have a quasi-co-location relationship, a large-scale channel characteristic of transmitting one symbol by one port may be deduced from a large-scale channel characteristic of transmitting one symbol by the other port. The large-scale property may include delay spread, an average delay, Doppler spread, a Doppler frequency shift, an average gain, a receive parameter, a reception beam number of a terminal device, transmit/receive channel correlation, an angle of arrival, spatial correlation of a receiver antenna, a dominant angle of arrival (Angel-of-Arrival, AoA), an average angle of arrival, AoA spread, and the like. Specifically, a co-location indication indicates whether at least two groups of antenna ports have a co-location relationship, including: The co-location indication indicates whether channel state information-reference signals sent by the at least two groups of antenna ports are from a same transmission point, or the co-location indication indicates whether channel state information-reference signals sent by the at least two groups of antenna ports are from a same beam group.

3. TCI: The TCI also referred to as a TCI state (TCI-State). As specified in a communication protocol, QCL is configured by using a TCI state. A parameter of the TCI state is for configuring a quasi-co-location relationship between one or two downlink reference signals and a demodulation reference signal (demodulation reference signal, DMRS) of a physical downlink shared channel (physical downlink shared channel, PDSCH). The DCI may include a TCI field, and the TCI field is a field that is in the DCI and that indicates PDSCH antenna port quasi-co-location.

The TCI is configured by a network device for a terminal device by using an RRC message, and is referred to as a TCI state in configuration signaling. After the network device configures TCI states for the terminal device by using the RRC message, the network device may send a MAC-CE to the terminal device. The MAC is for activating one or more TCI states in the TCI states configured by the network device for the terminal device. Optionally, the network device may further send DCI to the terminal device. The DCI indicates a TCI state in the TCI states activated by the MAC CE.

The TCI state includes one or two QCL relationships. The QCL relationship represents a specific consistency relationship between a signal/channel to be received currently and a previously known reference signal. If there is a QCL relationship, the terminal device may receive or send an upcoming signal/channel by inheriting a receiving or sending parameter used for previously receiving or sending a reference signal. Each TCI state corresponds to one beam. The terminal device may perform communication transmission by using the beam.

The following describes the configuration, activation, and indication of the TCI state.

TCI state configuration: The network device configures a plurality of TCI states for the terminal device by using RRC signaling. Each of these TCI states includes quasi-co-location information (QCL-Info) whose type is a type D (type D). Alternatively, the network device may configure a TCI-state that does not include the QCL-info whose type is the type D. However, the TCI-states do not indicate a data transmission beam. Therefore, details are not further described herein.

TCI state activation: After configuring the plurality of TCI states, the network device further needs to activate eight TCI states in the TCI states by using the MAC-CE. The eight TCI states are in one-to-one correspondence with eight values of the TCI field in the DCI. In other words, the eight TCI states corresponding to the eight values of the TCI field in the DCI are determined based on the MAC CE.

TCI-state indication: The network device indicates a specific TCI-state by using the TCI field in the DCI. For example, a value of the TCI field in the DCI sent by the network device to the terminal device is 000, indicating that a TCI-state corresponding to 000 is used for the data transmission beam. A reference signal included in the QCL-Info whose type is the type D in the TCI state is a channel state information-reference signal (channel state information-reference signal, CSI-RS) whose index is #1, indicating that a beam used for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data using the corresponding reception beam.

It should be noted that the two descriptions, namely, the TCI-state and the TCI state, in this specification may be interchanged.

4. Common beam: Currently, each channel is indicated by using an independent beam. Each channel has its own corresponding beam. In this application, a common beam is defined, and is used for a plurality of uplink and/or downlink channels.

The common beam is a same beam used for one or more channels, one or more types of channels, one or more reference signals, and/or one or more types of reference signals. The channel includes but is not limited to at least one of the following: a physical downlink control channel (physical downlink control channel, PDCCH), a PDSCH, a physical uplink control channel (physical uplink control channel, PUCCH), a physical uplink shared channel (physical uplink shared channel, PUSCH), or a physical random access channel (physical random access channel, PRACH). The reference signal includes but is not limited to at least one of a synchronization signal and physical broadcast channel block (synchronization signal and physical broadcast channel block, SSB), a CSI-RS, a DMRS, a phase tracking reference signal (phase tracking reference signal, PTRS), a time-frequency tracking reference signal (tracking reference signal, TRS), a sounding reference signal (sounding reference signal, SRS), and the like.

A joint (joint) common beam is for transmission of at least one uplink channel or at least one uplink reference signal, and transmission of at least one downlink channel or at least one downlink reference signal, for example, a PDCCH, a PDSCH, a PUCCH, and a PUSCH. The joint common beam may also be referred to as an uplink and downlink common beam.

An uplink common beam is for transmission of a plurality of uplink channels, transmission of a plurality of types of uplink channels, and/or transmission of one or more uplink reference signals, for example, a PUCCH, a PUSCH, and an SRS.

A downlink common beam is for transmission of a plurality of downlink channels, transmission of a plurality of types of downlink channels, and/or transmission of one or more downlink reference signals, for example, a PDCCH, a PDSCH, and a CSI-RS.

Form of the common beam: The common beam may have a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (such as a path loss measurement reference signal resource, p0, or a closed loop index (closedLoopIndex)), and an identifier of a path loss reference signal.

Application scope of the common beam: The common beam may be cell-specific, that is, one common beam is for transmission of a plurality of channels in one cell. The common beam may be bandwidth part (bandwidth part, BWP)-specific, and is for transmission of a plurality of beams in one BWP. The common beam may also be cross-cell, that is, is for transmission of a plurality of channels of a plurality of cells. The plurality of cells may be a plurality of cells in one frequency band (band). The plurality of cells may also be a plurality of inter-band cells.

5. TCI mode: The TCI mode includes a joint (joint) mode and a separate (separate) mode. The joint mode means that a same beam is used for both uplink transmission and downlink transmission between a TRP and a terminal device. The separate mode means that different beams are used for uplink transmission between a TRP and a terminal device and downlink transmission between the TRP and the terminal device.

6. A control resource set indicates a set of frequency domain resources for PDCCH transmission, is a parameter configuration unit for the PDCCH transmission, and includes a PDCCH related configuration parameter. Each control resource set belongs to a corresponding control resource set pool, and each control resource set pool corresponds to one index (CORESETPoolIndex). A configuration parameter of the control resource set includes an index of a control resource set pool to which the control resource set belongs. Usually, in a multiple downlink control information (multiple downlink control Information, MDCI) scenario or a non-coherent joint transmission (non-coherent joint transmission, NCJT) scenario, each control resource set corresponds to one TRP, and different control resource sets may correspond to different TRPs. In other words, a terminal device receives, by using a control resource set corresponding to a TRP, a PDCCH sent by the TRP.

A network device divides, by using an RRC message, resources used by the terminal device to receive a PDCCH into two groups, and each group of resources is referred to as a control resource set (CORESET). Each control resource set is associated with one control resource set pool index (CORESETpool Index). Each control resource set pool may correspond to one TCI state. Therefore, the TCI state corresponding to the control resource set pool may be determined by using the control resource set pool index.

For ease of description, this is briefly described below as: One control resource set belongs to one control resource set pool, and a control resource set may be specifically indicated by using a control resource set pool index.

7. A configured grant (configured grant, CG) resource and a dynamic grant (dynamic grant, DG) resource are for transmission of a PUSCH of a terminal device.

The CG resource may be further classified into a Type1 configured grant (Type1 configured grant, Type1 CG) resource and a Type2 configured grant (Type2 configured grant, Type2 CG) resource.

The Type1 CG resource directly takes effect after being configured by a network device for a terminal device by using an RRC message. In other words, after the network device configures the Type1 CG resource for the terminal device, the Type1 CG resource may be directly used for uplink transmission. After the network device configures the Type2 CG resource for the terminal device by using the RRC message, the network device further needs to activate the Type2 CG resource by using DCI, so that the Type2 CG resource can be used for uplink transmission. For the DG resource, the network device may dynamically schedule, by using the DCI, the terminal device to perform uplink transmission by using the DG resource.

8. DCI in a first format is for activating a CG resource, where the DCI in the first format includes an SRI field. For example, the DCI in the first format is for activating a Type2 CG resource. Optionally, the DCI in the first format may be referred to as DCI 0_1.

9. DCI in a second format is for activating a CG resource, where the DCI in the second format does not include an SRI field. For example, the DCI in the second format is for activating the Type2 CG resource. Optionally, the DCI in the second format may be referred to as DCI 0_0.

10. DCI in a third format and DCI in a fourth format may be both used by the network device to indicate a beam to the terminal device. Optionally, the DCI in the third format may be referred to as DCI 1_1, and the DCI in the fourth format may be referred to as DCI 1_2.

11. Waveform: Two types of waveforms, namely, orthogonal frequency division multiplexing (orthogonal frequency division multiplexing, OFDM) and discrete Fourier transform spread orthogonal frequency division multiplexing (discrete fourier transform spreading orthogonal frequency division multiplexing, DFT-s-OFDM), are included.

OFDM divides a channel into several orthogonal sub-channels (or sub-carriers), converts a high-speed data stream into parallel low-speed sub-data streams, and modulates the data streams to each sub-channel for transmission. Because sub-channels are orthogonal to each other, mutual interference between the sub-channels can be reduced. Compared with a traditional FDM system, the OFDM system solves a problem of intersymbol interference caused by a multipath effect.

DFT-s-OFDM is an LTE uplink signal generation manner. Because additional discrete Fourier transform (discrete fourier transform, DFT) processing is included in DFT-s-OFDM before a conventional OFDM processing process, DF T-s-OFDM may also be referred to as a linear precoding OFDM technology. Compared with OFDM, DFT-s-OFDM has a lower peak-to-average power ratio (peak-to-average power ratio, PAPR). This helps improve power transmit efficiency of the terminal device, and has a better uplink coverage capability.

12. Simultaneous transmission beam pair: A terminal device may perform simultaneous transmission by using two beams, and the two beams may form a simultaneous transmission beam pair. Each simultaneous transmission beam pair may correspond to one index.

The following describes a process in which a network device indicates a common beam to a terminal device.

FIG. 5 is a diagram of indicating a common beam by a network device to a terminal device according to an embodiment of this application. Refer to FIG. 5. The network device may indicate a common beam 1 to the terminal device by using DCI 1. After the terminal device receives the DCI 1, the terminal device may feed back an acknowledgment 1 (acknowledge, ACK1) to the network device. Then, the terminal device may perform communication transmission with the network device by using the common beam 1. The network device sends DCI 2 to the terminal device, where the DCI 2 indicates a common beam 2. In this case, after the terminal device receives the DCI 2, the terminal device may feed back an ACK2 to the network device. Then, the terminal device may perform communication transmission with the network device by using the common beam 2. The common beam 1 and the common beam 2 may be downlink common beams, uplink common beams, or uplink and downlink common beams.

In other words, the terminal device uses only one common beam of a same type. When the network device indicates a plurality of common beams of a same type, the terminal device uses only a latest common beam of the same type that is indicated. However, the terminal device may use a plurality of common beams of different types. For example, the terminal device performs uplink transmission by using one uplink common beam, and the terminal device performs downlink transmission by using one downlink common beam.

In release 17 (release 17, R17), a TCI state is classified into two types, which are specifically a joint/downlink transmission configuration indicator (joint/downlink transmission configuration indicator, joint/DL TCI) state and an uplink transmission configuration indicator (joint/downlink transmission configuration indicator, UL TCI) state. The terminal device may be configured with both the joint/DL TCI state and the UL TCI state. A maximum of 128 joint/DL TCI states and a maximum of 64 UL TCI states can be configured.

The network device may configure, by using a serving cell configuration (serving cell config), a TCI mode for a serving cell in which the terminal device is located. In other words, the network device configures the TCI mode for the terminal device at a cell level. When a plurality of TRPs provide services for the terminal device, the terminal device performs communication transmission with all TRPs by using a same TCI mode. For the TCI mode, refer to related descriptions of the foregoing technical terms.

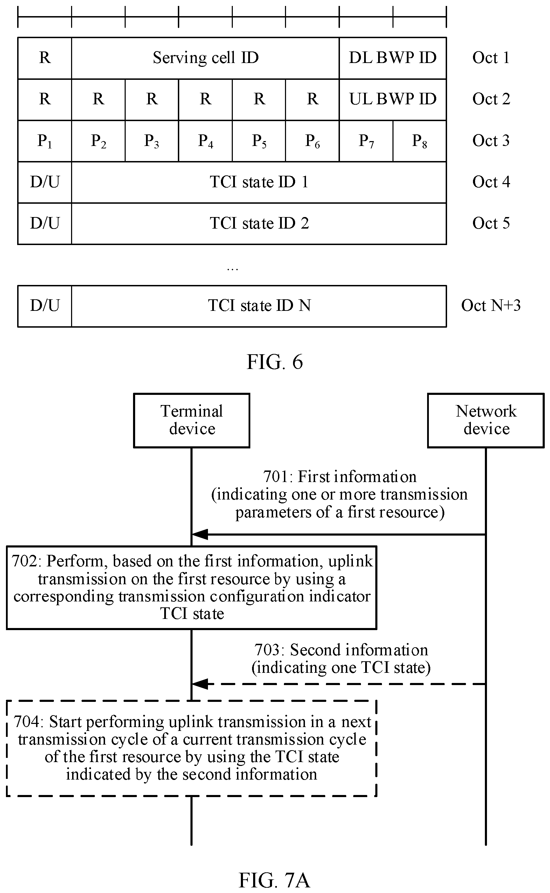

The network device may indicate one or more beams to the terminal device by using a MAC CE. The one or more beams may be referred to as common beams. The following describes a diagram of a possible signaling format of a MAC CE with reference to FIG. 6.

FIG. 6 is a diagram of a signaling format of a MAC CE according to an embodiment of this application. Refer to FIG. 6. The MAC CE is for activating one or more TCI states. Each TCI state corresponds to one beam. Specifically, the MAC CE includes TCI state identifiers separately corresponding to the one or more TCI states.

The terminal device may determine, by determining a TCI mode configured by the network device for the terminal device, whether a joint/DL TCI state or a UL TCI state is activated by the MAC CE.

If the TCI mode configured for the terminal device is a joint mode, the terminal device may ignore a D/U field of the MAC CE. The terminal device may determine that the TCI state activated by the MAC CE is the joint/DL TCI state. The terminal device may use a beam corresponding to the joint/DL TCI state as a beam used by the terminal device to perform uplink and downlink transmission. The beam corresponding to the joint/DL TCI state may be understood as the uplink and downlink common beam described above.

If the TCI mode configured for the terminal device is a separate mode, the terminal device may determine, based on a value of the D/U field of the MAC CE, a type of at least one TCI state activated by the MAC CE. For example, as shown in FIG. 6, if a value of a D/U field in a row to which Oct4 in the MAC CE belongs is 0, the terminal device may determine that last 7 bits in the row to which Oct4 belongs indicate a UL TCI state. If a value of a D/U field in a row to which Oct 5 in the MAC CE belongs is 1, the terminal device may determine that the last 7 bits in the row to which Oct 5 belongs indicate a joint/DL TCI state.

The terminal device uses a beam corresponding to the UL TCI state as a beam used by the terminal device to perform uplink transmission. The beam corresponding to the UL TCI state may be understood as the uplink common beam described above. The terminal device uses a beam corresponding to the joint/DL TCI state as a beam used by the terminal device to perform downlink transmission. The beam corresponding to the joint/DL TCI state may be understood as the downlink common beam described above.

The following describes a multiple transmission and reception point (multiple transmission and reception point, mTRP) technology.

The mTRP technology is a transmission technology similar to long term evolution coordinate multi-point (long term evolution coordinate multi-point, LTE CoMP), that is, allows a network to transmit data for a user or provide services for a user by using a plurality of nodes (that is, a plurality of TRPs). The plurality of nodes may be a plurality of antennas, a plurality of stations, or a plurality of transceiver units. This is not specifically limited in this application.

The network device indicates at least two common beams to the terminal device. Each common beam may be used by the terminal device to receive at least one of the following: a PDCCH, a PDSCH, and a CSI-RS, and/or each common beam may be used by the terminal device to send at least one of the following: a PUCCH, a PUSCH, and an SRS. Each common beam corresponds to one TRP.

In release 18 (release 18, R18), research is being performed on uplink multi-panel (panel) simultaneous transmission performed by a terminal device, for example, simultaneous transmission of two PUCCHs, simultaneous transmission of two PUSCHs, or simultaneous transmission of a PUCCH and a PUSCH.

In a communication protocol, a resource for PUSCH transmission includes a configured grant (configured grant, CG) resource and a dynamic grant (dynamic grant, DG) occupation. For the CG resource and the DG resource, refer to related descriptions of the foregoing technical terms. The network device may configure a CG resource for the terminal device. The network device may configure a DG resource for the terminal device, and activate the DG resource by using DCI.

It can be learned from the foregoing descriptions that the network device indicates one or more beams for the terminal device. The network device may configure or activate a resource, for example, a CG resource or a DG resource, for the terminal device. The terminal device may perform communication transmission on the resource by using a beam. However, a specific beam used by the terminal device to perform communication transmission on the resource is a problem worthy of consideration.

This application provides a corresponding technical solution, so that the terminal device correctly performs uplink transmission on the first resource by using a corresponding TCI state. This implements correct transmission between the terminal device and a network device, and improves communication transmission performance. For details, refer to following related descriptions of the embodiments shown in FIG. 7A, FIG. 8, and FIG. 9.

In this application, that a first beam and a second beam are used for simultaneous transmission may alternatively be that the first beam and the second beam form a simultaneous transmission beam pair. That a third beam and a fourth beam are used for simultaneous transmission may alternatively be that the third beam and the fourth beam form a simultaneous transmission beam pair.

In this application, optionally, the 1^{st} TCI state indicated by the network device to the terminal device may be understood as the 1^{st} TCI state indicated in indication signaling sent by the network device to the terminal device. In other words, in this application, an indication sequence in the indication signaling may be for defining a specific ordinal position of a TCI state indicated by the network device to the terminal device.

The technical solutions of this application are described below with reference to specific embodiments.

FIG. 7A is a diagram of an embodiment of an uplink transmission method according to an embodiment of this application. Refer to FIG. 7A. The method includes the following steps.

701: A network device sends first information to a terminal device. The first information indicates one or more transmission parameters of a first resource. Correspondingly, the terminal device receives the first information from the network device.

Optionally, the first information indicates one or two transmission parameters of the first resource.

For example, the one or more transmission parameters are one or more sounding reference signal resource indicator (srs-resource indicator) parameters. Each sounding reference signal resource indicator parameter includes at least one of the following: a codebook for transmitting an SRS, a precoding matrix, a quantity of layers, an antenna port, a modulation scheme, a waveform, and the like. Each transmission parameter may also be referred to as one group of transmission parameters, and one group of transmission parameters may include a plurality of configuration parameters used for transmission.

Optionally, the first information includes the one or more transmission parameters.

Optionally, the first information may be included in configuration information used by the network device to configure the first resource for the terminal device.

Optionally, the first information may be carried in an RRC message.

Optionally, if the first information indicates one transmission parameter of the first resource, it indicates that the network device indicates the terminal device to perform transmission in a single transmission and reception point (single transmission and reception point, STRP) transmission mode. If the first information indicates two transmission parameters of the first resource, it indicates that the network device indicates the terminal device to perform transmission in an mTRP transmission mode.

Optionally, the first resource is a CG resource. For example, the first resource is a Type1 CG resource.

Optionally, the first resource may be a periodic resource, and the first resource corresponds to a plurality of transmission cycles.

702: The terminal device performs, based on the first information, uplink transmission on the first resource by using a corresponding TCI state.

Optionally, the uplink transmission includes PUSCH transmission and/or PUCCH transmission. This is not specifically limited in this application.

The following describes some possible implementations of step 702 based on the first information.
1. The first information indicates two transmission parameters.

Based on this implementation, the following describes a possible implementation of step 702. Optionally, step 702 specifically includes:

The terminal device performs uplink transmission in a first transmission cycle of the first resource by using a first TCI state, and performs uplink transmission in a second transmission cycle of the first resource by using a second TCI state.

The first transmission cycle is a transmission cycle that is on the first resource and that corresponds to a first transmission parameter in the two transmission parameters. The second transmission cycle is a transmission cycle that is on the first resource and that corresponds to a second transmission parameter in the two transmission parameters.

The first TCI state and the second TCI state are indicated by the network device to the terminal device.

The following describes some possible implementations of the first TCI state and the second TCI state.
(1) The first TCI state is a TCI state corresponding to a control resource set 0 of the terminal device, and the second TCI state is a TCI state corresponding to a control resource set 1 of the terminal device.
(2) The first TCI state is the 1^{st} TCI state indicated by an SRI field in DCI sent by the network device to the terminal device, and the second TCI state is the 2^{nd} TCI state indicated by the SRI field in the DCI.

Optionally, the DCI includes two SRI fields, where the 1^{st} SRI field indicates the first TCI state, and the 2^{nd} SRI field indicates the second TCI state. The first TCI state may be understood as a TCI state that is in a TCI state indicated by the SRI field in the DCI and that is of a higher order, and the second TCI state may be understood as a TCI state that is in the TCI state indicated by the SRI field in the DCI and that is of a lower order.
(3) The first TCI state is a TCI state indicated by the 1^{st} TCI field in DCI sent by the network device to the terminal device, and the second TCI state is a TCI state indicated by the 2^{nd} TCI field in the DCI.
(4) The first TCI state is a TCI state indicated by a first MAC CE sent by the network device to the terminal device, and the second TCI state is a TCI state indicated by a second MAC CE sent by the network device to the terminal device.

A first field in the first MAC CE indicates that the TCI state indicated by the first MAC CE is the first TCI state. A second field in the second MAC CE indicates that the TCI state indicated by the second MAC CE is the second TCI state.

For example, if a value of the first field in the first MAC CE is 0, it indicates that the first MAC CE indicates the first TCI state. If a value of the second field in the second MAC CE is 1, it indicates that the second MAC CE indicates the second TCI state.
(5) The first TCI state corresponds to a first beam, and the second TCI state corresponds to a second beam. The first beam and the second beam are two different beams.
(6) The first TCI state corresponds to a first TRP, the second TCI state corresponds to a second TRP, and the first TRP and the second TRP are two different TRPs. The first TRP and the second TRP may provide services for the terminal device.
(7) The first TCI state is the 1^{st} TCI state indicated by the network device to the terminal device. The second TCI state is the 2^{nd} TCI state indicated by the network device to the terminal device.

Optionally, the first TCI state corresponds to a first beam, and the second TCI state corresponds to a second beam. In other words, the first beam is the 1^{st} beam indicated by the network device to the terminal device, and the second beam is the 2^{nd} beam indicated by the network device to the terminal device.

Optionally, the first transmission parameter is the 1^{st} transmission parameter configured by the network device for the terminal device, and the second transmission parameter is the 2^{nd} transmission parameter configured by the network device for the terminal device. For example, the first transmission parameter may be a transmission parameter whose configuration is of a higher order in the two transmission parameters configured in the first information, and the second transmission parameter may be transmission whose configuration is of a lower order in the two transmission parameters configured in the first information. The first transmission parameter corresponds to the first TCI state, and the second transmission parameter corresponds to the second TCI state.

Step 702 may be alternatively described as: The terminal device performs uplink transmission in the first transmission cycle of the first resource by using the first beam corresponding to the first TCI state, and performs uplink transmission in the second transmission cycle of the first resource by using the second beam corresponding to the second TCI state.

For example, the first information indicates a transmission parameter 1 (namely, the first transmission parameter) and a transmission parameter 2 (namely, the second transmission parameter). A sequence number of a transmission cycle of the first resource corresponding to the transmission parameter 1 is {1, 2, 5, 6, 9, 10, ...}. The terminal device performs, in the transmission cycle whose sequence number is {1, 2, 5, 6, 9, 10, ...}, uplink transmission by using the first beam corresponding to the first TCI state. The transmission parameter 2 corresponds to a transmission cycle {3, 4, 7, 8, 11, 12...} of the first resource. The terminal device performs, in the transmission cycle whose sequence is {3, 4, 7, 8, 11, 12...}, uplink transmission by using the second beam corresponding to the second TCI state.

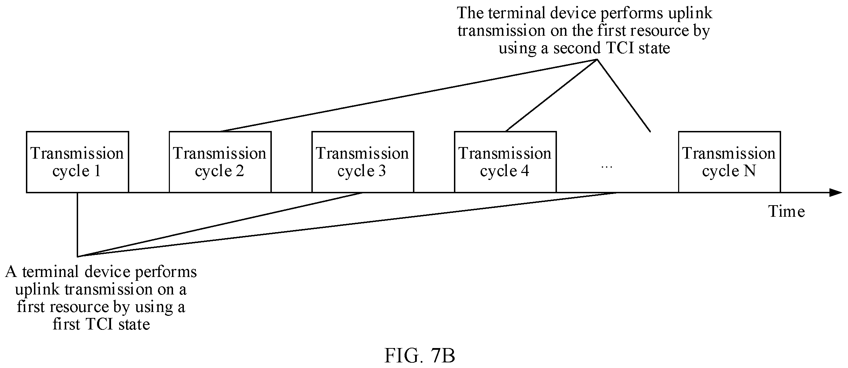

For example, the first information indicates a transmission parameter 1 (namely, the first transmission parameter) and a transmission parameter 2 (namely, the second transmission parameter). As shown in FIG. 7B, a sequence number of a transmission cycle of the first resource corresponding to the transmission parameter 1 is {1, 3, 5, 7, ...}. The terminal device performs uplink transmission in an odd-numbered transmission cycle of the first resource by using the first beam corresponding to the first TCI state. Optionally, the terminal device performs, based on the transmission parameter 1, uplink transmission in the odd-numbered transmission cycle of the first resource by using the first beam corresponding to the first TCI state. A sequence number of a transmission cycle of the first resource corresponding to the transmission parameter 2 is {2, 4, 6, 8, ...}. The terminal device performs uplink transmission in an even-numbered transmission cycle of the first resource by using the second beam corresponding to the second TCI state. Optionally, the terminal device performs, based on the transmission parameter 2, uplink transmission in the even-numbered transmission cycle of the first resource by using the second beam corresponding to the second TCI state.

In this implementation, in the mTRP transmission mode, the terminal device alternately performs uplink transmission with the two TRPs in a time division manner. For example, the terminal device performs uplink transmission with the first TRP in the odd-numbered transmission cycle of the first resource by using the first beam, and performs uplink transmission with the second TRP in the even-numbered transmission cycle of the first resource by using the second beam.

For example, as shown in FIG. 3, the first beam is a beam 1, and the second beam is a beam 2. The beam 1 corresponds to a TRP 301, and the beam 2 corresponds to a TRP 302. The terminal device performs uplink transmission with the TRP 301 in the odd-numbered transmission cycle of the first resource by using the beam 1, and performs uplink transmission with the TRP 302 in the even-numbered transmission cycle of the first resource by using the beam 2.

In this implementation, optionally, the embodiment shown in FIG. 7A further includes step 703 and step 704. Step 703 and step 704 may be performed after step 702.

703: The network device sends second information to the terminal device. The second information indicates one TCI state. Correspondingly, the terminal device receives the second information from the network device.

Optionally, the second information is carried in a MAC CE or DCI.

Specifically, before step 702, the network device has indicated the first TCI state and the second TCI state to the terminal device. In step 703, the network device may send the second information to the terminal device. The second information indicates one TCI state. In other words, the terminal device indicates the TCI state to the terminal device again. It may be understood as that the network device updates the first TCI state and the second TCI state to the TCI state indicated by the first indication information. The terminal device uses, as an updated beam, a beam corresponding to the TCI state indicated by the first indication information.

It can be learned that, if the network device indicates a single beam (for example, a beam corresponding to a joint/DL TCI state in a joint mode or a beam corresponding to a UL TCI state in a separate mode), it indicates that the network device indicates the terminal device to switch from the mTRP transmission mode to the STRP transmission mode. In this case, a transmission mode used by the terminal device on the first resource falls back to the STRP transmission mode.

Optionally, the TCI state indicated by the second information may be the same as the first TCI state or the second TCI state, or may be different from the first TCI state or the second TCI state. This is not specifically limited in this application.

704: The terminal device performs uplink transmission at the start of a next transmission cycle of a current transmission cycle of the first resource by using the TCI state indicated by the second information.

The current transmission cycle may be a transmission cycle in which a receiving moment corresponding to reception of the second information by the terminal device on the first resource is located.

For example, if the receiving moment corresponding to reception of the second information by the terminal device is in a transmission cycle 4, the current transmission cycle of the first resource is the transmission cycle 4, and a next transmission cycle of the transmission cycle 4 is a transmission cycle 5. As shown in FIG. 7B, in the example shown in step 702, the terminal device performs uplink transmission in the transmission cycle 4 of the first resource by using the second beam corresponding to the second TCI state. In this case, the terminal device performs transmission at the start of the transmission cycle 5 of the first resource by using the beam corresponding to the TCI state indicated by the second information.

Step 704 may alternatively be described as: The terminal device performs uplink transmission at the start of a next transmission cycle of a current transmission cycle of the first resource by using a beam corresponding to the TCI state indicated by the second information.

Optionally, the terminal device performs, based on a target transmission parameter, uplink transmission at the start of the next transmission cycle of the current transmission cycle of the first resource by using the TCI state indicated by the second information. The target transmission parameter is a transmission parameter that is configured by the network device for the first resource in the configuration information of the first resource.

Alternatively, step 704 may alternatively be described as: The terminal device performs, by using the TCI state indicated by the second information, uplink transmission at the start of a next transmission cycle of a transmission cycle in which an effective moment of the TCI state indicated by the second information is located on the first resource.

### 2. The first information indicates one transmission parameter.

Based on this implementation, the following describes several possible implementations of step 702.

Implementation 1: If the first information indicates one transmission parameter, and the first information does not include first identification information, the terminal device performs uplink transmission on the first resource by using a first TCI state; or if the first information indicates one transmission parameter, and the first information includes first identification information, the terminal device performs uplink transmission on the first resource by using a second TCI state.

The first TCI state and the second TCI state are indicated by the network device to the terminal device. The first TCI state corresponds to a first beam, and the second TCI state corresponds to a second beam.

Optionally, the first TCI state is the 1^{st} TCI state indicated by the network device to the terminal device. The second TCI state is the 2^{nd} TCI state indicated by the network device to the terminal device. In other words, the first beam is the 1^{st} beam indicated by the network device to the terminal device, and the second beam is the 2^{nd} beam indicated by the network device to the terminal device.

For example, if the first information indicates one transmission parameter, it indicates that the network device indicates the terminal device to perform transmission on the first resource in the STRP transmission mode. If the first information includes an identifier (flag), the terminal device performs uplink transmission by using, by default, a second beam corresponding to the 2^{nd} TCI state indicated by the network device; or it indicates that the network device indicates the terminal device to follow (follow) the 2^{nd} TCI state indicated by the network device. If the first information does not include the identifier (flag), the terminal device performs uplink transmission by using, by default, a first beam corresponding to the 1^{st} TCI state indicated by the network device; or it indicates that the network device indicates the terminal device to follow (follow) the 1^{st} TCI state indicated by the network device.

Implementation 2: If the first information indicates one transmission parameter, the terminal device performs uplink transmission by using a TCI state that corresponds to an SRS resource set associated with the transmission parameter and that is in at least one TCI state indicated by the network device to the terminal device.

The SRS resource set associated with the transmission parameter includes some configuration parameters, for example, a sending parameter, used by the terminal device to send an SRS. The TCI state that is in the at least one TCI state and that corresponds to the SRS resource set may be understood as a TCI state that is in the at least one TCI state and that is the same as a TCI state associated with an SRS resource included in the SRS resource set, or a TCI state that is in the at least one TCI state and whose QCL Type-D has a same reference signal with QCL Type-D of a TCI state associated with an SRS resource included in the SRS resource set, or a TCI state that is in the at least one TCI state and that has a quasi-co-location relationship with a beam associated with an SRS resource included in the SRS resource set.

Implementation 3: If the first information indicates one transmission parameter and the transmission parameter includes a control resource set pool index, the terminal device performs uplink transmission by using a TCI state corresponding to the control resource set pool index; or if the first information indicates one transmission parameter and the transmission parameter does not include a control resource set pool index, the terminal device performs uplink transmission on the first resource by using the 1^{st} TCI state indicated by the network device to the terminal device.

Implementation 3 may alternatively be described as: If the first information indicates one transmission parameter and the transmission parameter includes a control resource set pool index, the terminal device performs uplink transmission by using a beam of a TCI state corresponding to the control resource set pool index; or if the first information indicates one transmission parameter and the transmission parameter does not include a control resource set pool index, the terminal device performs uplink transmission on the first resource by using a beam corresponding to the 1^{st} TCI state indicated by the network device to the terminal device.

It should be noted that the control resource set pool index and the transmission parameter may be included in the first information in parallel, or the control resource set pool index is included in the configuration information of the first resource. This is not specifically limited in this application.

If the transmission parameter does not include the control resource set pool index, the terminal device performs uplink transmission by using, by default, a beam that corresponds to the 1^{st} TCI state indicated by the network device to the terminal device.

Optionally, any one of the following power control parameters is used when the terminal device performs uplink transmission on the first resource:
1. Power control parameter associated with a beam used by the terminal device to perform uplink transmission on the first resource
   If the beam used by the terminal device to perform uplink transmission on the first resource is associated with a power control parameter, the power control parameter may be used by the terminal device to perform uplink transmission on the first resource. For example, the first resource is a periodic resource. The terminal device may perform uplink transmission by using the power control parameter in at least one transmission cycle of the first resource. For example, the terminal device determines a transmit power based on the power control parameter. Then, the terminal device performs uplink transmission on the first resource by using the transmit power.
2. Power control parameter associated with the first resource
   If the beam used by the terminal device to perform uplink transmission on the first resource is associated with no power control parameter, and a corresponding power control parameter is configured in or associated with the configuration information of the first resource, the terminal device may perform uplink transmission on the first resource by using the power control parameter associated with the first resource. For example, the terminal device determines a transmit power based on the power control parameter associated with the first resource. The terminal device performs uplink transmission in a current transmission cycle of the first resource by using the power control parameter.
3. Pre-configured power control parameter
   If the beam used by the terminal device to perform uplink transmission on the first resource is associated with no power control parameter, and the first resource is associated with no power control parameter, the terminal device may perform uplink transmission on the first resource by using a preconfigured power control parameter.

Optionally, if the terminal device uses two beams to perform uplink transmission on the first resource, the terminal device performs uplink transmission on the first resource by using preconfigured power control parameters separately associated with the two beams.

Specifically, the terminal device uses the first beam and the second beam when performing uplink transmission on the first resource. The terminal device may perform uplink transmission on the first resource by using a preconfigured power control parameter associated with the first beam. The terminal device may perform uplink transmission on the first resource by using a preconfigured power control parameter associated with the second beam. The preconfigured power control parameter associated with the first beam and the preconfigured power control parameter associated with the second beam may be configured by the network device by using BWP configuration information. For example, the preconfigured power control parameter may be configured by the network device in uplink BWP configuration information. For example, the uplink BWP configuration information carries two sets of preconfigured power control parameters. The two sets of preconfigured power control parameters are separately compared with the first beam and the second beam according to a configuration sequence in the uplink BWP configuration information. For example, a power control parameter of a higher configuration order corresponds to the first beam, and a power control parameter of a lower configuration order corresponds to the second beam.

For example, in the mTRP transmission mode, the terminal device performs uplink transmission with a first TRP in an odd-numbered transmission cycle of the first resource by using the first beam, and performs uplink transmission with a second TRP in an even-numbered transmission cycle of the first resource by using the second beam. The terminal device may determine a transmit power 1 by using a preconfigured power control parameter 1. Then, the terminal device performs uplink transmission with the first TRP on the first resource by using the first beam and by using the transmit power 1. The terminal device may determine a transmit power 2 by using a preconfigured power control parameter 2. Then, the terminal device performs uplink transmission with the second TRP on the first resource by using the second beam and by using the transmit power 2.

It can be learned that the terminal device may determine, by using the foregoing technical solution, a beam used for uplink transmission on the first resource and a corresponding transmit power. Therefore, the terminal device correctly performs uplink transmission on the first resource by using a same beam, thereby facilitating correct transmission between the terminal device and the network device.

In this embodiment of this application, the terminal device receives the first information from the network device. The first information indicates the one or more transmission parameters of the first resource. Then, the terminal device performs, based on the first information, uplink transmission on the first resource by using the corresponding TCI state. It can be learned from this that the first information indicates the one or more transmission parameters of the first resource. The terminal device may perform, based on the first information, uplink transmission on the first resource by using the corresponding TCI state. The TCI state corresponds to a beam. Therefore, the terminal device correctly performs uplink transmission on the first resource by using the corresponding beam, thereby facilitating correct transmission between the terminal device and the network device. Communication transmission performance is improved.

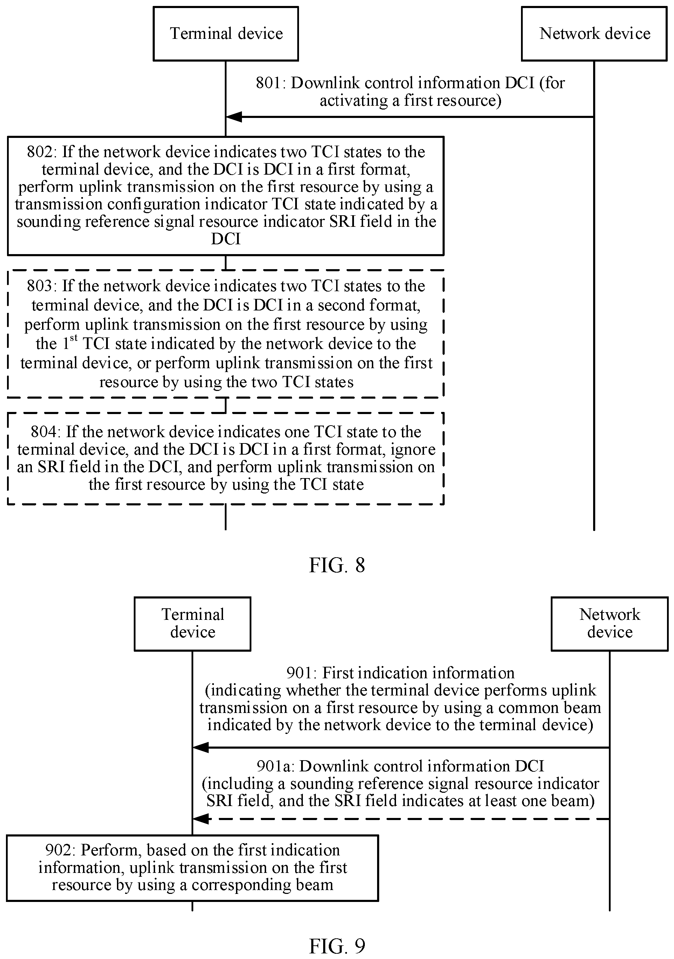

FIG. 8 is a diagram of another embodiment of an uplink transmission method according to an embodiment of this application. Refer to FIG. 8. The method includes the following steps.

801: A network device sends DCI to a terminal device. The DCI is for activating a first resource. Correspondingly, the terminal device receives the DCI from the network device.

In a possible implementation, the DCI is DCI in a first format. The DCI in the first format includes an SRI field. For example, the DCI may be DCI 0_1.

In this implementation, a TCI state indicated by the SRI field in the DCI belongs to two TCI states that have been indicated by the network device to the terminal device. For example, the network device has indicated two common beams to the terminal device. A beam corresponding to the TCI state indicated by the SRI field in the DCI belongs to the two common beams.

Optionally, if a value of the SRI field in the DCI is "00", it indicates that the network device indicates the terminal device to perform uplink transmission on the first resource by using the 1^{st} TCI state indicated by the network device to the terminal device. If the value of the SRI field in the DCI is "01", it indicates that the network device indicates the terminal device to perform uplink transmission on the first resource by using the 2^{nd} TCI state indicated by the network device to the terminal device. If the value of the SRI field in the DCI is "10" or "11", it indicates that the network device indicates the terminal device to perform uplink transmission on the first resource by using the two TCI states indicated by the network device to the terminal device.

In another possible implementation, the DCI is DCI in a second format. The DCI in the second format does not include an SRI field. For example, the DCI may be DCI 0_0.

Optionally, the first resource is a CG resource. For example, the first resource is a Type2 CG resource.

802: If the network device indicates two TCI states to the terminal device, and the DCI is DCI in a first format, the terminal device performs uplink transmission on the first resource by using a TCI state indicated by an SRI field in the DCI.

Optionally, the uplink transmission includes PUSCH transmission and/or PUCCH transmission.

Optionally, if a value of the SRI field in the DCI is "00", the terminal device performs uplink transmission on the first resource by using the 1^{st} TCI state indicated by the network device to the terminal device. If the value of the SRI field in the DCI is "01", the terminal device performs uplink transmission on the first resource by using the 2^{nd} TCI state indicated by the network device to the terminal device. If the value of the SRI field in the DCI is "10" or "11", it indicates that the terminal device performs uplink transmission on the first resource by using the two TCI states indicated by the network device to the terminal device.

Step 802 may alternatively be described as: If the network device indicates two TCI states to the terminal device, and the DCI is DCI in a first format, the terminal device performs uplink transmission on the first resource by using a beam corresponding to a TCI state indicated by an SRI field in the DCI.

Optionally, the embodiment shown in FIG. 8 further includes step 803 or step 804.

803: If the network device indicates two TCI states to the terminal device, and the DCI is DCI in a second format, the terminal device performs uplink transmission on the first resource by using the 1^{st} TCI state indicated by the network device to the terminal device, or the terminal device performs uplink transmission on the first resource by using the two TCI states.

For example, if the DCI is DCI 0_0, the terminal device may perform uplink transmission on the first resource by using, by default, the 1^{st} TCI state indicated by the network device to the terminal device. Alternatively, the terminal device may perform uplink transmission on the first resource by using the two TCI states by default.

Step 803 may alternatively be described as: If the network device indicates two TCI states to the terminal device, and the DCI is DCI in a second format, the terminal device performs uplink transmission on the first resource by using a beam corresponding to the 1^{st} TCI state indicated by the network device to the terminal device, or the terminal device performs uplink transmission on the first resource by using beams separately corresponding to the two TCI states.

804: If the network device indicates one TCI state to the terminal device, and the DCI is DCI in a first format, the terminal device ignores an SRI field in the DCI, and the terminal device performs uplink transmission on the first resource by using the TCI state.

Step 804 may alternatively be described as: If the network device indicates one TCI state to the terminal device, and the DCI is DCI in a first format, the terminal device ignores an SRI field in the DCI, and the terminal device performs uplink transmission on the first resource by using a beam corresponding to the TCI state.

It should be noted that if the network device indicates one TCI state to the terminal device, the terminal device performs uplink transmission on the first resource by using the TCI state. The terminal device does not need to determine, based on the DCI, a beam for uplink transmission on the first resource.

Optionally, for a power control parameter used when the terminal device performs uplink transmission on the first resource, refer to related descriptions in the embodiment shown in FIG. 7A. Details are not described herein again.

Optionally, if the terminal device uses two beams to perform uplink transmission on the first resource, the terminal device performs uplink transmission on the first resource by using preconfigured power control parameters separately associated with the two beams. For the preconfigured power parameters associated with the two beams, refer to related descriptions in the embodiment shown in FIG. 7A. Details are not described herein again.

It can be learned that the terminal device may determine, by using the foregoing technical solution, a beam used for uplink transmission on the first resource and a corresponding transmit power. Therefore, the terminal device correctly performs uplink transmission on the first resource by using a same beam, thereby facilitating correct transmission between the terminal device and the network device.

In this embodiment of this application, the terminal device receives the DCI from the network device. The DCI is for activating the first resource of the terminal device. If the network device indicates the two TCI states to the terminal device, and the DCI is the DCI in the first format, the terminal device performs uplink transmission on the first resource by using the TCI state indicated by the SRI field in the DCI, where the TCI state indicated by the SRI field belongs to the two TCI states. It can be learned that the terminal device may perform uplink transmission on the first resource by using the TCI state indicated by the SRI field in the DCI. The TCI corresponds to a beam. Therefore, the terminal device correctly performs uplink transmission on the first resource by using the corresponding beam, thereby facilitating correct transmission between the terminal device and the network device. Communication transmission performance is improved.

FIG. 9 is a diagram of another embodiment of an uplink transmission method according to an embodiment of this application. Refer to FIG. 9. The method includes the following steps.

901: A network device sends first indication information to a terminal device. The first indication information indicates whether the terminal device performs uplink transmission on a first resource by using a common beam indicated by the network device to the terminal device. Correspondingly, the terminal device receives the first indication information from the network device.

A function of the first indication information may alternatively be described as: The first indication information indicates whether uplink transmission of the terminal device on a first resource follows a common beam indicated by the network device to the terminal device.

Optionally, the first resource may be a CG resource. For example, the first resource is a Type2 CG resource.

Optionally, the first indication information may be included in configuration information of the first resource.

In this implementation, the network device may explicitly configure, in the configuration information of the first resource, whether the terminal device performs uplink transmission on the first resource by using the common beam indicated by the network device to the terminal device.

902: The terminal device performs, based on the first indication information, uplink transmission on the first resource by using a corresponding beam.

Optionally, the uplink transmission includes PUSCH transmission and/or PUCCH transmission.

If the first indication information indicates the terminal device to perform uplink transmission on the first resource by using the common beam, the terminal device performs uplink transmission on the first resource by using the common beam.

For example, if the network device indicates a beam 1 and a beam 2 to the terminal device, the terminal device may perform uplink transmission on the first resource by using the beam 1 and the beam 2 separately.

If the first indication information indicates the terminal device not to perform uplink transmission on the first resource by using the common beam, optionally, the embodiment shown in FIG. 9 further includes step 901a. Step 901a may be performed before step 902.

901a: The network device sends DCI to the terminal device. The DCI includes an SRI field, and the SRI field indicates at least one beam. Correspondingly, the terminal device receives the DCI from the network device.

The DCI is DCI in a first format. For example, the DCI is DCI 0_1.

The SRI field indicates at least one beam, and the at least one beam belongs to the common beam indicated by the network device to the terminal device, or the at least one beam and the common beam are different beams.

For example, when the at least one beam belongs to the common beam indicated by the network device to the terminal device, and a value of the SRI field in the DCI is "00", the SRI field indicates the 1^{st} beam indicated by the network device to the terminal device. When the value of the SRI field in the DCI is "01", the SRI field indicates the 2^{nd} beam indicated by the network device to the terminal device. If the value of the SRI field in the DCI is "10" or "11", the SRI field indicates two beams indicated by the network device to the terminal device.

Based on step 902a, optionally, step 902 specifically includes:
If the first indication information indicates the terminal device not to perform uplink transmission on the first resource by using the common beam, the terminal device receives the DCI from the network device, and the terminal device performs uplink transmission on the first resource by using the at least one beam indicated by the SRI field in the DCI.

For the DCI and the at least one beam, refer to the foregoing related descriptions.

For example, when the value of the SRI field in the DCI is "00", the SRI field indicates the 1^{st} beam indicated by the network device to the terminal device. Therefore, the terminal device may perform uplink transmission on the first resource by using the 1^{st} beam indicated by the network device to the terminal device.

For example, when the value of the SRI field in the DCI is "01", the SRI field indicates the 2^{nd} beam indicated by the network device to the terminal device. Therefore, the terminal device may perform uplink transmission on the first resource by using the 2^{nd} beam indicated by the network device to the terminal device.

For example, when the value of the SRI field in the DCI is "10" or "11", the SRI field indicates two beams indicated by the network device to the terminal device. Therefore, the terminal device may separately perform uplink transmission on the first resource by using the two beams indicated by the network device to the terminal device.

Optionally, for a power control parameter used when the terminal device performs uplink transmission on the first resource, refer to related descriptions in the embodiment shown in FIG. 7A. Details are not described herein again.

Optionally, if the terminal device uses two beams to perform uplink transmission on the first resource, the terminal device performs uplink transmission on the first resource by using preconfigured power control parameters separately associated with the two beams. For the preconfigured power control parameters associated with the two beams, refer to related descriptions in the embodiment shown in FIG. 7A. Details are not described herein again.

It can be learned that the terminal device may determine, by using the foregoing technical solution, a beam used for uplink transmission on the first resource and a corresponding transmit power. Therefore, the terminal device performs uplink transmission on the first resource by using a corresponding beam and transmit power. This implements correct transmission between the terminal device and the network device.

In this embodiment of this application, the terminal device receives the first indication information from the network device. The first indication information indicates whether the terminal device performs uplink transmission on the first resource by using the common beam indicated by the network device to the terminal device. The terminal device performs, based on the first indication information, uplink transmission on the first resource by using the corresponding beam. It can be learned that the network device may explicitly configure whether the terminal device follows the common beam indicated by the network device for the terminal device. Therefore, the terminal device correctly performs uplink transmission on the first resource by using the corresponding beam, thereby facilitating correct transmission between the terminal device and the network device. Communication transmission performance is improved.

Currently, the network device may configure or activate a plurality of resources for the terminal device. For example, the network device configures two resources for the terminal device, and the two resources overlap in time domain. In other words, the terminal device performs simultaneous transmission on two resources, and how the terminal device performs uplink transmission on the two resources is a problem worthy of consideration.

For example, the network device configures two CG resources for the terminal device, and the two CG resources overlap in time domain. How the terminal device performs uplink transmission on the two CG resources is a problem to be resolved in this application.

For example, the network device configures one CG resource for the terminal device. The network device schedules a DG resource of the terminal device, and the CG resource and the DG resource overlap in time domain. How the terminal device performs uplink transmission on the CG resource and the DG resource is a problem to be resolved in this application.

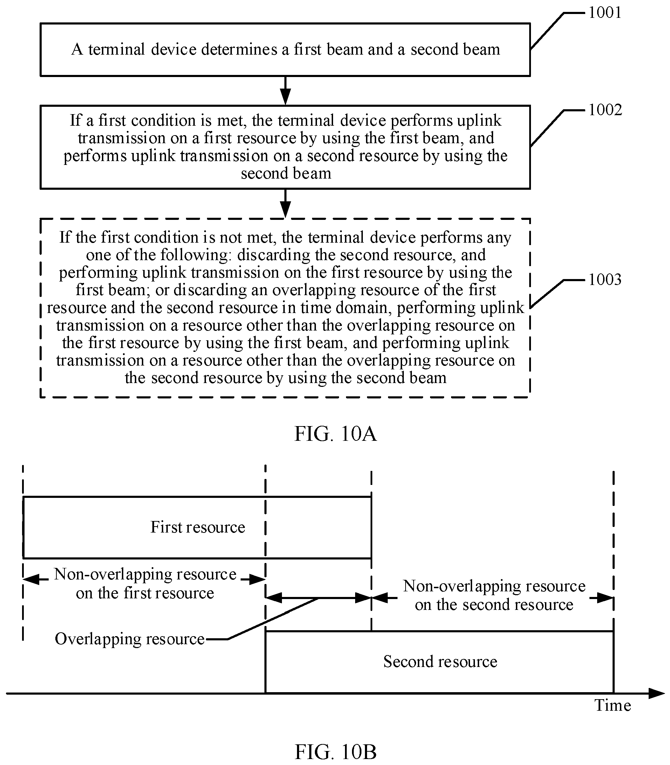

This application provides a corresponding technical solution, so that the terminal device determines transmission behavior on two resources that overlap in time domain. In this way, a problem that a conflict exists when the terminal device performs simultaneous transmission on two resources is resolved, thereby facilitating correct transmission between the terminal device and the network device, and improving communication transmission performance. For details, refer to the following related descriptions of embodiments shown in FIG. 10A, FIG. 11A, and FIG. 12.

FIG. 10A is a diagram of another embodiment of a transmission method according to an embodiment of this application. Refer to FIG. 10A. The method includes the following steps.

1001: A terminal device determines a first beam and a second beam.

The first beam is a beam associated with a first resource, and the second beam is a beam associated with a second resource.

Optionally, the uplink transmission includes PUSCH transmission and/or PUCCH transmission.

Optionally, the first beam and the second beam are used for simultaneous transmission. Optionally, at least one of the following may represent that the first beam and the second beam can be used for simultaneous transmission:
1. The first beam corresponds to a first panel of the terminal device, and the second beam corresponds to a second panel of the terminal device. The first panel and the second panel are two different panels.
   The terminal device cannot transmit two beams at a same moment by using a same panel. Therefore, if the first beam and the second beam are used for simultaneous transmission, the first beam and the second beam should be beams separately transmitted by the terminal device by using two different panels. In this way, the terminal device may perform uplink transmission on the first resource by using the first beam and the second beam at the same time.
2. A transmit power used by the terminal device to perform uplink transmission on the first resource by using the first beam is greater than a first threshold; or a transmit power used by the terminal device to perform uplink transmission on the first resource by using the first beam is greater than or equal to a first threshold.

For example, a value of the first threshold may be 23 dBm (decibel milliwatt).

Optionally, for a value design of the first threshold, refer to at least one of the following: channel quality between the terminal device and the network device, and a distance between the terminal device and the network device.

In this implementation, the transmit power used by the terminal device to perform uplink transmission on the first resource by using the first beam needs to be greater than a specific threshold. This ensures that strength of a signal that is sent by the terminal device on the first resource and that is received by the network device is greater than a specific threshold. In this way, the network device correctly receives the signal sent by the terminal device.

3. A transmit power used by the terminal device to perform uplink transmission on the second resource by using the second beam is greater than a second threshold; or a transmit power used by the terminal device to perform uplink transmission on the second resource by using the second beam is greater than or equal to a second threshold. This item is similar to the second item. For details, refer to the foregoing related descriptions.

4. A sum of a transmit power used by the terminal device to perform uplink transmission on the first resource by using the first beam and a transmit power used by the terminal device to perform uplink transmission on the second resource by using the second beam does not exceed a third threshold.

A value of the third threshold may be a transmit power upper limit of the terminal device specified in a regulation. For different types of terminal devices or terminal devices in different areas, values of transmit power upper limits specified in a regulation may be different. For example, a value of the third threshold may be 23 dBm or 26 dBm.

5. The first beam and the second beam are beams that are reported by the terminal device and that can be used for simultaneous transmission.

It should be noted that the foregoing shows some possible evaluation criteria for simultaneous transmission using the first beam and the second beam. In actual application, there may be other determining criteria. This is not specifically limited in this application.

Optionally, the first beam and the second beam are two common beams indicated by the network device to the terminal device.

It should be noted that optionally, for a method used by the terminal device to determine that the first resource is associated with the first beam and the second beam, refer to the method provided in the embodiment shown in FIG. 7A, FIG. 8, or FIG. 9. Details are not described herein again.

The first resource and the second resource overlap in time domain.

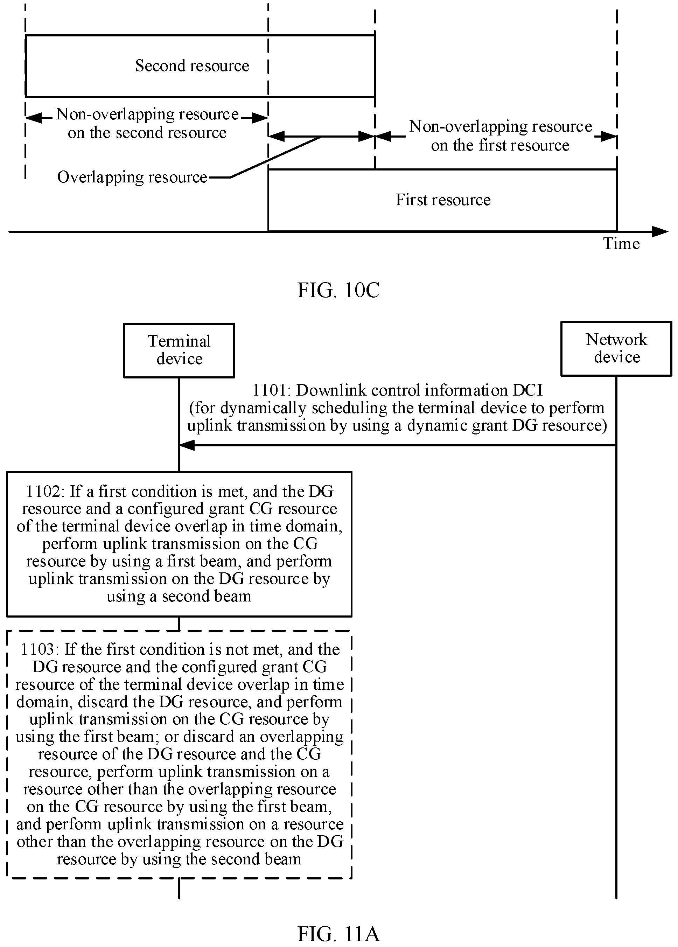

Optionally, the first resource and the second resource completely or partially overlap in time domain. This is not specifically limited in this application. For example, as shown in FIG. 10C, the first resource and the second resource partially overlap in time domain.

Optionally, frequency domain resources occupied by the first resource and the second resource in frequency domain are the same or different. This is not specifically limited in this application. For example, frequency domain resources occupied by the first resource and the second resource in frequency domain are orthogonal.

Optionally, both the first resource and the first resource may be CG resources. For example, both the first resource and the second resource are Typel CG resources.

1002: If a first condition is met, the terminal device performs uplink transmission on the first resource by using the first beam, and performs uplink transmission on the second resource by using the second beam.

Optionally, the first condition includes at least one of the following:
1. The first beam corresponds to a first panel, and the second beam corresponds to a second panel. The first panel and the second panel are two different panels.
2. A transmit power used by the terminal device to perform uplink transmission on the first resource by using the first beam is greater than a first threshold.
3. A transmit power used by the terminal device to perform uplink transmission on the second resource by using the second beam is greater than a second threshold.
4. A sum of a transmit power used by the terminal device to perform uplink transmission on the first resource by using the first beam and a transmit power used by the terminal device to perform uplink transmission on the second resource by using the second beam does not exceed a third threshold.
5. The first beam and the second beam are beams that are reported by the terminal device and that can be used for simultaneous transmission.

For detailed descriptions of the foregoing four items, refer to related descriptions in step 1001. Details are not described herein again.

In other words, if the first condition is met, it indicates that the first beam and the second beam may be used for simultaneous transmission. Therefore, if the first condition is met, the terminal device performs uplink transmission on the first resource by using the first beam, and performs uplink transmission on the second resource by using the second beam.

Optionally, the first beam corresponds to a first TRP, and the second beam corresponds to a second TRP. The first TRP and the second TRP are configured to provide services for the terminal device.

For example, as shown in FIG. 3, the first beam is a beam 1, and the second beam is a beam 2. The terminal device may perform uplink transmission with a TRP 301 on a same resource (namely, the first resource) by using the beam 1, and perform uplink transmission with a TRP 302 by using the beam 2. Therefore, communication transmission between the terminal device and a plurality of TRPs is implemented, and communication performance is improved. For example, the terminal device may send same uplink data separately to the first TRP and the second TRP, thereby improving data transmission reliability. For example, the terminal device may send first uplink data to the first TRP and send second uplink data to the second TRP on the first resource. The first uplink data is different from the second uplink data, thereby improving a capacity of a communication system.

Optionally, FIG. 10A further includes step 1003, and step 1003 may be performed after step 1001.

1003: If the first condition is not met, the terminal device performs any one of the following: discarding the second resource, and performing uplink transmission on the first resource by using the first beam; or discarding an overlapping resource of the first resource and the second resource in time domain, performing uplink transmission on a resource other than the overlapping resource on the first resource by using the first beam, and performing uplink transmission on a resource other than the overlapping resource on the second resource by using the second beam.

If the first condition is not met, to be specific, the first beam and the second beam cannot be used for simultaneous transmission, for example, the first beam and the second beam are two beams transmitted by the terminal device by using a same panel, and the terminal device cannot transmit the two beams at a same moment by using a same panel, the terminal device discards the second resource, and performs uplink transmission with the first TRP only on the first resource by using the first beam. Alternatively, as shown in FIG. 10B and FIG. 10C, the terminal device discards an overlapping resource of the first resource and the second resource in time domain, performs uplink transmission with the first TRP on a non-overlapping resource of the first resource by using the first beam, and performs uplink transmission with the second TRP on a non-overlapping resource of the second resource by using the second beam.

In the embodiment shown in FIG. 10A, the terminal device determines transmission behavior of the terminal device on the first resource and the second resource according to a corresponding rule. In this way, a problem that a conflict exists when the terminal device performs simultaneous transmission on the first resource and the second resource is resolved, thereby facilitating correct transmission between the terminal device and the network device, and improving communication transmission performance.

FIG. 11A is a diagram of another embodiment of an uplink transmission method according to an embodiment of this application. Refer to FIG. 11A. The method includes the following steps.

1101: A network device sends DCI to a terminal device. The DCI is for dynamically scheduling the terminal device to perform uplink transmission by using a DG resource. Correspondingly, the terminal device receives the DCI from the network device.

1102: If a first condition is met, and the DG resource and a CG resource of the terminal device overlap in time domain, the terminal device performs uplink transmission on the CG resource by using a first beam, and performs uplink transmission on the DG resource by using a second beam.

The CG resource is associated with the first beam, and the first beam and the second beam are two common beams indicated by the network device to the terminal device.

Optionally, the first beam may be the 1^{st} beam indicated by the network device to the terminal device. The second beam may be the 2^{nd} beam indicated by the network device to the terminal device.

In a possible implementation, the CG resource may be associated with the first beam by default, or the terminal device may determine, by using the method provided in the embodiment shown in FIG. 7A, FIG. 8, or FIG. 9, that the CG resource is associated with the first beam.

Optionally, the uplink transmission includes PUSCH transmission and/or PUCCH transmission.

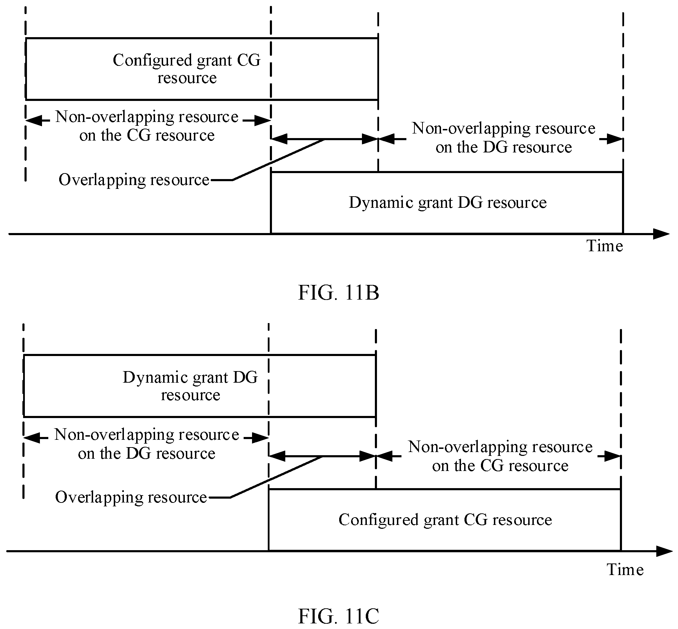

Optionally, the DG resource and the CG resource partially or completely overlap in time domain. For example, as shown in FIG. 11B or FIG. 11C, the CG resource and the DG resource partially overlap in time domain.

Optionally, frequency domain resources occupied by the CG resource and the DG resource in frequency domain are the same or different. This is not specifically limited in this application.

Optionally, the first condition includes at least one of the following:
1. The first beam corresponds to a first panel, the second beam corresponds to a second panel, and the first panel and the second panel are two different panels.
2. A transmit power used by the terminal device to perform uplink transmission on the CG resource by using the first beam is greater than a first threshold.
3. A transmit power used by the terminal device to perform uplink transmission on the DG resource by using the second beam is greater than a second threshold.
4. A sum of a transmit power used by the terminal device to perform uplink transmission on the CG resource by using the first beam and a transmit power used by the terminal device to perform uplink transmission on the DG resource by using the second beam does not exceed a third threshold.
5. The first beam and the second beam are beams that are reported by the terminal device and that can be used for simultaneous transmission.

For detailed descriptions of the foregoing four items, refer to related descriptions in step 1001 in the embodiment shown in FIG. 10A. Details are not described herein again.

In other words, if the first condition is met, it indicates that the first beam and the second beam may be used for simultaneous transmission. Therefore, the terminal device may perform uplink transmission on the CG resource by using the first beam, and perform uplink transmission on the DG resource by using the second beam.

Optionally, the first beam corresponds to a first TRP, and the second beam corresponds to a second TRP. The first TRP and the second TRP are configured to provide services for the terminal device.

For example, as shown in FIG. 3, the first beam is a beam 1, and the second beam is a beam 2. If the beam 1 and the beam 2 may be used for simultaneous transmission, the terminal device may perform uplink transmission with a TRP 301 on the CG resource by using the beam 1, and perform uplink transmission with a TRP 302 on the DG resource by using the beam 2. For example, uplink data sent by the terminal device to the first TRP by using the CG resource is the same as uplink data sent by the terminal device to the second TRP by using the DG resource. This helps improve data transmission reliability. For example, the terminal device may send first uplink data to the first TRP on the CG resource, and send second uplink data to the second TRP on the DG resource. The first uplink data is different from the second uplink data, thereby improving a capacity of a communication system.

Optionally, the embodiment shown in FIG. 11A further includes step 1103. Step 1103 may be performed after step 1101.

1103: If the first condition is not met, and the DG resource and the CG resource overlap in time domain, the terminal device discards the DG resource, and performs uplink transmission on the CG resource by using the first beam; or the terminal device discards an overlapping resource of the DG resource and the CG resource, performs uplink transmission on a resource other than the overlapping resource on the CG resource by using the first beam, and performs uplink transmission on a resource other than the overlapping resource on the DG resource by using the second beam.

For example, the first beam and the second beam cannot be used for simultaneous transmission. For example, the first beam and the second beam are two beams transmitted by the terminal device by using a same panel, and the terminal device cannot transmit the two beams at a same moment by using a same panel. In this case, the terminal device may discard the DG resource, and perform uplink transmission with the first TRP on the CG resource by using the first beam. Alternatively, as shown in FIG. 11B and FIG. 11C, the terminal device discards an overlapping resource of the DG resource and the CG resource, performs uplink transmission on a resource other than the overlapping resource on the CG resource by using the first beam, and performs uplink transmission on a resource other than the overlapping resource on the DG resource by using the second beam.

In the embodiment shown in FIG. 11A, the terminal device determines transmission behavior of the terminal device on the CG resource and the DG resource according to a corresponding rule. In this way, a problem that a conflict exists when the terminal device performs simultaneous transmission on the CG resource and the DG resource is resolved, thereby facilitating correct transmission between the terminal device and the network device, and improving communication transmission performance.

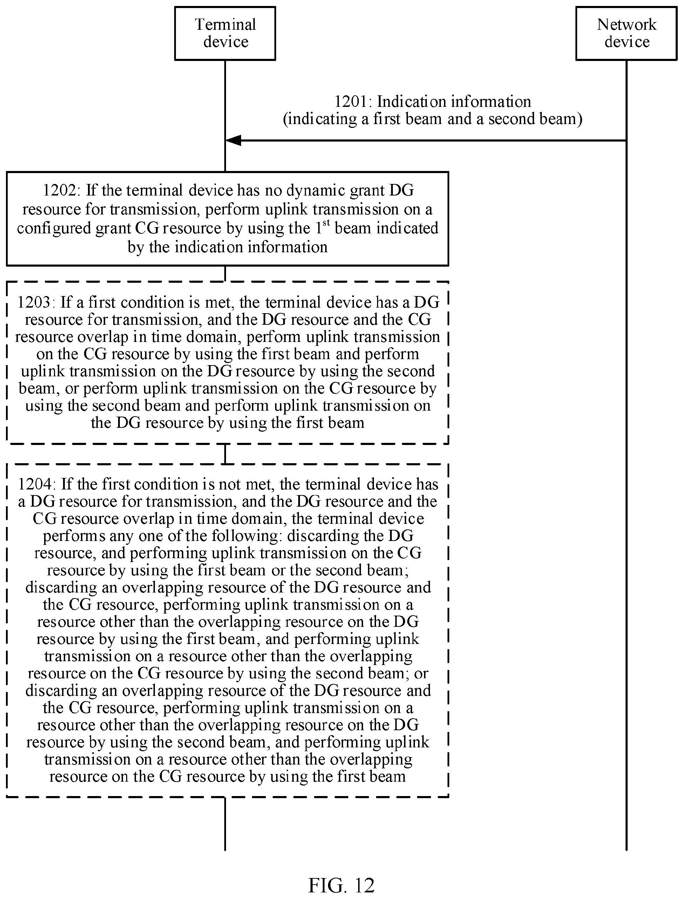

FIG. 12 is a diagram of another embodiment of an uplink transmission method according to an embodiment of this application. Refer to FIG. 12. The method includes the following steps.

1201: A network device sends indication information to a terminal device. The indication information indicates a first beam and a second beam. Correspondingly, the terminal device receives the indication information from the network device.

Optionally, the indication information is carried in a MAC CE or DCI.

Optionally, the first beam is the 1^{st} beam indicated by the network device to the terminal device, and the second beam is the 2^{nd} beam indicated by the network device to the terminal device. The first beam and the second beam are common beams.

1202: If the terminal device has no DG resource for transmission, the terminal device performs uplink transmission on a CG resource by using the 1^{st} beam indicated by the indication information.

The network device configures a CG resource for the terminal device. If the terminal device has no DG resource for transmission, that is, the network device does not schedule a DG resource of the terminal device, the terminal device may perform uplink transmission on the CG resource by using, by default, the 1^{st} beam indicated by the indication information.

Optionally, the embodiment shown in FIG. 12 further includes step 1203 or step 1204. Step 1203 or step 1204 may be performed after step 1201.

1203: If a first condition is met, the terminal device has a DG resource for transmission, and the DG resource and the CG resource overlap in time domain, the terminal device performs uplink transmission on the CG resource by using the first beam, and performs uplink transmission on the DG resource by using the second beam, or the terminal device performs uplink transmission on the CG resource by using the second beam, and performs uplink transmission on the DG resource by using the first beam.

Optionally, the first condition includes at least one of the following:
1. The first beam corresponds to a first panel, and the second beam corresponds to a second panel. The first panel and the second panel are two different panels.
2. A transmit power used by the terminal device to perform uplink transmission on the CG resource by using the first beam or the second beam is greater than a first threshold.
3. A transmit power used by the terminal device to perform uplink transmission on the DG resource by using the first beam or the second beam is greater than a second threshold.
4. A sum of a transmit power used by the terminal device to perform uplink transmission on the CG resource by using the first beam and a transmit power used by the terminal device to perform uplink transmission on the DG resource by using the first beam does not exceed a third threshold; or a sum of a transmit power used by the terminal device to perform uplink transmission on the CG resource by using the second beam and a transmit power used by the terminal device to perform uplink transmission on the DG resource by using the first beam does not exceed a third threshold.
5. The first beam and the second beam are beams that are reported by the terminal device and that can be used for simultaneous transmission.

For detailed descriptions of the foregoing four items, refer to related descriptions in step 1001 in the embodiment shown in FIG. 10A. Details are not described herein again.

In other words, if the first condition is met, it indicates that the first beam and the second beam may be used for simultaneous transmission. Therefore, the terminal device may perform uplink transmission on the CG resource by using the first beam, and perform uplink transmission on the DG resource by using the second beam. Alternatively, the terminal device performs uplink transmission on the CG resource by using the second beam, and performs uplink transmission on the DG resource by using the first beam.

1204: If the first condition is not met, the terminal device has a DG resource for transmission, and the DG resource and the CG resource overlap in time domain, the terminal device performs any one of the following:
discarding the CG resource, and performing uplink transmission on the DG resource by using the first beam or the second beam;
discarding the DG resource, and performing uplink transmission on the CG resource by using the first beam or the second beam;
discarding, by the terminal device, an overlapping resource of the DG resource and the CG resource, performing uplink transmission on a resource other than the overlapping resource on the DG resource by using the first beam, and performing uplink transmission on a resource other than the overlapping resource on the CG resource by using the second beam; or
discarding, by the terminal device, an overlapping resource of the DG resource and the CG resource, performing uplink transmission on a resource other than the overlapping resource on the DG resource by using the second beam, and performing uplink transmission on a resource other than the overlapping resource on the CG resource by using the first beam.

For example, as shown in FIG. 11B or FIG. 11C, the terminal device may discard the overlapping resource of the DG resource and the CG resource. Then, the terminal device performs uplink transmission on the resource other than the overlapping resource on the DG resource by using the first beam, and performs uplink transmission on the resource other than the overlapping resource on the CG resource by using the second beam.

It should be noted that when the terminal device has the DG resource for transmission, the DG resource and the CG resource overlap in time domain, and the DG resource and the CG resource are associated with a same beam, the terminal device does not perform uplink transmission on the DG resource, but performs uplink transmission on the CG resource by using the beam associated with the CG resource. The terminal device may determine, by using the method provided in the embodiment shown in FIG. 7A, FIG. 8, or FIG. 9, a beam associated with the DG resource and a beam associated with the CG resource.

In the embodiment shown in FIG. 12, transmission behavior of the terminal device on the CG resource when the terminal device has no DG resource for transmission and transmission behavior of the terminal device on the CG resource and the DG resource when the terminal device has a DG resource for transmission are shown. In this way, a problem that a conflict exists when the terminal device performs simultaneous transmission on the CG resource and the DG resource is resolved, thereby facilitating correct transmission between the terminal device and the network device, and improving communication transmission performance.

Currently, the network device may configure or activate one or more resources for the terminal device. For example, the network device configures a resource for the terminal device. How the terminal device performs uplink transmission on the resource is a problem to be resolved in this application.

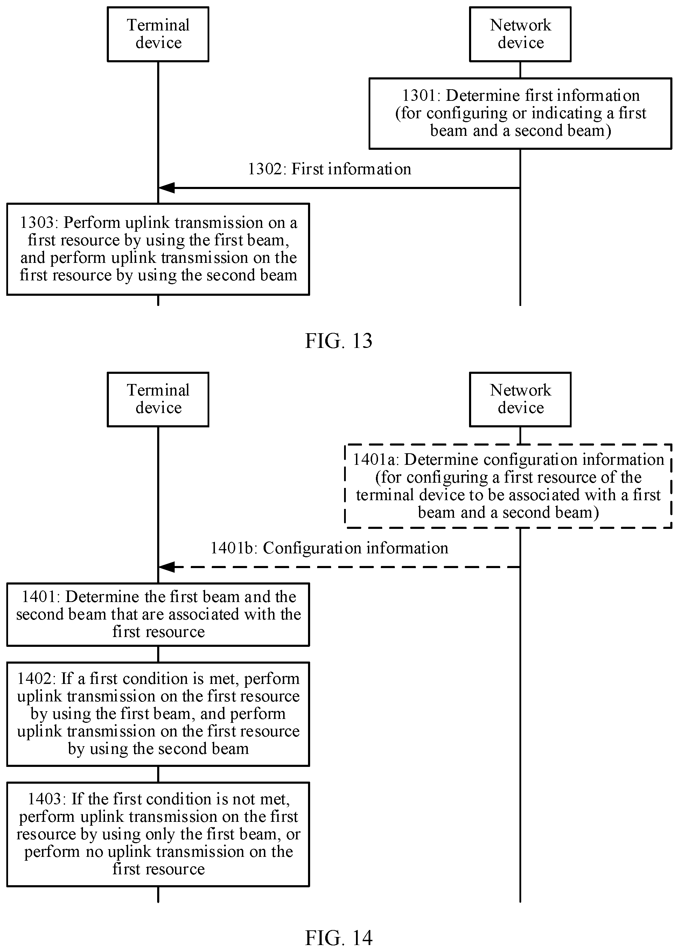

This application provides a corresponding technical solution. For details, refer to related descriptions of embodiments shown in FIG. 13, FIG. 14, and FIG. 15A.

FIG. 13 is a diagram of another embodiment of an uplink transmission method according to an embodiment of this application. Refer to FIG. 13. The method includes the following steps.

1301: A network device determines first information. The first information is for configuring or indicates a first beam and a second beam.

The first beam and the second beam are beams associated with a first resource of a terminal device. The first beam and the second beam are used by the terminal device to perform uplink transmission on the first resource.

The first beam and the second beam are used for simultaneous transmission.

Optionally, at least one of the following represents that the first beam and the second beam can be used for simultaneous transmission:
1. The first beam corresponds to a first panel, and the second beam corresponds to a second panel.
   The first panel and the second panel are two different panels.
2. A transmit power used by the terminal device to perform uplink transmission on the first resource by using the first beam is greater than a first threshold.
3. A transmit power used by the terminal device to perform uplink transmission on the first resource by using the second beam is greater than a second threshold.
4. A sum of a transmit power used by the terminal device to perform uplink transmission on the first resource by using the first beam and a transmit power used by the terminal device to perform uplink transmission on the first resource by using the second beam does not exceed a third threshold.
5. The first beam and the second beam are beams that are reported by the terminal device and that can be used for simultaneous transmission.

Detailed descriptions of the foregoing four items may be similar to some possible determining criteria for simultaneous transmission using the first beam and the second beam in the embodiment shown in FIG. 10A. For details, refer to related descriptions in step 1001 in the embodiment shown in FIG. 10A. Details are not described herein again.

For some possible determining criteria representing that the first beam and the second beam may be used for simultaneous transmission, refer to related descriptions in step 1001 in the embodiment shown in FIG. 10A. Details are not described herein again.

The following describes several possible implementations of content included in the first information.
1. The first information includes an index of the first beam and an index of the second beam.
2. The first information includes an identifier of a first TCI state corresponding to the first beam and an identifier of a TCI state corresponding to the second beam.
3. The first beam and the second beam form a simultaneous transmission beam pair, and the first information includes an index of the simultaneous transmission beam pair.

Optionally, the first resource is a CG resource. For example, the first resource is a Typel CG resource.

1302: The network device sends the first information to the terminal device. Correspondingly, the terminal device receives the first information from the network device.

Optionally, the first information is carried in an RRC message or a MAC CE.

1303: The terminal device performs uplink transmission on the first resource by using the first beam, and performs uplink transmission on the first resource by using the second beam.

In this embodiment, the network device may indicate a common beam to the terminal device. Independent of the common beam indicated by the network device to the terminal device, the network device may configure the associated first beam and the associated second beam for the first resource based on the first information. The first beam and the second beam are used by the terminal device to perform uplink transmission on the first resource. For transmission other than the uplink transmission performed by the terminal device on the first resource, the terminal device performs transmission still by using the common beam indicated by the network device to the terminal device.

Optionally, the first beam corresponds to a first TRP, and the second beam corresponds to a second TRP.

For example, as shown in FIG. 3, the first beam is a beam 1, and the second beam is a beam 2. The terminal device may perform uplink transmission with a TRP 301 on a same resource (namely, the first resource) by using the beam 1, and perform uplink transmission with a TRP 302 by using the beam 2. Therefore, communication transmission between the terminal device and a plurality of TRPs is implemented, and communication performance is improved. For example, the terminal device may send same uplink data separately to the first TRP and the second TRP, thereby improving data transmission reliability. For example, the terminal device may send first uplink data to the first TRP and send second uplink data to the second TRP on the first resource. The first uplink data is different from the second uplink data, thereby improving a capacity of a communication system.

In the embodiment shown in FIG. 13, the terminal device receives the first information from the network device. The first information is for configuring or indicates the first beam and the second beam. The first beam and the second beam are beams associated with the first resource of the terminal device. The first beam and the second beam may be used for simultaneous transmission. The terminal device may perform uplink transmission on the first resource by using the first beam, and perform uplink transmission on the first resource by using the second beam. In this way, the terminal device performs uplink transmission on a same resource by using a plurality of TRPs, thereby improving a system capacity or transmission reliability.

FIG. 14 is a diagram of another embodiment of an uplink transmission method according to an embodiment of this application. Refer to FIG. 14. The method includes the following steps.

1401: A terminal device determines a first beam and a second beam that are associated with a first resource.

Optionally, the terminal device may determine, by using the method provided in the embodiment shown in FIG. 7A, FIG. 8, or FIG. 9, the first beam and the second beam that are associated with the first resource.

Optionally, the first resource is a CG resource. For example, the first resource is a Typel CG resource.

Optionally, the first beam and the second beam are indicated by a network device to the terminal device.

Optionally, the network device may configure, for the terminal device, the first beam and the second beam that are associated with the first resource. Optionally, the embodiment shown in FIG. 14 further includes step 1401a and step 1401b. Step 1401a and step 1401b may be performed before step 1401.

1401a: The network device determines configuration information. The configuration information is for configuring the first resource of the terminal device to be associated with the first beam and the second beam.

Optionally, the configuration information may be configuration information used by the network device to configure the first resource for the terminal device. The configuration information is for configuring the first resource and configuring the first beam and the second beam that are associated with the first resource.

Optionally, the configuration information includes information about a first control resource set and a second control resource set that are associated with the first resource. The first control resource set corresponds to the first beam, and the second control resource set corresponds to the second beam.

For example, the first control resource set belongs to a control resource set pool 1, and the second control resource set belongs to a control resource set pool 2. The configuration information includes an index of the control resource set pool 1 and an index of the control resource set pool 2.

It should be noted that, that the network device configures, by using the configuration information, the first resource to be associated with the first beam and the second beam indicates that the network device indicates the terminal device to perform communication transmission in an mTRP transmission mode. Optionally, the first beam corresponds to a first TRP, and the second beam corresponds to a second TRP. In other words, the first beam is used by the terminal device to perform uplink transmission with the first TRP on the first resource. The second beam is used by the terminal device to perform uplink transmission with the second TRP on the first resource.

It should be noted that, in step 1401a, the technical solution of this application is described by using an example in which the configuration information is for configuring the first resource to be associated with the first beam and the second beam. In actual application, the network device may alternatively configure, based on the configuration information, the first resource to be associated with the first beam or the second beam. Alternatively, the network device may configure, based on the configuration information, the first resource to be associated with one beam or two beams. In this implementation, it indicates that the network device indicates the terminal device to perform communication transmission in an STRP transmission mode. In this embodiment, the technical solution of this application is mainly described by using an example in which the network device configures, based on the configuration information, the first resource to be associated with the first beam and the second beam.

1401b: The network device sends the configuration information to the terminal device. Correspondingly, the terminal device receives the configuration information from the network device.

Optionally, the configuration information is carried in an RRC message.

1402: If a first condition is met, the terminal device performs uplink transmission on the first resource by using the first beam, and performs uplink transmission on the first resource by using the second beam.

Optionally, the first condition includes at least one of the following:
1. The first beam corresponds to a first panel, the second beam corresponds to a second panel, and the first panel and the second panel are two different panels.
2. A transmit power used by the terminal device to perform uplink transmission on the first resource by using the first beam is greater than a first threshold.
3. A transmit power used by the terminal device to perform uplink transmission on the first resource by using the second beam is greater than a second threshold.
4. A sum of a transmit power used by the terminal device to perform uplink transmission on the first resource by using the first beam and a transmit power used by the terminal device to perform uplink transmission on the first resource by using the second beam does not exceed a third threshold.
5. The first beam and the second beam are beams that are reported by the terminal device and that can be used for simultaneous transmission.

The first condition is similar to the first condition in the embodiment shown in FIG. 10A. For details, refer to related descriptions of the first condition in step 1001 in the embodiment shown in FIG. 10A. Details are not described herein again.

In other words, if the first condition is met, it indicates that the first beam and the second beam may be used for simultaneous transmission. Therefore, the terminal device may perform uplink transmission on the first resource by using the first beam, and perform uplink transmission on the first resource by using the second beam. Optionally, the first beam corresponds to a first TRP, and the second beam corresponds to a second TRP. For example, the terminal device may send same uplink data separately to the first TRP and the second TRP, thereby improving data transmission reliability. For example, the terminal device may send first uplink data to the first TRP and send second uplink data to the second TRP on the first resource. The first uplink data is different from the second uplink data, thereby improving a capacity of a communication system.

1403: If the first condition is not met, the terminal device performs uplink transmission on the first resource by using only the first beam, or the terminal device performs no uplink transmission on the first resource.

If the first condition is not met, to be specific, the first beam and the second beam cannot be used for simultaneous transmission, for example, the first beam and the second beam are two beams transmitted by the terminal device by using a same panel, and the terminal device cannot transmit the two beams at a same moment by using a same panel, the terminal device performs uplink transmission on the first resource by using only the first beam, and does not perform uplink transmission on the first resource by using the first beam. Alternatively, the terminal device does not perform uplink transmission on the first resource.

In the embodiment shown in FIG. 14, the terminal device determines the first beam and the second beam that are associated with the first resource. If the first condition is met, the terminal device performs uplink transmission on the first resource by using the first beam, and performs uplink transmission on the first resource by using the second beam. If the first condition is not met, the terminal device performs uplink transmission on the first resource by using only the first beam, or the terminal device performs no uplink transmission on the first resource. In this way, the terminal device determines the transmission behavior on the first resource, thereby facilitating correct transmission between the terminal device and the network device, and improving communication transmission performance.

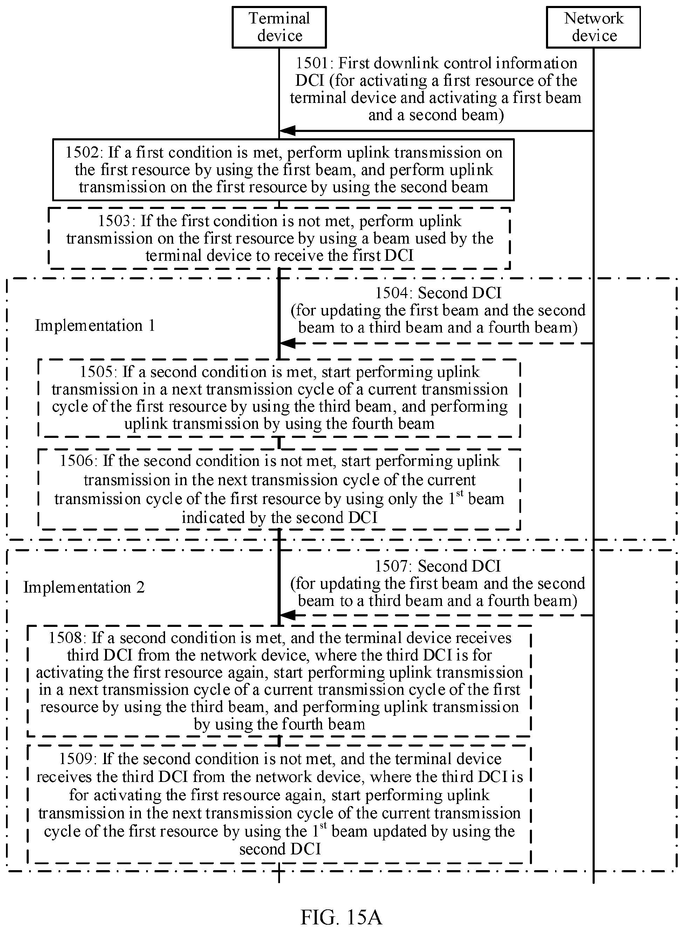

FIG. 15A is a diagram of another embodiment of an uplink transmission method according to an embodiment of this application. Refer to FIG. 15A. The method includes the following steps.

1501: A network device sends first DCI to a terminal device. The first DCI is for activating a first resource of the terminal device and activating a first beam and a second beam. Correspondingly, the terminal device receives the first DCI from the network device.

Optionally, the first resource is a CG resource. For example, the first resource is a Type2 CG resource.

Optionally, the first DCI may be DCI in a first format or DCI in a second format. For the DCI in the first format and the DCI in the second format, refer to related descriptions of the foregoing technical terms.

If the first DCI is the DCI in the first format, an SRI field in the first DCI may indicate the first beam and the second beam. The first beam and the second beam may be common beams indicated by the network device to the terminal device, or the first beam and the second beam may be different from a common beam indicated by the network device to the terminal device.

If the first DCI is the DCI in the second format, second DCI is for activating the first beam and the second beam, and the first beam and the second beam may belong to a common beam indicated by the network device to the terminal device.

Specifically, the network device configures a Type2 CG resource for the terminal device. The network device may activate the Type2 CG resource based on the first DCI. The first DCI is further for activating the first beam and the second beam.

Optionally, the first beam corresponds to a first TRP, and the second beam corresponds to a second TRP. The first TRP and the second TRP are configured to provide services for the terminal device.

Optionally, the first DCI further includes first indication information. The first indication information indicates the terminal device to perform uplink transmission on the first resource by using the first beam and the second beam separately.

In this implementation, the first indication information may be a newly added field or a redefined field in the first DCI. The newly added field or the redefined field indicates the terminal device to perform uplink transmission on the first resource by using the first beam and the second beam separately, or indicates the terminal device to perform simultaneous transmission on the first resource. In this implementation, it indicates that the network device indicates the terminal device to perform transmission in an mTRP transmission mode.

It should be noted that the foregoing describes the technical solution of this application by using an example in which the first indication information indicates the terminal device to perform uplink transmission on the first resource by using the first beam and the second beam separately. In actual application, the network device may alternatively indicate, by using the first indication information, the terminal device not to perform simultaneous transmission on the first resource. In this implementation, it indicates that the network device indicates the terminal device to perform transmission in a single TRP transmission mode.

It should be noted that, optionally, in a communication protocol, it may be considered by default that the network device does not enable multi-panel simultaneous transmission on a resource activated based on the DCI in the second format.

1502: If a first condition is met, the terminal device performs uplink transmission on the first resource by using the first beam, and performs uplink transmission on the first resource by using the second beam.

Optionally, the uplink transmission includes PUSCH transmission and/or PUCCH transmission.

Optionally, the first condition includes at least one of the following:
1. A transmit power used by the terminal device to perform uplink transmission on the first resource by using the first beam is greater than a first threshold.
2. A transmit power used by the terminal device to perform uplink transmission on the first resource by using the second beam is greater than a second threshold.
3. A sum of a transmit power used by the terminal device to perform uplink transmission on the first resource by using the first beam and a transmit power used by the terminal device to perform uplink transmission on the first resource by using the second beam does not exceed a third threshold.
4. The first beam corresponds to a first panel, the second beam corresponds to a second panel, and the first panel and the second panel are two different panels.
5. The first beam and the second beam are beams that are reported by the terminal device and that can be used for simultaneous transmission.

The first condition is similar to the first condition in the embodiment shown in FIG. 10A. For details, refer to related descriptions of the first condition in step 1001 in the embodiment shown in FIG. 10A. Details are not described herein again.

In other words, if the first condition is met, it indicates that the first beam and the second beam may be used for simultaneous transmission. Therefore, the terminal device may perform uplink transmission on the first resource by using the first beam, and perform uplink transmission on the first resource by using the second beam.

Optionally, the first beam corresponds to a first TRP, and the second beam corresponds to a second TRP. The first TRP and the second TRP are configured to provide services for the terminal device. For example, the terminal device may send same uplink data separately to the first TRP and the second TRP, thereby improving data transmission reliability. For example, the terminal device may send first uplink data to the first TRP and send second uplink data to the second TRP on the first resource. The first uplink data is different from the second uplink data, thereby improving a capacity of a communication system.

Optionally, the embodiment shown in FIG. 15A further includes step 1503. Step 1503 may be performed after step 1501.

1503: If the first condition is not met, the terminal device performs uplink transmission on the first resource by using a beam used by the terminal device to receive the first DCI.

For example, the terminal device receives the first DCI by using a common beam indicated by the network device to the terminal device. If the first condition is not met, to be specific, the first beam and the second beam cannot be used for simultaneous transmission, the terminal device may perform uplink transmission on the first resource by using the common beam.

The following describes two possible implementations in which the terminal device uses, on the first resource, a beam updated by the network device for the terminal device.

The following describes an implementation 1 with reference to step 1504 to step 1506.

Optionally, the embodiment shown in FIG. 15A further includes step 1504 to step 1506. Step 1504 to step 1506 may be performed after step 1502 or step 1503.

1504: The network device sends second DCI to the terminal device. The second DCI is for updating the first beam and the second beam to a third beam and a fourth beam. Correspondingly, the terminal device receives the second DCI from the network device.

The first beam and the second beam may be indicated by the network device to the terminal device before step 1504. The network device may further indicate the third beam and the fourth beam to the terminal device in step 1504. In this way, the network device updates a beam of the terminal device.

Optionally, the second DCI may be DCI in a third format or DCI in a fourth format. For the DCI in the third format and the DCI in the fourth format, refer to related descriptions of the foregoing technical terms.

1505: If a second condition is met, the terminal device performs uplink transmission at the start of a next transmission cycle of a current transmission cycle of the first resource by using the third beam, and performs uplink transmission by using the fourth beam.

The current transmission cycle may be understood as a transmission cycle of the first resource corresponding to a receiving moment at which the terminal device receives the second DCI in step 1504.

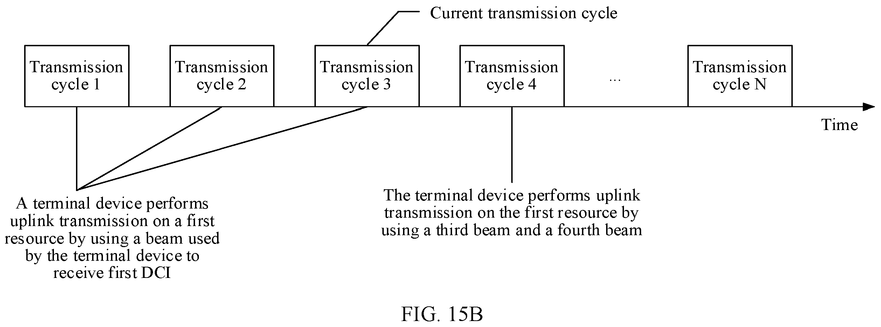

For example, as shown in FIG. 15B, the first resource corresponds to a plurality of transmission cycles, and each transmission cycle corresponds to a duration. If the receiving moment is located in a transmission cycle 3, the transmission cycle 3 is the current transmission cycle of the first resource.

Optionally, the second condition includes at least one of the following:
1. The third beam corresponds to a third panel of the terminal device, the fourth beam corresponds to a fourth panel of the terminal device, and the third panel and the fourth panel are two different panels.
   In a communication protocol, that the third beam and the fourth beam correspond to different panels of the terminal device may be explicitly or implicitly reflected, for example, may be reflected by using a measurement result reported by the terminal device. For details, refer to the following related descriptions of implicitly reflecting that the first beam and the second beam correspond to different panels of the terminal device in a communication protocol.
2. A transmit power used by the terminal device to perform uplink transmission on the first resource by using the third beam is greater than the first threshold.
3. A transmit power used by the terminal device to perform uplink transmission on the first resource by using the fourth beam is greater than the second threshold.
4. A sum of a transmit power used by the terminal device to perform uplink transmission on the first resource by using the third beam and a transmit power used by the terminal device to perform uplink transmission on the first resource by using the third beam does not exceed the third threshold.
5. The third beam and the second beam are beams that are reported by the terminal device and that can be used for simultaneous transmission.

The second condition is similar to the first condition in the embodiment shown in FIG. 10A. For details, refer to related descriptions of the first condition in step 1001 in the embodiment shown in FIG. 10A. Details are not described herein again.

In other words, if the first condition is met, it indicates that the third beam and the fourth beam may be used for simultaneous transmission. Therefore, the terminal device performs uplink transmission at the start of the next transmission cycle of the current transmission cycle of the first resource by using the third beam and the fourth beam. Optionally, the first beam corresponds to a first TRP, and the second beam corresponds to a second TRP. For example, the terminal device may send same uplink data separately to the first TRP and the second TRP, thereby improving data transmission reliability. For example, the terminal device may send first uplink data to the first TRP and send second uplink data to the second TRP on the first resource. The first uplink data is different from the second uplink data, thereby improving a capacity of a communication system.

For example, as shown in FIG. 15B, if the first beam and the second beam cannot be used for simultaneous transmission, the terminal device performs uplink transmission in a transmission cycle 1 to a transmission cycle 3 on the first resource by using the beam used by the terminal device to receive the first DCI. The current transmission cycle of the first resource is the transmission cycle 1, and the terminal device performs uplink transmission at the start of the transmission cycle 2 by using the third beam and the fourth beam. In step 1303, the third beam and the second beam may be used for simultaneous transmission. In this case, the terminal device can perform simultaneous transmission at the start of a transmission cycle 4 of the first resource by using the third beam and the fourth beam.

1506: If the second condition is not met, the terminal device performs uplink transmission at the start of the next transmission cycle of the current transmission cycle of the first resource by using only the 1^{st} beam indicated by the second DCI.

For example, the third beam is the 1^{st} beam indicated by the second DCI. If the second condition is not met, to be specific, the third beam and the fourth beam cannot be used for simultaneous transmission, the terminal device performs uplink transmission at the start of the next transmission cycle of the current transmission cycle of the first resource by using only the third beam.

The following describes an implementation 2 with reference to step 1507 to step 1509.

Optionally, the embodiment shown in FIG. 15A further includes step 1507 to step 1509. Step 1507 to step 1509 may be performed after step 1502 or step 1503.

1507: The network device sends second DCI to the terminal device. The second DCI is for updating the first beam and the second beam to a third beam and a fourth beam. Correspondingly, the terminal device receives the second DCI from the network device.

Step 1507 is similar to step 1504. For details, refer to related descriptions of step 1504.

1508: If a second condition is met, and the terminal device receives third DCI from the network device, where the third DCI is for activating the first resource again, the terminal device performs uplink transmission at the start of a next transmission cycle of a current transmission cycle of the first resource by using the third beam, and performs uplink transmission by using the fourth beam.

For the second condition, refer to related descriptions in step 1505. Details are not described herein again.

If the second condition is met, the terminal device needs to receive the third DCI sent by the network device, where the third DCI is for reactivating the first resource. In this case, the terminal device can perform simultaneous transmission at the start of the next transmission cycle of the current transmission cycle of the first resource by using the third beam and the fourth beam.

1509: If the second condition is not met, and the terminal device receives the third DCI from the network device, where the third DCI is for activating the first resource again, the terminal device performs uplink transmission at the start of the next transmission cycle of the current transmission cycle of the first resource by using the 1^{st} beam updated by using the second DCI.

If the terminal device performs simultaneous transmission on the first resource by using the first beam and the second beam, and if the third beam and the fourth beam cannot be used for simultaneous transmission, the terminal device needs to receive the next transmission cycle of the current transmission cycle of the first resource. In this case, the terminal device can cancel simultaneous transmission at the start of the next transmission cycle of the current transmission cycle of the first resource. For example, the terminal device performs uplink transmission at the start of the next transmission cycle of the current transmission cycle of the first resource by using the 1^{st} beam updated by using the second DCI.

In the embodiment shown in FIG. 15A, the terminal device receives the first DCI from the network device. The first DCI is for activating the first resource of the terminal device and activating the first beam and the second beam. If the first condition is met, the terminal device performs uplink transmission on the first resource by using the first beam, and performs uplink transmission on the first resource by using the second beam. If the first condition is not met, the terminal device performs uplink transmission on the first resource by using a beam used by the terminal device to receive the first DCI. In this way, the terminal device determines the transmission behavior on the first resource, thereby facilitating correct transmission between the terminal device and the network device, and improving communication transmission performance.

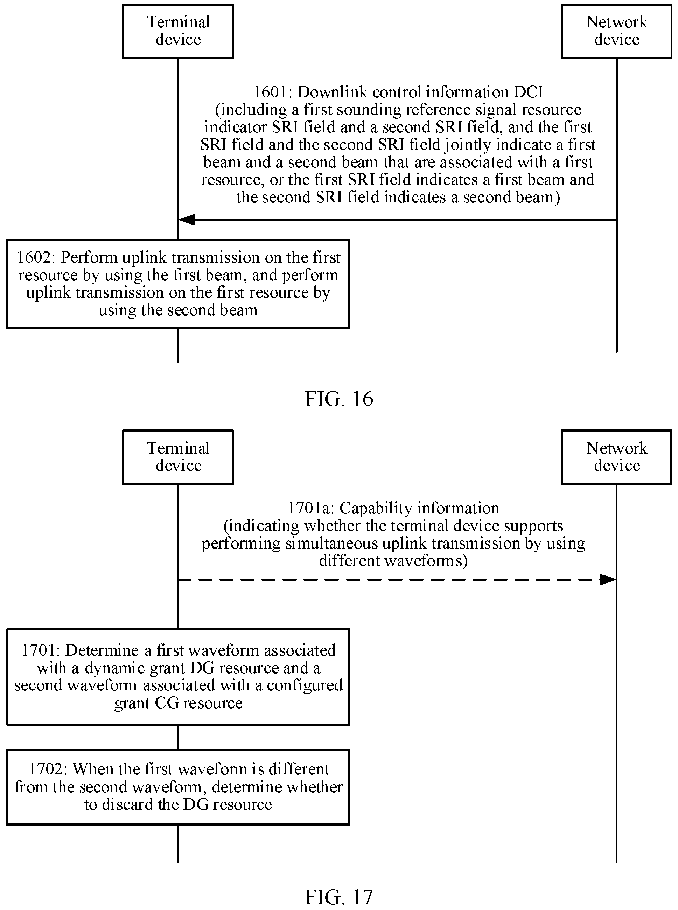

FIG. 16 is a diagram of another embodiment of an uplink transmission method according to an embodiment of this application. Refer to FIG. 16. The method includes the following steps.

1601: A network device sends DCI to a terminal device. The DCI includes a first SRI field and a second SRI field, and the first SRI field and the second SRI field jointly indicate a first beam and a second beam that are associated with a first resource, or the first SRI field indicates a first beam and the second SRI field indicates a second beam.

The DCI may be DCI in a first format. For the DCI in the first format, refer to related descriptions of the foregoing technical terms.

The first beam and the second beam are used for simultaneous transmission; or the first beam and the second beam form a simultaneous transmission beam pair.

Optionally, at least one of the following may represent that the first beam and the second beam can be used for simultaneous transmission:
1. The first beam corresponds to a first panel of the terminal device, and the second beam corresponds to a second panel of the terminal device. The first panel and the second panel are two different panels.
2. A transmit power used by the terminal device to perform uplink transmission on the first resource by using the first beam is greater than a first threshold.
3. A transmit power used by the terminal device to perform uplink transmission on the first resource by using the second beam is greater than a second threshold.
4. A sum of a transmit power used by the terminal device to perform uplink transmission on the first resource by using the first beam and a transmit power used by the terminal device to perform uplink transmission on the first resource by using the second beam does not exceed a third threshold.
5. The first beam and the second beam are beams that are reported by the terminal device and that can be used for simultaneous transmission.

The foregoing four items are similar to at least one item included in the first condition in the embodiment shown in FIG. 10A. For details, refer to related descriptions of the first condition in step 1001 in the embodiment shown in FIG. 10A. Details are not described herein again.

Optionally, the first SRI field indicates an index of the first beam, and the second SRI field indicates an index of the second beam.

Optionally, the first beam and the second beam form a simultaneous transmission beam pair, and the first SRI field and the second SRI field jointly indicate an index of the simultaneous transmission beam pair.

1602: The terminal device performs uplink transmission on the first resource by using the first beam, and performs uplink transmission on the first resource by using the second beam.

Optionally, the first beam corresponds to a first TRP, and the second beam corresponds to a second TRP. The first TRP and the second TRP are configured to provide services for the terminal device.

For example, the terminal device performs uplink transmission with the first TRP on the first resource by using the first beam, and performs uplink transmission with the second TRP on the first resource by using the second beam. In this way, the terminal device performs communication transmission with a plurality of TRPs. This helps increase a system capacity or improve reliability. For example, the terminal device sends same data separately to the first TRP and the second TRP, which helps improve transmission reliability. Alternatively, for example, the terminal device sends different data to the first TRP and the second TRP, which helps improve transmission efficiency of the terminal device and improve a system capacity.

It should be noted that beams separately indicated by the first SRI field and the second SRI field do not change a beam indicated by a unified transmission configuration indicator (unified TCI) state. Alternatively, a beam jointly indicated by the first SRI field and the second SRI field does not change a beam indicated by a unified transmission configuration indicator (unified TCI) state. The unified TCI state is a common beam indicated by the network device to the terminal device. For transmission other than the uplink transmission on the first resource, the terminal device performs transmission still by using the beam indicated by the unified TCI state.

In the embodiment shown in FIG. 16, the terminal device receives the DCI from the network device. The DCI is for activating the first resource of the terminal device, the DCI includes the first SRI field and the second SRI field, and the first SRI field and the second SRI field jointly indicate the first beam and the second beam that are associated with the first resource, or the first SRI field indicates the first beam and the second SRI field indicates the second beam. The terminal device performs uplink transmission on the first resource by using the first beam, and performs uplink transmission on the first resource by using the second beam. In this way, the terminal device performs uplink transmission on a same resource by using a plurality of TRPs, thereby improving a system capacity or transmission reliability.

FIG. 17 is a diagram of another embodiment of an uplink transmission method according to an embodiment of this application. Refer to FIG. 17. The method includes the following steps.

1701: A terminal device determines a first waveform associated with a DG resource and a second waveform associated with a CG resource.

The DG resource is associated with a first beam, and the CG resource is associated with a second beam. For the waveform, refer to related descriptions of the foregoing technical terms.

Optionally, the terminal device may determine, based on FIG. 7A, FIG. 8, or FIG. 9, the first beam associated with the DG resource and the second beam associated with the CG resource. Details are not described herein again.

Optionally, the DG resource and the CG resource partially or completely overlap in time domain. For example, as shown in FIG. 11B or FIG. 11C, the CG resource and the DG resource partially overlap in time domain.

Optionally, frequency domain resources occupied by the CG resource and the DG resource in frequency domain are the same or different. This is not specifically limited in this application.

The first beam and the second beam are used for simultaneous transmission. Optionally, at least one item included in the first condition in the embodiment shown in FIG. 12 may be that the first beam and the second beam may be used for simultaneous transmission. For details, refer to related descriptions of the first condition in the embodiment shown in FIG. 12.

Optionally, the first beam corresponds to a first TRP, and the second beam corresponds to a second TRP. The first TRP and the second TRP are configured to provide services for the terminal device.

Optionally, the embodiment shown in FIG. 17 further includes step 1701a. Step 1701a may be performed before step 1701.

1701a: The terminal device sends capability information to the network device. The capability information indicates whether the terminal device supports performing simultaneous uplink transmission by using different waveforms. Correspondingly, the network device receives the capability information from the terminal device.

1702: When the first waveform is different from the second waveform, the terminal device determines, based on the capability information of the terminal device, whether to discard the DG resource.

For example, when the first waveform is DFT-s-OFDM and the second waveform is OFDM, or when the first waveform is OFDM and the second waveform is DFT-s-OFDM, the terminal device may determine, based on the capability of the terminal device, whether to discard the DG resource.

For example, if the terminal device supports performing simultaneous transmission by using different waveforms, the terminal device does not discard the DG resource. The terminal device may perform uplink transmission with the first TRP on the DG resource by using the first beam, and perform uplink transmission with the second TRP on the CG resource by using the second beam. This improves a system capacity or communication transmission reliability.

For example, if the terminal device does not support performing simultaneous transmission by using different waveforms, the terminal device discards the DG resource, and performs uplink transmission with the first TRP on the CG resource by using the first beam.

It should be noted that when the first waveform is the same as the second waveform, the terminal device may perform uplink transmission on the DG resource by using the first beam, and perform uplink transmission on the CG resource by using the second beam. In this way, the terminal device performs uplink transmission with a plurality of TRPs. This helps improve a system capacity or communication transmission reliability.

In the foregoing related embodiments, the communication protocol may explicitly reflect that the first beam and the second beam correspond to different panels, or may implicitly reflect that the third beam and the fourth beam correspond to different panels of the terminal device. For example, if two measurement results reported by the terminal device are associated with different capability values (capability value) or capability value sets (capability value set), it may be considered that the two measurement results are respectively obtained by the terminal device through measurement of reference signals received on two reception beams by using corresponding panels, and the terminal device uses different panels on different reception beams. Based on reciprocity between uplink and downlink channels, for the terminal device, the two reception beams correspond to two transmission beams. The two transmission beams may be separately transmitted by using two different panels of the terminal device, or it is considered that the two transmission beams may be used by the terminal device to transmit a signal. Alternatively, a plurality of measurement results reported by the terminal device are associated in pairs, and two measurement results correspond to two reception beams. Based on reciprocity between uplink and downlink channels, for the terminal device, the two reception beams correspond to two transmission beams. Optionally, the measurement results may further include an explicit identifier indicating whether the two transmission beams can be used for simultaneous transmission.

This application further provides another embodiment. This embodiment specifically includes: A terminal device determines a first resource. The first resource is associated with a first beam. If the first resource is associated with a power control parameter, the terminal device performs uplink transmission on the first resource by using the power control parameter associated with the first resource; if the first beam is associated with a power control parameter, the terminal device performs uplink transmission on the first resource by using the power control parameter associated with the first beam; if the first beam is associated with no power control parameter and the first resource is associated with a power control parameter, the terminal device performs uplink transmission on the first resource by using the power control parameter associated with the first resource, or if neither the first beam nor the first resource is associated with a power control parameter, the terminal device performs uplink transmission on the first resource by using a preconfigured power control parameter.

The foregoing method embodiments may be implemented separately or in combination. For terms and related technologies in embodiments, refer to each other. In other words, technical solutions that do not conflict with each other or that do not logically conflict with each other in different embodiments may be combined with each other. This is not specifically limited in this application.

A communication apparatus provided in embodiments of this application is described below.

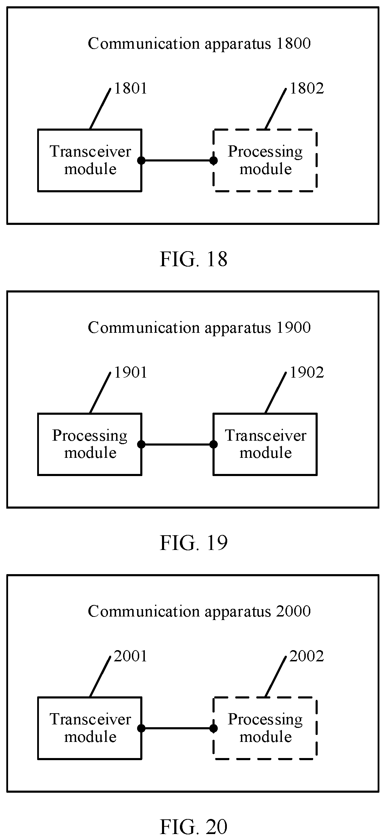

FIG. 18 is a diagram of a structure of a communication apparatus according to an embodiment of this application. Refer to FIG. 18. The communication apparatus may be configured to perform processes performed by the terminal device in the embodiments shown in FIG. 7A, FIG. 8, FIG. 9, FIG. 11A, FIG. 12, FIG. 13, FIG. 15A, and FIG. 16. For details, refer to related descriptions in the foregoing method embodiments.

The communication apparatus 1800 includes a transceiver module 1801. Optionally, the communication apparatus 1800 further includes a processing module 1802. The transceiver module 1801 may implement a corresponding communication function, and the processing module 1802 is configured to perform data processing. The transceiver module 1801 may also be referred to as a communication interface or a communication module.

Optionally, the communication apparatus 1800 may further include a storage module. The storage module may be configured to store instructions and/or data. The processing module 1802 may read the instructions and/or the data in the storage module, so that the communication apparatus implements the foregoing method embodiments.

The communication apparatus module 1800 may be configured to perform an action performed by the terminal device in the foregoing method embodiments. The communication apparatus 1800 may be a terminal device or a component that can be disposed in the terminal device. The processing module 1802 is configured to perform a processing-related operation on a terminal device side in the foregoing method embodiments. The transceiver module 1801 is configured to perform a receiving-related operation on the terminal device side in the foregoing method embodiments.

Optionally, the transceiver module 1801 may include a sending module and a receiving module. The sending module is configured to perform the sending operations in the foregoing method embodiments. The receiving module is configured to perform the receiving operations in the foregoing method embodiments.

It should be noted that the communication apparatus 1800 may include a sending module, but does not include a receiving module. Alternatively, the communication apparatus 1800 may include a receiving module, but not include a sending module. This may be specifically determined depending on whether the foregoing solution performed by the communication apparatus 1800 includes a sending action and a receiving action.

In an example, the communication apparatus 1800 is configured to perform an action performed by the terminal device in the embodiment shown in FIG. 7A.

Specifically, the transceiver module 1801 is configured to perform step 701 and step 702 in the embodiment shown in FIG. 7A. Optionally, the transceiver module 1801 is further configured to perform step 703 and step 704 in the embodiment shown in FIG. 7A.

In an example, the communication apparatus 1800 is configured to perform an action performed by the terminal device in the embodiment shown in FIG. 8.

Specifically, the transceiver module 1801 is configured to perform step 801 and step 802 in the embodiment shown in FIG. 8. Optionally, the transceiver module 1801 is further configured to perform step 803 and step 804 in the embodiment shown in FIG. 8.

In an example, the communication apparatus 1800 is configured to perform an action performed by the terminal device in the embodiment shown in FIG. 9.

Specifically, the transceiver module 1801 is configured to perform step 901 and step 902 in the embodiment shown in FIG. 9. Optionally, the transceiver module 1801 is further configured to perform step 901a in the embodiment shown in FIG. 9.

In an example, the communication apparatus 1800 is configured to perform an action performed by the terminal device in the embodiment shown in FIG. 11A.

Specifically, the transceiver module 1801 is configured to perform step 1101 and step 1102 in the embodiment shown in FIG. 11A. Optionally, the transceiver module 1801 is further configured to perform step 1103 in the embodiment shown in FIG. 11A.

In an example, the communication apparatus 1800 is configured to perform an action performed by the terminal device in the embodiment shown in FIG. 12.

Specifically, the transceiver module 1801 is configured to perform step 1201 and step 1202 in the embodiment shown in FIG. 12. Optionally, the transceiver module 1801 is further configured to perform step 1203 and step 1204 in the embodiment shown in FIG. 12.

In an example, the communication apparatus 1800 is configured to perform an action performed by the terminal device in the embodiment shown in FIG. 13.

Specifically, the transceiver module 1801 is configured to perform step 1302 and step 1303 in the embodiment shown in FIG. 13.

In an example, the communication apparatus 1800 is configured to perform an action performed by the terminal device in the embodiment shown in FIG. 15A.

Specifically, the transceiver module 1801 is configured to perform step 1501 and step 1502 in the embodiment shown in FIG. 15A. Optionally, the transceiver module 1801 is further configured to perform step 1503 to step 1509 in the embodiment shown in FIG. 15A.

In an example, the communication apparatus 1800 is configured to perform an action performed by the terminal device in the embodiment shown in FIG. 16.

Specifically, the transceiver module 1801 is configured to perform step 1601 and step 1602 in the embodiment shown in FIG. 16.

It should be understood that a specific process in which the modules perform the foregoing corresponding processes is described in detail in the foregoing method embodiments. For brevity, details are not described herein again.

In the foregoing embodiment, the processing module 1802 may be implemented by at least one processor or processor-related circuit, and the transceiver module 1801 may be implemented by a transceiver or transceiver-related circuit. The transceiver module 1801 may also be referred to as a communication module or a communication interface. The storage module may be implemented by using at least one memory.

A communication apparatus provided in embodiments of this application is described below.

FIG. 19 is a diagram of a structure of a communication apparatus according to an embodiment of this application. Refer to FIG. 19. The communication apparatus may be configured to perform the processes performed by the terminal device in the embodiments shown in FIG. 10A, FIG. 14, and FIG. 17. For details, refer to related descriptions in the foregoing method embodiments.

The communication apparatus 1900 includes a processing module 1901 and a transceiver module 1902. The transceiver module 1902 may implement a corresponding communication function, and the processing module 1901 is configured to perform data processing. The transceiver module 1902 may also be referred to as a communication interface or a communication module.

Optionally, the communication apparatus 1900 may further include a storage module. The storage module may be configured to store instructions and/or data. The processing module 1901 may read the instructions and/or the data in the storage module, so that the communication apparatus implements the foregoing method embodiments.

The communication apparatus module 1900 may be configured to perform an action performed by the terminal device in the foregoing method embodiments. The communication apparatus 1900 may be a terminal device or a component that can be disposed in the terminal device. The processing module 1901 is configured to perform a processing-related operation on a terminal device side in the foregoing method embodiments. Optionally, the transceiver module 1902 is configured to perform a receiving-related operation on the terminal device side in the foregoing method embodiments.

Optionally, the transceiver module 1902 may include a sending module and a receiving module. The sending module is configured to perform the sending operations in the foregoing method embodiments. The receiving module is configured to perform the receiving operations in the foregoing method embodiments.

It should be noted that the communication apparatus 1900 may include a sending module, but does not include a receiving module. Alternatively, the communication apparatus 1900 may include a receiving module, but not include a sending module. This specifically depends on whether the foregoing solution performed by the communication apparatus 1900 includes a sending action and a receiving action.

In an example, the communication apparatus 1900 is configured to perform an action performed by the terminal device in the embodiment shown in FIG. 10A.

Specifically, the processing module 1901 is configured to perform step 1001 and step 1002 in the embodiment shown in FIG. 10A. Optionally, the processing module 1901 is further configured to perform step 1003 in the embodiment shown in FIG. 10A.

In an example, the communication apparatus 1900 is configured to perform an action performed by the terminal device in the embodiment shown in FIG. 14.

Specifically, the processing module 1901 is configured to perform step 1401 to step 1403 in the embodiment shown in FIG. 14. Optionally, the transceiver module 1902 is configured to perform step 1401b in the embodiment shown in FIG. 14.

In an example, the communication apparatus 1900 is configured to perform an action performed by the terminal device in the embodiment shown in FIG. 17.

Specifically, the processing module 1901 is configured to perform step 1701 and step 1702 in the embodiment shown in FIG. 17. Optionally, the transceiver module 1902 is configured to perform step 1701a in the embodiment shown in FIG. 17.

It should be understood that a specific process in which the modules perform the foregoing corresponding processes is described in detail in the foregoing method embodiments. For brevity, details are not described herein again.

In the foregoing embodiment, the processing module 1901 may be implemented by at least one processor or processor-related circuit, and the transceiver module 1902 may be implemented by a transceiver or transceiver-related circuit. The transceiver module 1902 may also be referred to as a communication module or a communication interface. The storage module may be implemented by using at least one memory.

A communication apparatus provided in embodiments of this application is described below.

FIG. 20 is a diagram of a structure of a communication apparatus according to an embodiment of this application. Refer to FIG. 20. The communication apparatus may be configured to perform processes performed by the network device in the embodiments shown in FIG. 7A, FIG. 8, FIG. 9, FIG. 11A, FIG. 12, FIG. 13, FIG. 14, FIG. 15A, FIG. 16, and FIG. 17. For details, refer to related descriptions in the foregoing method embodiments.

The communication apparatus 2000 includes a transceiver module 2001. Optionally, the communication apparatus 2000 further includes a processing module 2002. The transceiver module 2001 may implement a corresponding communication function, and the processing module 2002 is configured to perform data processing. The transceiver module 2001 may also be referred to as a communication interface or a communication module.

Optionally, the communication apparatus 2000 may further include a storage module. The storage module may be configured to store instructions and/or data. The processing module 2002 may read the instructions and/or the data in the storage module, so that the communication apparatus implements the foregoing method embodiments.

The communication apparatus 2000 may be configured to perform an action performed by the network device in the foregoing method embodiments. The communication apparatus 2000 may be a network device or a component that can be disposed in the network device. The processing module 2002 is configured to perform a processing-related operation on a network device side in the foregoing method embodiments. The transceiver module 2001 is configured to perform a receiving-related operation on the network device side in the foregoing method embodiments.

Optionally, the transceiver module 2001 may include a sending module and a receiving module. The sending module is configured to perform the sending operations in the foregoing method embodiments. The receiving module is configured to perform the receiving operations in the foregoing method embodiments.

It should be noted that the communication apparatus 2000 may include a sending module, but does not include a receiving module. Alternatively, the communication apparatus 2000 may include a receiving module, but not include a sending module. This specifically depends on whether the foregoing solution performed by the communication apparatus 2000 includes a sending action and a receiving action.

In an example, the communication apparatus 2000 is configured to perform an action performed by the network device in the embodiment shown in FIG. 7A.

Specifically, the transceiver module 2001 is configured to perform step 701 in the embodiment shown in FIG. 7A. Optionally, the transceiver module 2001 is further configured to perform step 703 in the embodiment shown in FIG. 7A.

In an example, the communication apparatus 2000 is configured to perform an action performed by the network device in the embodiment shown in FIG. 8.

Specifically, the transceiver module 2001 is configured to perform step 801 in the embodiment shown in FIG. 8.

In an example, the communication apparatus 2000 is configured to perform an action performed by the network device in the embodiment shown in FIG. 9.

Specifically, the transceiver module 2001 is configured to perform step 901 in the embodiment shown in FIG. 9. Optionally, the transceiver module 2001 is further configured to perform step 901a in the embodiment shown in FIG. 9.

In an example, the communication apparatus 2000 is configured to perform an action performed by the network device in the embodiment shown in FIG. 11A.

Specifically, the transceiver module 2001 is configured to perform step 1101 in the embodiment shown in FIG. 11A.

In an example, the communication apparatus 2000 is configured to perform an action performed by the network device in the embodiment shown in FIG. 12.

Specifically, the transceiver module 2001 is configured to perform step 1201 in the embodiment shown in FIG. 12.

In an example, the communication apparatus 2000 is configured to perform an action performed by the network device in the embodiment shown in FIG. 13.

Specifically, the processing module 2002 is configured to perform step 1301 in the embodiment shown in FIG. 13. The transceiver module 2001 is configured to perform step 1302 in the embodiment shown in FIG. 13. In this embodiment, the processing module 2002 is mandatory.

In an example, the communication apparatus 2000 is configured to perform an action performed by the network device in the embodiment shown in FIG. 14.

Specifically, the processing module 2002 is configured to perform step 1401a in the embodiment shown in FIG. 14. The transceiver module 2001 is configured to perform step 1401b in the embodiment shown in FIG. 14. In this embodiment, the processing module 2002 is mandatory.

In an example, the communication apparatus 2000 is configured to perform an action performed by the network device in the embodiment shown in FIG. 15A.

Specifically, the transceiver module 2001 is configured to perform step 1501 in the embodiment shown in FIG. 15A. Optionally, the transceiver module 2001 is further configured to perform step 1504 or step 1507 in the embodiment shown in FIG. 15A.

In an example, the communication apparatus 2000 is configured to perform an action performed by the network device in the embodiment shown in FIG. 16.

Specifically, the transceiver module 2001 is configured to perform step 1601 in the embodiment shown in FIG. 16.

In an example, the communication apparatus 2000 is configured to perform an action performed by the network device in the embodiment shown in FIG. 17.

Specifically, the transceiver module 2001 is configured to perform step 1701a in the embodiment shown in FIG. 17.

It should be understood that a specific process in which the modules perform the foregoing corresponding processes is described in detail in the foregoing method embodiments. For brevity, details are not described herein again.

In the foregoing embodiment, the processing module 2002 may be implemented by at least one processor or processor-related circuit, and the transceiver module 2002 may be implemented by a transceiver or transceiver-related circuit. The transceiver module 2001 may also be referred to as a communication module or a communication interface. The storage module may be implemented by using at least one memory.

An embodiment of this application further provides a communication apparatus 2100. The communication apparatus 2100 includes a processor 2110. The processor 2110 is coupled to a memory 2120. The memory 2120 is configured to store a computer program or instructions and/or data. The processor 2110 is configured to execute the computer program or the instructions and/or the data stored in the memory 2120, so that the methods in the foregoing method embodiments are performed.

Optionally, the communication apparatus 2100 includes one or more processors 2110.

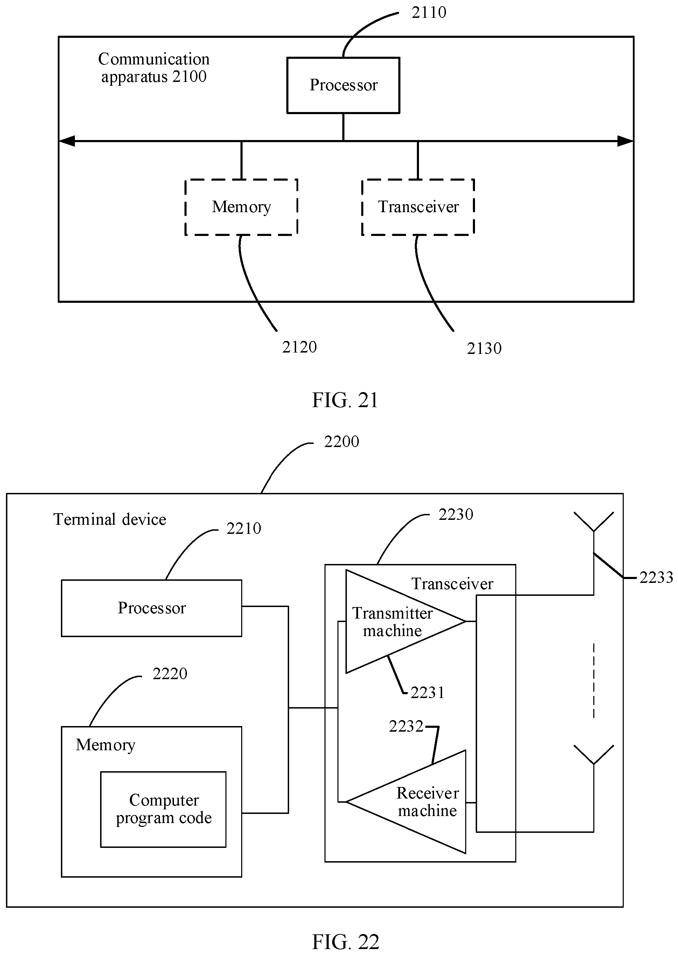

Optionally, as shown in FIG. 21, the communication apparatus 2100 may further include the memory 2120.

Optionally, the communication apparatus 2100 may include one or more memories 2120.

Optionally, the memory 2120 and the processor 2110 may be integrated together or separately disposed.

Optionally, as shown in FIG. 21, the communication apparatus 2100 may further include a transceiver 2130. The transceiver 2130 is configured to receive and/or send a signal. For example, the processor 2110 is configured to control the transceiver 2130 to receive and/or send the signal.

The communication apparatus 2100 is configured to implement an operation performed by the terminal device or the network device in the foregoing method embodiments.

For example, the processor 2110 is configured to implement a processing-related operation performed by the terminal device in the foregoing method embodiments, and the transceiver 2130 is configured to implement receiving-related and sending-related operations performed by the terminal device in the foregoing method embodiments.

For example, the processor 2110 is configured to implement a processing-related operation performed by the network device in the foregoing method embodiments, and the transceiver 2130 is configured to implement receiving-related and sending-related operations performed by the network device in the foregoing method embodiments.

This application further provides a communication apparatus 2200. The communication apparatus 2200 may be a terminal device, a processor of the terminal device, or a chip. The communication apparatus 2200 may be configured to perform an operation performed by the terminal device in the foregoing method embodiments.

When the communication apparatus 2200 is a terminal device, FIG. 22 is a simplified diagram of a structure of the terminal device. As shown in FIG. 22, the terminal device includes a processor, a memory, and a transceiver. The memory may store computer program code. The transceiver includes a transmitter machine 2231, a receiver machine 2232, a radio frequency circuit (not shown in the figure), an antenna 2233, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 22 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 22, the terminal device includes a processor 2210, a memory 2220, and a transceiver 2230. The processor 2210 may also be referred to as a processing unit, a processing board, a processing module, a processing apparatus, or the like. The transceiver 2230 may also be referred to as a transceiver unit, a transceiver machine, a transceiver apparatus, or the like.

Optionally, a component for implementing a receiving function in the transceiver 2230 may be considered as a receiving module, and a component for implementing a sending function in the transceiver 2230 may be considered as a sending module. That is, the transceiver 2230 includes the receiver and the transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

Optionally, the processor 2210 is configured to perform the processing actions on a terminal device side in the embodiments shown in FIG. 7A, FIG. 8, FIG. 9, FIG. 10A, FIG. 11A, FIG. 12 to FIG. 14, FIG. 15A, FIG. 16, and FIG. 17. The transceiver 2230 is configured to perform the receiving and sending actions on the terminal device side in FIG. 7A, FIG. 8, FIG. 9, FIG. 10A, FIG. 11A, FIG. 12 to FIG. 14, FIG. 15A, FIG. 16, and FIG. 17.

It should be understood that FIG. 22 is merely an example rather than a limitation. The terminal device including the transceiver module and the processing module may not depend on the structure shown in FIG. 21 or FIG. 22.

When the communication apparatus 2200 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a communication apparatus 2300. The communication apparatus 2300 may be a network device or a chip. The communication apparatus 2300 may be configured to perform an operation performed by the network device in the method embodiments shown in FIG. 7A, FIG. 8, FIG. 9, FIG. 11A, FIG. 12 to FIG. 14, FIG. 15A, FIG. 16, and FIG. 17.

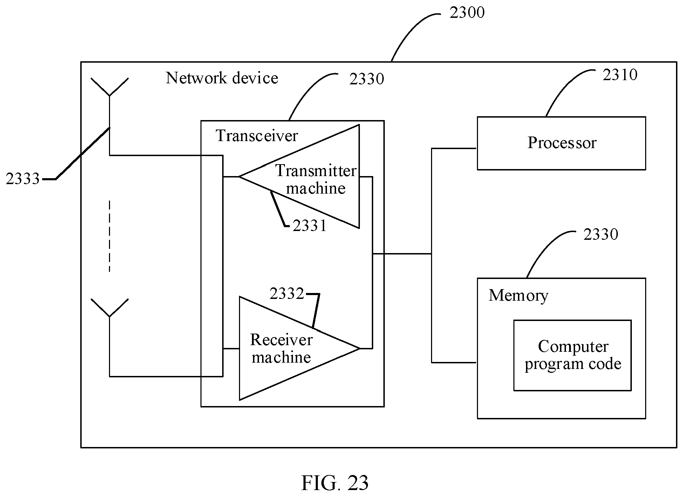

When the communication apparatus 2300 is a network device, for example, a base station, FIG. 23 is a simplified diagram of a structure of the base station. The base station includes a part 2310, a part 2320, and a part 2330. The part 2310 is mainly configured to perform baseband processing, control the base station, and the like. The part 2310 is usually a control center of the base station, may be usually referred to as a processor, and is configured to control the base station to perform a processing operation on a network device side in the foregoing method embodiments. The part 2320 is mainly configured to store computer program code and data. The part 2330 is mainly configured to receive and send a radio frequency signal, and perform conversion between the radio frequency signal and a baseband signal. The part 2330 may be usually referred to as a transceiver module, a transceiver machine, a transceiver circuit, a transceiver, or the like. The transceiver module in the part 2330 may also be referred to as a transceiver machine, a transceiver, or the like, and includes an antenna 2333 and a radio frequency circuit (not shown). The radio frequency circuit is mainly configured to perform radio frequency processing. Optionally, in the part 2330, a component configured to implement a receiving function may be considered as a receiver machine, and a component configured to implement a sending function may be considered as a transmitter machine. In other words, the part 2330 includes a receiver machine 2332 and a transmitter machine 2331. The receiver machine may also be referred to as a receiving module, a receiver, a receiver circuit, or the like, and the transmitter machine may be referred to as a transmitting module, a transmitter, a transmitter circuit, or the like.

The part 2310 and the part 2320 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 2330 is configured to perform receiving-related and sending-related processes performed by the network device in the embodiments shown in FIG. 7A, FIG. 8, FIG. 9, FIG. 11A, FIG. 12 to FIG. 14, FIG. 15A, FIG. 16, and FIG. 17. The processor in the part 2310 is configured to perform a processing-related process performed by the network device in the embodiments shown in FIG. 7A, FIG. 8, FIG. 9, FIG. 11A, FIG. 12 to FIG. 14, FIG. 15A, FIG. 16, and FIG. 17.

In another implementation, the transceiver module in the part 2330 is configured to perform receiving-related and sending-related processes performed by the network device in the embodiments shown in FIG. 7A, FIG. 8, FIG. 9, FIG. 11A, FIG. 12 to FIG. 14, FIG. 15A, FIG. 16, and FIG. 17.

It should be understood that FIG. 23 is merely an example rather than a limitation, and the network device including the processor, the memory, and the transceiver may not depend on the structure shown in FIG. 21 or FIG. 23.

When the communication apparatus 2300 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

An embodiment of this application further provides a computer-readable storage medium. The computer-readable storage medium stores computer instructions used to implement the method performed by the terminal device or the network device in the foregoing method embodiments.

For example, when a computer program is executed by a computer, the computer is enabled to implement the method performed by the terminal device or the network device in the foregoing method embodiments.

An embodiment of this application further provides a computer program product including instructions. When the instructions are executed by a computer, the computer is enabled to implement the method performed by the terminal device or the network device in the foregoing method embodiments.

An embodiment of this application further provides a communication system. The communication system includes the terminal device and the network device in the foregoing embodiments.

An embodiment of this application further provides a chip apparatus, including a processor, configured to invoke a computer degree or computer instructions stored in a memory, so that the processor performs the methods in the embodiments shown in FIG. 7A, FIG. 8, FIG. 9, FIG. 10A, FIG. 11A, FIG. 12 to FIG. 14, FIG. 15A, FIG. 16, and FIG. 17.

In a possible implementation, an input of the chip apparatus corresponds to the receiving operation in the embodiments shown in FIG. 7A, FIG. 8, FIG. 9, FIG. 10A, FIG. 11A, FIG. 12 to FIG. 14, FIG. 15A, FIG. 16, and FIG. 17, and an output of the chip apparatus corresponds to the sending operation in the embodiments shown in FIG. 7A, FIG. 8, FIG. 9, FIG. 10A, FIG. 11A, FIG. 12 to FIG. 14, FIG. 15A, FIG. 16, and FIG. 17.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the methods in the embodiments shown in FIG. 7A, FIG. 8, FIG. 9, FIG. 10A, FIG. 11A, FIG. 12 to FIG. 14, FIG. 15A, FIG. 16, and FIG. 17. Any memory mentioned above may be a read-only memory (read-only memory, ROM), another type of static storage device that can store static information and instructions, a random access memory (random access memory, RAM), or the like.

It may be clearly understood by persons skilled in the art that, for convenient and brief description, for explanations and beneficial effects of related content in any one of the communication apparatuses provided above, refer to the corresponding method embodiments provided above. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or some of the technical solutions may be implemented in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An uplink transmission method, wherein the method comprises:
receiving, by a terminal device, first information from a network device, wherein the first information indicates one or more transmission parameters of a first resource; and
performing, by the terminal device based on the first information, uplink transmission on the first resource by using a corresponding transmission configuration indicator TCI state.

2. The method according to claim 1, wherein the first information indicates two transmission parameters; and
the performing, by the terminal device based on the first information, uplink transmission on the first resource by using a corresponding TCI state comprises:
performing, by the terminal device, uplink transmission in a first transmission cycle of the first resource by using a first TCI state, and performing uplink transmission in a second transmission cycle of the first resource by using a second TCI state, wherein the first transmission cycle is a transmission cycle corresponding to a first transmission parameter in the two transmission parameters on the first resource, and the second transmission cycle is a transmission cycle corresponding to a second transmission parameter in the two transmission parameters on the first resource.

3. The method according to claim 2, wherein the method further comprises:
receiving, by the terminal device, second information from the network device, wherein the second information indicates one TCI state; and
performing, by the terminal device, uplink transmission at the start of a next transmission cycle of a current transmission cycle of the first resource by using the TCI state indicated by the second information.

4. The method according to claim 1, wherein the performing, by the terminal device based on the first information, uplink transmission on the first resource by using a corresponding TCI state comprises:
if the first information indicates one transmission parameter, and the first information does not comprise first identification information, performing, by the terminal device, uplink transmission on the first resource by using a first TCI state; or
if the first information indicates one transmission parameter, and the first information comprises first identification information, performing, by the terminal device, uplink transmission on the first resource by using a second TCI state.

5. The method according to claim 1, wherein the performing, by the terminal device based on the first information, uplink transmission on the first resource by using a corresponding TCI state comprises:
if the first information indicates one transmission parameter, performing, by the terminal device, uplink transmission by using a transmission configuration indicator TCI state that corresponds to a sounding reference signal resource set SRS resource set associated with the transmission parameter and that is in at least one TCI state indicated by the network device to the terminal device.

6. The method according to claim 1, wherein the first information indicates one transmission parameter, and the performing, by the terminal device based on the first information, uplink transmission on the first resource by using a corresponding TCI state comprises:
if the transmission parameter comprises a control resource set pool index, performing, by the terminal device, uplink transmission by using a TCI state corresponding to the control resource set pool index; or
if the transmission parameter does not comprise a control resource set pool index, performing, by the terminal device, uplink transmission on the first resource by using the 1^{st} TCI state indicated by the network device to the terminal device.

7. An uplink transmission method, wherein the method comprises:
receiving, by a terminal device, downlink control information DCI from a network device, wherein the DCI is for activating a first resource of the terminal device; and
if the network device indicates two transmission configuration indicator TCI states to the terminal device, and the DCI is DCI in a first format, performing, by the terminal device on the first resource, uplink transmission by using a TCI state indicated by a sounding reference signal resource indicator SRI field in the DCI, wherein the TCI state indicated by the SRI field belongs to the two TCI states.

8. The method according to claim 7, wherein the performing, by the terminal device on the first resource, uplink transmission by using a beam corresponding to a TCI state indicated by a sounding reference signal resource indicator SRI field in the DCI comprises:
if a value of the SRI field is 00, performing, by the terminal device, uplink transmission on the first resource by using the 1^{st} TCI state indicated by the network device to the terminal device;
if a value of the SRI field is 01, performing, by the terminal device, uplink transmission on the first resource by using the 2^{nd} TCI state indicated by the network device to the terminal device; or
if a value of the SRI field is 10 or 11, performing, by the terminal device, uplink transmission on the first resource by using beams separately corresponding to the two TCI states.

9. The method according to claim 7, wherein the method further comprises:
if the network device indicates two TCI states to the terminal device, and the DCI is DCI in a second format, performing, by the terminal device, uplink transmission on the first resource by using the 1^{st} TCI state indicated by the network device to the terminal device, or performing, by the terminal device, uplink transmission on the first resource by using the two TCI states.

10. The method according to claim 7, wherein the method further comprises:
if the network device indicates one TCI state to the terminal device, and the DCI is DCI in a first format, ignoring, by the terminal device, an SRI field in the DCI, and performing, by the terminal device, uplink transmission on the first resource by using the TCI state.

11. An uplink transmission method, wherein the method comprises:
receiving, by a terminal device, first indication information from a network device, wherein the first indication information indicates whether the terminal device performs uplink transmission on a first resource by using a common beam indicated by the network device to the terminal device; and
performing, by the terminal device based on the first indication information, uplink transmission on the first resource by using a corresponding beam.

12. The method according to claim 11, wherein the performing, by the terminal device based on the first indication information, uplink transmission on the first resource by using a corresponding beam comprises:
if the first indication information indicates the terminal device to perform uplink transmission on the first resource by using the common beam, performing, by the terminal device, uplink transmission on the first resource by using the common beam; or
if the first indication information indicates the terminal device not to perform uplink transmission on the first resource by using the common beam, performing, by the terminal device, uplink transmission on the first resource by using at least one beam indicated by a sounding reference signal resource indicator SRI field in DCI sent by the network device to the terminal device, wherein the at least one beam belongs to the common beam indicated by the network device to the terminal device, or the at least one beam and the common beam are different beams.

13. The method according to any one of claims 1 to 12, wherein any one of the following power control parameters is used when the terminal device performs uplink transmission on the first resource:
a power control parameter associated with a beam used when the terminal device performs uplink transmission on the first resource, a power control parameter associated with the first resource, or a preconfigured power control parameter.

14. The method according to any one of claims 1 to 12, wherein if the terminal device determines to use two beams to perform uplink transmission on the first resource, the terminal device performs uplink transmission on the first resource by using preconfigured power control parameters separately associated with the two beams.

15. An uplink transmission method, wherein the method comprises:
determining, by a terminal device, a first beam and a second beam, wherein the first beam is a beam associated with a first resource, the second beam is a beam associated with a second resource, and the first resource and the second resource overlap in time domain; and
if a first condition is met, performing, by the terminal device, uplink transmission on the first resource by using the first beam, and performing uplink transmission on the second resource by using the second beam.

16. The method according to claim 15, wherein the method further comprises:
if the first condition is not met, performing, by the terminal device, any one of the following:
discarding the second resource, and performing uplink transmission on the first resource by using the first beam; and
discarding an overlapping resource of the first resource and the second resource in time domain, performing uplink transmission on a resource other than the overlapping resource on the first resource by using the first beam, and performing uplink transmission on a resource other than the overlapping resource on the second resource by using the second beam.

17. The method according to claim 15 or 16, wherein the first beam and the second beam are used for simultaneous transmission.

18. The method according to any one of claims 15 to 17, wherein the first condition further comprises at least one of the following:
a transmit power used by the terminal device to perform uplink transmission on the first resource by using the first beam is greater than a first threshold;
a transmit power used by the terminal device to perform uplink transmission on the second resource by using the second beam is greater than a second threshold;
a sum of a transmit power used by the terminal device to perform uplink transmission on the first resource by using the first beam and a transmit power used by the terminal device to perform uplink transmission on the second resource by using the second beam does not exceed a third threshold; or
the first beam corresponds to a first panel of the terminal device, the second beam corresponds to a second panel of the terminal device, and the first panel and the second panel are two different panels.

19. An uplink transmission method, wherein the method comprises:
receiving, by a terminal device, first information from a network device, wherein the first information is for configuring or indicates a first beam and a second beam, and the first beam and the second beam are beams associated with a first resource; and
performing, by the terminal device, uplink transmission on the first resource by using the first beam, and performing uplink transmission on the first resource by using the second beam.

20. The method according to claim 19, wherein the first beam and the second beam are used for simultaneous transmission.

21. The method according to claim 19 or 20, wherein the first information comprises an index of the first beam and an index of the second beam;
the first information comprises an identifier of a transmission configuration indicator TCI state corresponding to the first beam and an identifier of a TCI state corresponding to the second beam; or
the first beam and the second beam form a simultaneous transmission beam pair, and the first information comprises an index of the simultaneous transmission beam pair.

22. An uplink transmission method, wherein the method comprises:
determining, by a terminal device, a first beam and a second beam that are associated with a first resource; and
if a first condition is met, performing, by the terminal device, uplink transmission on the first resource by using the first beam, and performing uplink transmission on the first resource by using the second beam.

23. The method according to claim 22, wherein the method further comprises:
if the first condition is not met, performing, by the terminal device, uplink transmission on the first resource by using only the first beam, or performing, by the terminal device, no uplink transmission on the first resource.

24. The method according to claim 22 or 23, wherein before the determining, by a terminal device, a first beam and a second beam that are associated with a first resource, the method further comprises:
receiving, by the terminal device, configuration information from a network device, wherein the configuration information is for configuring the first resource to be associated with the first beam and the second beam.

25. The method according to claim 24, wherein the configuration information comprises information about a first control resource set and a second control resource set that are associated with the first resource, the first control resource set corresponds to the first beam, and the second control resource set corresponds to the second beam.

26. The method according to any one of claims 22 to 25, wherein the first condition further comprises at least one of the following:
a transmit power used by the terminal device to perform uplink transmission on the first resource by using the first beam is greater than a first threshold;
a transmit power used by the terminal device to perform uplink transmission on the first resource by using the second beam is greater than a second threshold;
a sum of a transmit power used by the terminal device to perform uplink transmission on the first resource by using the first beam and a transmit power used by the terminal device to perform uplink transmission on the first resource by using the second beam does not exceed a third threshold; or
the first beam corresponds to a first panel of the terminal device, the second beam corresponds to a second panel of the terminal device, and the first panel and the second panel are two different panels.

27. A communication apparatus, wherein the communication apparatus comprises a transceiver module, wherein
the transceiver module is configured to perform the method according to any one of claims 1 to 6, 13, and 14; the transceiver module is configured to perform the method according to any one of claims 7 to 10, 13, and 14; the transceiver module is configured to perform the method according to any one of claims 11 to 14; or the transceiver module is configured to perform the method according to any one of claims 19 to 21.

28. A communication apparatus, wherein the communication apparatus comprises a transceiver module and a processing module, wherein
the transceiver module is configured to perform the method according to any one of claims 15 to 18, and the processing module is configured to perform the method according to any one of claims 15 to 18; or
the transceiver module is configured to perform the method according to any one of claims 22 to 26, and the processing module is configured to perform the method according to any one of claims 22 to 26.

29. A communication apparatus, wherein the communication apparatus comprises a processor, and the processor is configured to execute a computer program or computer instructions in a memory, to perform the method according to any one of claims 1 to 6, 13, and 14; perform the method according to any one of claims 7 to 10, 13, and 14; perform the method according to any one of claims 11 to 14; perform the method according to any one of claims 15 to 18; perform the method according to any one of claims 19 to 21; or perform the method according to any one of claims 22 to 26.

30. A computer-readable storage medium, wherein the computer-readable storage medium stores a computer program; and when the computer program is executed by a communication apparatus, the communication apparatus performs the method according to any one of claims 1 to 6, 13, and 14, the communication apparatus performs the method according to any one of claims 7 to 10, 13, and 14, the communication apparatus performs the method according to any one of claims 11 to 14, the communication apparatus performs the method according to any one of claims 15 to 18, the communication apparatus performs the method according to any one of claims 19 to 21; or the communication apparatus performs the method according to any one of claims 22 to 26.
